# EUROPÄISCHE PATENTSCHRIFT

(11) **EP 4 526 989 B1**
(45) Veröffentlichungstag und Bekanntmachung des Hinweises auf die Patenterteilung: **26.08.2026**
(21) Anmeldenummer: 23728709.9
(22) Anmeldetag: 22.05.2023
(51) Int. Cl.: H02N 2/00, H02N 2/02, H02N 2/10, H02N 2/12

(54) **ANTRIEBSVORRICHTUNG, ANTRIEBSSYSTEM, STELLSYSTEM UND ANTRIEBSMOTOR**
DRIVE DEVICE, DRIVE SYSTEM, ACTUATOR SYSTEM AND DRIVE MOTOR
DISPOSITIF D'ENTRAÎNEMENT, SYSTÈME D'ENTRAÎNEMENT, SYSTÈME DE RÉGLAGE ET MOTEUR D'ENTRAÎNEMENT

(30) Priorität: 20.05.2022 DE 102022112809
(43) Veröffentlichungstag der Anmeldung: 26.03.2025
(73) Patentinhaber: Physik Instrumente (PI) SE & Co. KG, 76228 Karlsruhe (DE)
(72) Erfinder: KOC, Burhanettin, 76275 Ettlingen (DE); HÜBNER, Reinhard, 76337 Waldbronn (DE); KAPELKE, Simon, 76229 Karlsruhe (DE); LUCKERT-MCBEATH, Hansjörg, 76228 Karlsruhe (DE)
(74) Vertreter: Keller Schneider Patentanwaltsgesellschaft mbH
(86) Internationale Anmeldenummer: PCT/EP2023/063679
(87) Internationale Veröffentlichungsnummer: WO 2023/222925

(56) Entgegenhaltungen:
- WO-A1-2006/000118
- WO-A1-2022/248711
- DE-A1- 10 127 444
- US-A1- 2008 231 970

## Beschreibung

Die Erfindung betrifft eine Antriebsvorrichtung, ein Antriebssystem zum Antreiben einer Spindel, ein Stellsystem und einen Antriebsmotor.

Die DE10127444A1 beschreibt einen piezoelektrischen Stellantrieb mit einer Gewindespindel, mit einer ersten Reihe von Klemmpiezoelemente-Stapel und einer zweiten Reihe von Klemmpiezoelemente-Stapel. Die erste Reihe von Klemmpiezoelemente-Stapel sind in einem Vorspannkäfig gelegen und drücken die Gewindespindel gegen Gegendruckrollen. Die zweite Reihe von Klemmpiezoelemente-Stapel sind an einen Abschnitt des Vorspannkäfig gekoppelt, der an der Gewindespindel anliegt, um durch eine oszillierende Bewegung die Gewindespindel in eine uni-direktionale rotatorische Bewegung zu versetzen. Die erste Reihe von Klemmpiezoelemente-Stapel sind im Vorspannkäfig starr gelagert.

Die US2008/0231970A1 beschreibt ein Antriebssystem zum Bewegen einer Linse, das eine Antriebseinheit zum Verstellen der Linse in einer optischen Achse aufweist. Die Antriebseinheit weist zwei Schienen auf, die mittels zwei Federvorrichtungen miteinander gekoppelt sind. Die Federvorrichtungen verbinden zwei Schienen und drücken diese senkrecht zur optischen Achse an die Linse an. Auf zwei Oberflächen der Schienen, die jeweils entgegen gesetzt zueinander orientiert und in der optischen Achse voneinander beabstandet sind, ist jeweils eine piezoelektrische Platte gelegen. Bei Betätigung der Antriebseinheit werden die piezoelektrischen Platten derart verformt, dass sich die Platten um eine Krümmungsachse biegen, die senkrecht zur optischen Achse verläuft und dadurch ein Führungselement jeweils einer Schiene entlang der optischen Achse bewegt. Da die Führungselemente durch die Federvorrichtung an die Linse angedrückt werden, wird eine lineare Bewegung der Linse in der optischen Achse bewerkstelligt. Die zwei Federvorrichtungen drücken deshalb die Schienen mit ihren Führungselement an die Linse an.

Die WO2006/000118A1 zeigt ein Antriebssystem mit einer Antriebseinheit, das ein Betätigungsteil und piezoelektrische Elemente aufweist, um ein passiven Element in der Bewegungsrichtung zu bewegen. Das Betätigungsteil oder aktive Element weist einen Verbindungsbereich und zumindest zwei jeweils daran anschließende Arme, die sich in der Bewegungssachse erstrecken, auf. Jeder Arm weist einen Federbereich, der jeden Arm an dem Verbindungsbereich anschließt, einen wiederum jeweils an dem Federbereich anschließenden und sich entlang der Bewegungssachse erstreckenden flachen Armabschnitt und einen Kontaktbereich auf, wobei der Federbereich und der Kontaktbereich jeweils an zueinander entgegen gesetzten Enden des flachen Armabschnitts gelegen sind. An jedem flachen Armabschnitt ist jeweils zumindest ein piezoelektrisches Element angebracht, um den flachen Armabschnitt zu verformen und eine Relativbewegung zwischen dem Verbindungsbereich und dem Kontaktbereich, die an dem passiven Element anliegen, zu bewirken.Die DE 199 09 913 A1 beschreibt ein Antriebssystem, das zwei Lagerelemente jeweils mit einem Piezoelement aufweist. Die beiden Lagerringe bilden zwei Gleitlager, die an den Rotor angedrückt werden, wodurch eine spielfreie Drehung des Rotors möglich wird. Die Piezoelemente können den Lagerring in Rotation versetzen, um die Spindel anzutreiben. Die Lagerelemente werden federnd an den Rotor angedrückt. Der jeweilige Lagerring ist über mehrere Stege an dem Lagerblock gelagert, wobei die Stege dabei Biegegelenke bilden.

Die EP1396012B2 beschreibt einen piezoelektrischen Antrieb mit zwei Piezoelementen, die in der axialen Richtung voneinander beabstandet sind.

Antriebsvorrichtungen mit einem piezoelektrischen Aktor sind aus der am 01.12.2022 veröffentlichten WO29022/248711, JPH08-251950A, der DE10260363A1, der EP3691110A1, der CN106208806A, der EP2676361B1 und der US10161560B2 bekannt.

Aus der CN 106208806A, der DE60110107T2 und der US2011/0109197A1 ist jeweils ein Antriebssystem mit zwei Aktoren bekannt.

Die US10161560B2 beschreibt einen Linearmotor mit einem Piezoantrieb. Die US8059346B2 beschreibt ein Linearantriebssystem.

Eine Aufgabe der Erfindung ist, eine Alternative zu bekannten Lösungen ein Antriebssystem sowie einen Motor mit einem solchen Antriebssystem bereitzustellen.

Eine weiterführende Aufgabe der Erfindung ist, ein Antriebssystem sowie einen Motor mit einem solchen Antriebssystem bereitzustellen, das oder der hinsichtlich Genauigkeit sowie auch hinsichtlich Fertigung und Montage vorteilhaft ist.

Diese Aufgabe wird mit den Merkmalen der unabhängigen Ansprüche gelöst. Weitere Ausführungsformen sind in den jeweils auf diese rückbezogenen Unteransprüche angegeben.

Nach der Erfindung ist ein Antriebssystem vorgesehen, das aufweist:
zumindest zwei Antriebseinheiten jeweils zur Aufnahme und zum Antreiben einer Spindel mit einer Spindelachse, wobei jede der Antriebseinheiten zur Aufnahme jeweils eines Abschnitts der Spindel jeweils einen Spindelraum aufweist, der sich jeweils in einer Spindelaufnahmeachse (AA) durch jede der Antriebseinheiten erstreckt, die in Richtung der Spindelachse verläuft, wobei die zumindest zwei Antriebseinheiten die Spindel stabil lagern,
eine Kopplungsvorrichtung, welche die zumindest zwei Antriebseinheiten in Richtung der Spindelaufnahmeachse aneinander elastisch koppelt, wobei die Kopplungsvorrichtung zumindest eine Federvorrichtung aufweist, die sich entlang der Spindelaufnahmeachse erstreckt.

Nach der Erfindung ist die zumindest eine Federvorrichtung derart realisiert, dass diese jeweils in einem unbelasteten Neutralzustand, in dem keine Spindel in dem Antriebssystem aufgenommen ist, die jeweils zwei Antriebseinheiten stabil in einem vorbestimmten Abstand hält und von dem Neutralzustand in zueinander entgegen gesetzten Richtungen entlang der Spindelaufnahmeachse jeweils einen Federweg bereitstellt

Die Antriebseinheiten des Antriebssystems haben die Funktion eines Stators. Die Verwendung von zumindest zwei Antriebseinheiten oder Statoren bei den Ausführungsformen des erfindungsgemäßen Antriebssystems haben den Vorteil, dass die Antriebseinheiten sowohl die Funktion einer Betätigung der Spindel als auch die Funktion der Lagerung der Spindel wahrnehmen können. Dabei führt jedes Antriebssystems insbesondere miteinander koordinierte Betätigungsbewegungen insbesondere einer Betätigungs-Bauteilstruktur zum Antrieb der Spindel aus. Eine separate Spindel-Lagerungsvorrichtung würde auch an der Spindel anliegen, so dass deren Verwendung den Nachteil von Reibungsverlusten hätte.

Die erfindungsgemäßen Ausführungsformen des Antriebssystems weisen vorzugsweise kein gesondertes Bauteil auf, das eine Lagerungsfunktion der Spindel und keine Antriebsfunktion hat.

Bei jeder Ausführungsform des erfindungsgemäßen Antriebssystems mit einzelnen oder mehreren der anderen ansonsten hierin beschriebenen Merkmale kann vorgesehen sein, dass die zumindest eine Federvorrichtung jeweils in einem unbelasteten Neutralzustand, in dem keine Spindel in dem Antriebssystem aufgenommen ist, die jeweils zwei Antriebseinheiten stabil in einem vorbestimmten Abstand hält und von dem Neutralzustand in zueinander entgegen gesetzten Richtungen entlang der Spindelaufnahmeachse jeweils einen Federweg bereitstellt.

Jede Ausführungsform der erfindungsgemäßen Antriebsvorrichtung mit einer hierin beschriebenen Merkmalskombination kann das Merkmal aufweisen, dass die Federvorrichtung zumindest einen Mäanderabschnitt aufweist, der quer zur Spindelaufnahmeachse ausgeformt ist.

Jede Ausführungsform des erfindungsgemäßen Antriebssystems mit einer hierin beschriebenen Merkmalskombination kann das Merkmal aufweisen, dass die Kopplungsvorrichtung zwei Kopplungseinheit-Verbindungsstücke mit jeweils zumindest einem Federabschnitt aufweist, wobei die Kopplungseinheit-Verbindungsstücke in einer quer zu der Spindelaufnahmeachse verlaufenen Blickrichtung gesehen auf zueinander entgegen gesetzt gelegenen Seiten der Spindelaufnahmeachse jeweils mit den zumindest zwei Antriebseinheiten verbunden sind.

Die Ausführungsformen des erfindungsgemäßen Antriebssystems mit den Federabschnitte der Kopplungseinheit-Verbindungsstücke können derart realisiert sein, dass die Federabschnitte jeweils einen Mäanderabschnitt zur Bereitstellung jeweils eines Federwegs in zueinander entgegen gesetzten Richtungen entlang der Spindelaufnahmeachse aufweisen.

Die erfindungsgemäßen Ausführungsformen des erfindungsgemäßen Antriebssystems mit einer Kopplungsvorrichtung mit zwei Kopplungseinheit-Verbindungsstücken und einzelnen oder mehreren der anderen ansonsten hierin beschriebenen Merkmale des Antriebssystems können zumindest eine Kopplungsvorrichtung mit zwei Kopplungseinheiten aufweisen, die jeweils in einer quer zur Spindelaufnahmeachse verlaufenen Blickrichtung gesehen auf zueinander entgegen gesetzt gelegenen Seiten der Spindelaufnahmeachse gelegen sind und sich zueinander entlang erstrecken,
wobei jedes der Kopplungseinheiten jeweils zwei Kopplungseinheit-Verbindungsstücke aufweist, die mit beiden Antriebseinheiten verbunden sind und die einen Federabschnitt jeweils zur Bereitstellung jeweils eines Federwegs in zueinander entgegen gesetzten Richtungen aufweisen,
wobei sich die zwei Kopplungseinheiten jeweils quer zur Spindelaufnahmeachse und zueinander entlang erstrecken.

Die erfindungsgemäßen Ausführungsformen des erfindungsgemäßen Antriebssystems mit einzelnen oder mehreren der anderen ansonsten hierin beschriebenen Merkmale des Antriebssystems können derart realisiert sein,
dass jede Antriebseinheit eine Antriebsvorrichtung mit einem Spindelraum aufweist,
dass jede Antriebseinheit eine Rahmenvorrichtung aufweist, wobei die jeweiligen Rahmenvorrichtungen mittels der Kopplungsvorrichtung miteinander gekoppelt sind,
dass zumindest eine Antriebsvorrichtung eine Betätigungs-Bauteilstruktur zum Aufnehmen und insbesondere Kontaktieren und Antreiben einer Spindel aufweist, die den Spindelraum teilweise begrenzt,
dass die zumindest eine Antriebsvorrichtung zumindest eine Aktorvorrichtung aufweist, die bei entsprechender Ansteuerung die Betätigungs-Bauteilstruktur derart bewegt, dass eine durch die Betätigungs-Bauteilstruktur aufgenommene Spindel antreibbar ist.

Die Ausführungsformen des erfindungsgemäßen Antriebssystems mit einer Betätigungs-Bauteilstruktur und mit einzelnen oder mehreren der anderen ansonsten hierin beschriebenen Merkmale des Antriebssystems können derart realisiert sein, dass zumindest eine Antriebsvorrichtung eine Aktorvorrichtung, die als Elektromotor realisiert ist, und die Betätigungs-Bauteilstruktur eine Antriebs-Spindelmutter aufweist, die drehbar in der Antriebsvorrichtung gelagert und dabei in Richtung der Spindelaufnahmeachse fixiert ist, wobei die Antriebs-Spindelmutter auf die Spindel aufschraubbar ist, dass bei einer entsprechenden Ansteuerung der Aktorvorrichtung die Antriebs-Spindelmutter und dadurch aufgrund eines Friktionskontakts mit der Spindel diesselbe in Drehung versetzt wird.

Alternativ dazu können die Ausführungsformen des erfindungsgemäßen Antriebssystems mit einer Betätigungs-Bauteilstruktur und mit einzelnen oder mehreren der anderen ansonsten hierin beschriebenen Merkmale des Antriebssystems derart realisiert sein, dass zumindest eine Antriebsvorrichtung zumindest eine Aktorvorrichtung mit zumindest einem Aktor aufweist, der als Piezoaktor realisiert ist.

Bei jeder Ausführungsform des erfindungsgemäßen Antriebssystems kann zumindest eine und insbesondere jede Antriebseinheit desselben eine Antriebsvorrichtung mit einem Aktor aufweisen, der ein Multilayer-Aktor ist. Bei der Verwendung eines Multilayer-Aktors kann vorgesehen sein, dass der jeweilige Multilayer-Aktor derart angesteuert wird, dass der jeweilige Multilayer-Aktor eine Vielzahl von zueinander gegensätzlichen Verformungen, z.B. einer mehrfachen oder vielfachen Abfolge einer Längenzunehme und einer Längenabnahme, ausführt, um dadurch die Betätigungs-Bauteilstruktur entsprechend zu bewegen und die Spindel, an der die Betätigungs-Bauteilstruktur anliegt, in Drehung zu versetzen und anzutreiben.

Würde ein erfindungsgemäßes Antriebssystem mit zumindest einem Multilayer-Aktor realisiert sein und würde ein solches Antriebssystem eine gesonderte Lagerungsvorrichtung oder Antriebsfunktion mit Betätigungsbewegungen aufweisen, die die Spindel lagert, wodurch der jeweilige Multilayer-Aktor bei größerer Spannung betrieben werden müsste. Bei einer Ansteuerung eines Multilayer-Aktors mit größeren Spannungen kann sich die Temperatur der Multilayer-Aktoren erhöhen, was insgesamt eine Effizienz Abnahme des jeweiligen Multilayer-Aktors bewirkt.

Bei jeder Ausführungsform des erfindungsgemäßen Antriebssystems kann zumindest eine Antriebseinheit und insbesondere jede Antriebseinheit desselben eine Antriebsvorrichtung mit einem Aktor aufweisen, der in einer Bulk-Bauweise realisiert ist.

Die Ausführungsformen des erfindungsgemäßen Antriebssystems mit einer Betätigungs-Bauteilstruktur und mit einzelnen oder mehreren der anderen ansonsten hierin beschriebenen Merkmale des Antriebssystems können derart realisiert sein, dass das Antriebssystem eine Ansteuerungsvorrichtung aufweist, die elektrisch mit jeder der zumindest einen Antriebsvorrichtung verbunden ist und die in einem aktivierten Zustand an die jeweilige Antriebsvorrichtung ein periodisches Antriebssignal sendet, das zumindest eine Halbperiode aufeinanderfolgende Flankenabschnitte unterschiedlichen Vorzeichens aufweist, deren maximale Steigungen dem Betrag nach eine minimale Differenz zueinander haben, die Bewegungen der Betätigungs-Bauteilstruktur und durch diese abwechselnd einen Schlupf-Zustand und einen Friktions-Zustand zwischen einem Betätigungs-Oberflächenabschnitt der Betätigungs-Bauteilstruktur, die an der Spindel anliegt, und der Spindel bewirken.

Die Ausführungsformen des erfindungsgemäßen Antriebssystems mit einer Betätigungs-Bauteilstruktur und mit einzelnen oder mehreren der anderen ansonsten hierin beschriebenen Merkmale des Antriebssystems können derart realisiert sein, dass zumindest eine Antriebsvorrichtung zumindest ein Paar von Aktorvorrichtungen aufweist, die jeweils einen Aktor aufweisen, der als Piezoaktor mit einer Aktorachse realisiert ist,
wobei zumindest eine Antriebsvorrichtung eine Betätigungs-Bauteilstruktur aufweist, die mit der Oberfläche einer Spindel in Kontakt bringbar ist,
wobei die Aktorachsen entlang zueinander verlaufen und die Ausdehnung jedes Aktors bei entsprechender elektrischer Ansteuerung entlang seiner Aktorachse reversibel veränderbar ist und die Ausdehnungsänderung der Aktoren die Betätigungs-Bauteilstruktur in Bewegung versetzt und eine von der Betätigungs-Bauteilstruktur aufgenommene Spindel in Drehung versetzbar ist.

Die erfindungsgemäßen Ausführungsformen des erfindungsgemäßen Antriebssystems mit zumindest einem Paar von Aktorvorrichtungen und mit einzelnen oder mehreren der anderen ansonsten hierin beschriebenen Merkmale des Antriebssystems können derart realisiert sein,
dass das Antriebssystem eine Ansteuerungsvorrichtung aufweist, die elektrisch mit jedem Paar von Aktorvorrichtungen der zumindest einen Antriebsvorrichtung verbunden ist und die in einem aktivierten Zustand an eine erste Aktorvorrichtung und eine zweite Aktorvorrichtung des Paars von Aktorvorrichtungen jeweils ein periodisches Antriebssignal sendet, das zumindest eine Halbperiode aufeinanderfolgende Flankenabschnitte unterschiedlichen Vorzeichens aufweist, deren maximale Steigungen dem Betrag nach eine minimale Differenz zueinander haben,
dass die Betätigungs-Bauteilstruktur zumindest einen Betätigungs-Oberflächenabschnitt aufweist, der mit der Spindel in Kontakt ist und bei Ansteuerung der jeweiligen Aktorvorrichtungen des Paars von Aktorvorrichtungen jeweils mit dem periodischen Antriebssignal die Spindel in Umfangsrichtung in Bewegung setzen kann,
dass die periodischen Antriebssignale an die erste Aktorvorrichtung und die zweite Aktorvorrichtung des jeweiligen Paars von Aktorvorrichtungen gegenphasig verlaufen und gegenphasig zwischen einem jeweils zeitweisen Schlupf-Zustand und einem Friktions-Zustand alterieren, wobei die aufeinanderfolgenden Flankenabschnitte unterschiedlichen Vorzeichens derselben Halbperiode der beiden periodischen Antriebssignale Bewegungen des zumindest einen Betätigungs-Oberflächenabschnitts in derselben Umfangsrichtung der Spindel ausüben.

Die erfindungsgemäßen Ausführungsformen des erfindungsgemäßen Antriebssystems mit zumindest einem Paar von Aktorvorrichtungen und mit einzelnen oder mehreren der anderen ansonsten hierin beschriebenen Merkmale des Antriebssystems können derart realisiert sein,
dass die Betätigungs-Bauteilstruktur einen ersten Betätigungsabschnitt mit einem ersten Betätigungs-Oberflächenabschnitt und einen zweiten Betätigungsabschnitt mit einem zweiten Betätigungs-Oberflächenabschnitt aufweist,
dass bei Ansteuerung der ersten Aktorvorrichtung des jeweiligen Paars von Aktorvorrichtungen mit einem Ansteuerungssignal dieser den ersten Betätigungs-Oberflächenabschnitt in Bewegung versetzt und bei Ansteuerung der zweiten Aktorvorrichtung des jeweiligen Paars von Aktorvorrichtungen mit einem Ansteuerungssignal dieser den zweiten Betätigungs-Oberflächenabschnitt in Bewegung versetzt.

Bei diesen Ausführungsformen kann insbesondere vorgesehen sein,
dass der erste Betätigungsabschnitt mit einem Ende einer ersten Aktorvorrichtung in Verbindung steht und der zweiten Betätigungsabschnitt mit einem Ende einer zweiten Aktorvorrichtung in Verbindung steht,
dass die Betätigungs-Oberflächenabschnitte zumindest jeweils in einem Abschnitt einander gegenüber liegen und den jeweiligen Spindelraum begrenzen und an einer Spindel-Kontaktstelle einer von der Betätigungs-Bauteilstruktur aufgenommenen Spindel anliegen, um diese anzutreiben.

Nach einem weiteren Aspekt der Erfindung ist ein Antriebsmotor mit einem Antriebssystem nach einer hierin beschriebenen Ausführungsform und einer Spindel mit einer Spindelachse vorgesehen, wobei die Spindel in jedem Spindelraum gelegen ist und mit den Antriebseinheiten zum Antreiben der Spindel gekoppelt ist.

Die Ausführungsformen des erfindungsgemäßen Antriebsmotors mit einzelnen oder mehreren der anderen ansonsten hierin beschriebenen Merkmale des Antriebssystems können jeweils derart realisiert sein,
dass zumindest eine Antriebsvorrichtung eine Betätigungs-Bauteilstruktur aufweist, die den Spindelraum teilweise begrenzt und mit der Spindel in Kontakt ist zum Aufnehmen und Antreiben der Spindel,
dass die zumindest eine Antriebsvorrichtung zumindest eine Aktorvorrichtung aufweist, die bei entsprechender Ansteuerung die Betätigungs-Bauteilstruktur derart bewegt, dass diese die durch die Betätigungs-Bauteilstruktur aufgenommene Spindel antreibt.

Nach einem weiteren Aspekt der Erfindung ist ein Stellsystem mit einem Antriebssystem nach einer hierin beschriebenen Ausführungsform desselben und mit einem Schlitten, der mit der Spindel gekoppelt ist.

Eine Antriebsvorrichtung kann aufweisen:
ein Antriebsgehäuse mit einer Gehäusewand, an dem zumindest ein sich in radialer Richtung erstreckender Betätigungs-Oberflächenabschnitt realisiert ist,
eine Betätigungs-Spindelmutter, die einen Spindelraum mit einer Spindelaufnahmeachse ausbildet und eine radiale Richtung der Antriebsvorrichtung definiert,
eine Mitnahmevorrichtung, die als ein Anlage-Oberflächenabschnitt der Betätigungs-Spindelmutter oder als ein Anlage-Oberflächenabschnitt einer Bauteilkomponente, die an der Betätigungs-Spindelmutter angebracht oder mit der Betätigungs-Spindelmutter verbunden ist, realisiert ist, wobei der Anlage-Oberflächenabschnitt der Betätigungs-Spindelmutter oder der Bauteilkomponente und der Anlage-Oberflächenabschnitt der Gehäusewand einander zugewandt orientiert sind,
zumindest eine Aktorvorrichtung, die zwischen einer der folgenden Anlage-Oberflächenabschnitte gelegen ist: zwischen dem Anlage-Oberflächenabschnitt der Betätigungs-Spindelmutter oder der Bauteilkomponente und dem Anlage-Oberflächenabschnitt der Gehäusewand, wobei die Längsrichtung der zumindest eine Aktorvorrichtung entlang der Umfangsrichtung verläuft.

Eine solche Antriebsvorrichtung kann eine Rückstellvorrichtung aufweisen, die von einer Neutralstellung der Betätigungs-Spindelmutter relativ zum Antriebsgehäuse eine Drehbewegung in jede der zueinander entgegengesetzten Umfangsrichtungen aufgrund einer Rückstellkraft zu der Neutralstellung bewirkt, deren Stärke von der Größe des Drehwinkels der jeweiligen Drehbewegung abhängt.

Nach einer weiteren Ausführungsform der erfindungsgemäßen Antriebsvorrichtung weist diese auf:
ein Antriebsgehäuse mit einer Gehäusewand, an dem zumindest ein sich in radialer Richtung erstreckender Betätigungs-Oberflächenabschnitt realisiert ist, der in einer ersten Umfangsrichtung der Betätigungs-Spindelmutter orientiert ist,
eine Betätigungs-Spindelmutter, die einen Spindelraum mit einer Spindelaufnahmeachse ausbildet und eine radiale Richtung der Antriebsvorrichtung definiert, wobei die Betätigungs-Spindelmutter zumindest einen Anlage-Oberflächenabschnitt aufweist, der entlang einer zweiten Umfangsrichtung der Betätigungs-Spindelmutter orientiert ist, die entgegengesetzt zu der ersten Umfangrichtung gerichtet ist, wobei der zumindest eine Anlage-Oberflächenabschnitt der Betätigungs-Spindelmutter und ein jeweiliger des zumindest einen Anlage-Oberflächenabschnitts der Gehäusewand, der entlang der zweiten Umfangsrichtung der Betätigungs-Spindelmutter orientiert ist, einander zugewandt gelegen sind,
zumindest eine Aktorvorrichtung, die mit einem ersten Ende an dem Anlage-Oberflächenabschnitt der Gehäusewand anliegt und mit einem zweiten Ende an dem Anlage-Oberflächenabschnitt der Betätigungs-Spindelmutter anliegt, wobei die Längsrichtung der zumindest einen Aktorvorrichtung von dem ersten Ende zu dem zweiten Ende verläuft.

Insbesondere kann diese Ausführungsform der Antriebsvorrichtung derart realisiert sein,
dass die Gehäusewand zumindest zwei sich in radialer Richtung erstreckende Betätigungs-Oberflächenabschnitte aufweist, von denen einer entlang einer ersten Umfangsrichtung der Betätigungs-Spindelmutter orientiert ist und von denen ein anderer entlang einer zweiten Umfangsrichtung der Betätigungs-Spindelmutter orientiert ist, die entgegengesetzt zu der ersten Umfangsrichtung der Betätigungs-Spindelmutter orientiert ist,
dass die Betätigungs-Spindelmutter zumindest zwei Anlage-Oberflächenabschnitte aufweist, von denen einer entlang der zweiten Umfangsrichtung der Betätigungs-Spindelmutter orientiert ist und von denen ein anderer entlang der ersten Umfangsrichtung der Betätigungs-Spindelmutter orientiert ist, wobei der zumindest eine Anlage-Oberflächenabschnitt der Betätigungs-Spindelmutter und ein jeweiliger des zumindest einen Anlage-Oberflächenabschnitts der Gehäusewand, der entlang der Umfangsrichtung der Betätigungs-Spindelmutter orientiert ist, einander zugewandt gelegen sind,
dass die Antriebsvorrichtung eine erste und eine zweite Aktorvorrichtung aufweist, die jeweils mit einem ersten Ende an einem der Anlage-Oberflächenabschnitte der Gehäusewand und mit einem zweiten Ende an einem jeweiligen Anlage-Oberflächenabschnitt der Betätigungs-Spindelmutter anliegen, wobei der jeweilige Anlage-Oberflächenabschnitt der Betätigungs-Spindelmutter und der jeweilige Anlage-Oberflächenabschnitt der Gehäusewand, an denen ein jeweiliger Aktor anliegt, einander gegenüber liegen.

Dabei kann die Antriebsvorrichtung derart realisiert sein,
dass zumindest zwei Betätigungs-Oberflächenabschnitte der Gehäusewand sich in radialer Richtung erstrecken und in Bezug auf jede der Umfangsrichtungen voneinander abgewandt orientiert sind,
dass die Betätigungs-Spindelmutter zwei Mitnahmevorrichtungen aufweist, die jeweils einen Anlage-Oberflächenabschnitt aufweist, die sich in radialer Richtung erstrecken und in Bezug auf jede der Umfangsrichtungen einander zugewandt orientiert sind, wobei jeweils ein Betätigungs-Oberflächenabschnitt der Gehäusewand und jeweils ein Anlage-Oberflächenabschnitt der Betätigungs-Spindelmutter einander gegenüber liegen,
dass die erste und eine zweite Aktorvorrichtung, in Richtung der Spindelaufnahmeachse gesehen, an jeweils einem Anlage-Oberflächenabschnitt der Mitnahmevorrichtungen und an einem jeweiligen der Anlage-Oberflächenabschnitte der Betätigungs-Spindelmutter anliegen.

Alternativ dazu kann die Antriebsvorrichtung dabei derart realisiert sein,
dass zumindest zwei Betätigungs-Oberflächenabschnitte der Gehäusewand sich in radialer Richtung erstrecken und sich einander gegenüber liegen,
dass die Betätigungs-Spindelmutter eine Mitnahmevorrichtung aufweist, die zumindest abschnittsweise zwischen den Betätigungs-Oberflächenabschnitten der Gehäusewand gelegen ist und die zwei Anlage-Oberflächenabschnitte aufweist, die entgegengesetzt zueinander orientiert sind,
dass die erste und eine zweite Aktorvorrichtung, in Richtung der Spindelaufnahmeachse gesehen, auf zueinander entgegengesetzt gelegenen Seiten der Mitnahmevorrichtung an einem jeweiligen der Anlage-Oberflächenabschnitte derselben anliegen.

Der Ausdruck "entlang" bedeutet hierin im Zusammenhang einer hierin genannten Richtungsangabe, die insbesondere auch den Verlauf einer Konturlinie oder einer Oberfläche oder eine Richtung eines Bauteils oder einer Strukturkomponente wie eine Achse oder eine Welle oder eine Mittelachse derselben betreffen kann, in Bezug auf eine Bezugsrichtung oder eine Bezugsachse, dass ein Abschnitt des Verlaufs oder die Tangente an eine jeweilige Konturlinie oder jeweilige Oberfläche oder die Richtung in einer explizit oder implizit vorgegebenen Blickrichtung lokal oder abschnittsweise mit einem Winkel von maximal 45 Grad und Insbesondere von maximal 30 Grad von der jeweiligen Bezugsrichtung bzw. Bezugsachse abweicht, auf die die jeweilige Richtungsangabe bezogen ist.

Der Ausdruck "quer" bedeutet hierin im Zusammenhang einer hierin genannten Richtungsangabe, die insbesondere auch den Verlauf einer Konturlinie oder einer Oberfläche oder eine Richtung eines Bauteils oder einer Strukturkomponente wie eine Achse oder eine Welle oder eine Mittelachse derselben betreffen kann, in Bezug auf eine Bezugsrichtung oder eine Bezugsachse, dass ein Abschnitt des Verlaufs oder die Tangente an eine jeweilige Konturlinie oder jeweilige Oberfläche oder die Richtung in einer explizit oder implizit vorgegebenen Blickrichtung lokal oder abschnittsweise mit einem Winkel, der zwischen 45 Grad und 135 Grad beträgt, und vorzugsweise mit einem Winkel, der zwischen 67 Grad und 113 Grad beträgt, von der jeweiligen Bezugsrichtung bzw. Bezugsachse abweicht, auf die die jeweilige Richtungsangabe bezogen ist.

Unter dem Begriff "Abstand" insbesondere zwischen zwei Flächen wird hierin insbesondere der kürzeste Abstand verstanden.

Eine "Längsrichtung" oder eine andere Referenzrichtung einer Referenzlinie, wie insbesondere eine zentrale Achse oder eine mittig verlaufende Linie oder eine Mittellinie zumindest einer Strukturkomponente oder eines Bauteils und insbesondere einer Führungsbahn ergibt sich hierin insbesondere als Verbindungslinie der Flächenschwerpunkte der jeweils kleinsten Querschnittsflächen der jeweiligen Strukturkomponente entlang einer ermittelten oder vorgegebenen Richtung oder zwischen zwei ermittelten oder vorgegebenen Enden. In dem Fall, dass die Referenzlinie gekrümmt oder zumindest abschnittsweise gekrümmt verlaufen kann, kann die Referenzrichtung generell als lokale Längsrichtung zu verstanden werden. Dabei kann die Referenzrichtung hierin jedoch auch als die Richtung einer geradlinig definierten Referenzlinie verstanden werden, wobei zur Ermittlung der geradlinigen Referenzlinie eine Linie verwendet wird, deren Lage relativ zu der gekrümmten Linie in der Summe die geringste Abweichung zwischen diesen Linien oder die geringste Abweichungsfläche ergibt. Dasselbe gilt, falls hierin eine geradlinige Referenzlinie aus einer gekrümmten Linie abzuleiten ist.

Unter der Bezeichnung "länglich" in Bezug auf eine Komponente und insbesondere in Bezug auf eine Blattfeder oder Blattfeder-Anordnung wird hierin verstanden, dass eine erste Länge der Komponente, die sich in einer ersten Längsrichtung ergibt, um mindestens das 1,2-fache größer ist als eine zweite Länge der Komponente, die sich in einer zweiten Längsrichtung ergibt, die senkrecht zu der ersten Längsrichtung und der Dickenrichtung verläuft. Dabei kann die erste Länge insbesondere eine dem Betrag nach größte Länge sein. Auch können sich die genannten Längen in einer Referenzebene ergeben, die insbesondere eine Mittelebene sein kann.

Unter einer Längsrichtung einer Komponente kann hierin insbesondere die vorbezeichnete erste Längsrichtung und unter einer Breitenrichtung kann hierin insbesondere die vorbezeichnete zweite Längsrichtung verstanden werden.

Unter der Bezeichnung "im Wesentlichen" in Bezug auf ein Merkmal oder einen Wert wird hierin insbesondere verstanden, dass das Merkmal eine Abweichung von 20 % und speziell von 10 % von dem Merkmal oder dessen geometrischen Eigenschaft bzw. des Werts enthält.

Unter einem "gekrümmten Verlauf" einer Linie oder Kante oder Oberfläche ist gemeint, dass die Oberfläche entlang einer Referenzrichtung gesehen über die gesamte quer zur Referenzrichtung verlaufende Breite keine Ecke aufweist, d.h. differenzierbaren Verlauf hat.

Unter "Krümmung" einer Komponente oder einer Oberfläche einer Komponente, entlang einer Richtung, z.B. entlang einer Längsrichtung, bedeutet hierin, dass sich die Komponente entlang dieser Richtung krümmt. Dabei ist die Krümmung in ihrem Verlauf in einer Blickrichtung quer zu dieser Richtung sichtbar und kann z.B. entlang einer Breitenrichtung der Komponente sichtbar sein.

Unter "Orientierung" in Bezug auf eine Fläche und insbesondere Oberfläche wird hierin die Normale auf die jeweilige Oberfläche verstanden. Für den Fall, dass es sich bei der betreffenden Oberfläche nicht um eine gerade, sondern beispielsweise eine gekrümmte Oberfläche handelt, kann zur Ermittlung der Oberflächen-Normalen die Normale auf eine gerade Oberfläche derselben Größe verwendet werden, für deren Lage sich relativ zu gekrümmten Oberfläche in der Summe die geringste Abweichung ergibt.

Unter einer "Erstreckung" eines Flächenabschnitts wird eine Richtung eines ebenen Flächenabschnitts verstanden, der entlang des in Bezug genommenen Flächenabschnitts verläuft und in Bezug zu diesem, falls dieser gekrümmte Abschnitte oder Abschnitte verschiedener Orientierung aufweist, eine derartige Lage hat, bei der die Summe der Abweichungsbeträge zwischen beiden Flächenabschnitten minimal ist. In Bezug auf einen Längenbetrag der Erstreckung eines Flächenabschnitts wird hierin eine Länge eines fiktiven Flächenabschnitts derselben Größe in einer zu definierenden Richtung verstanden, der eine Lage relativ zu dem referenzierten Flächenabschnitt hat, bei der die Summe der Abweichungsbeträge zwischen beiden Flächenabschnitten minimal ist.

Unter dem Begriff "einstückig" in Bezug auf ein Bauteil oder eine Komponente wird hierin verstanden, dass das Bauteil bzw. die Komponente als ein Stück hergestellt ist. Dabei kann das Bauteil bzw. die Komponente aus mehreren Stücken oder Teilen, die zusammenhängen oder aneinander gekoppelt oder miteinander verbunden sind, gebildet sein. Unter dem Begriff "aus einem Stück hergestellt" wird in dieser Hinsicht verstanden, dass das Bauteil bzw. die Komponente bei seiner Herstellung aus einem einstückigen Ausgangswerkstück hergestellt ist.

Unter dem Begriff "elektromechanisches Material" wird hierin ein Material verstanden, das - bei Beaufschlagung des Materials mit einer entsprechenden elektrischen Spannung - eine Dimensionsänderung vollführt; etwa kann bei einem Element aus einem elektromechanischen Material durch Spannungsbeaufschlagung eine Längenänderung hervorgerufen werden.

Hierin wird unter der logischen Verknüpfung "oder" in Bezug auf zwei Alternativen ausschließlich die eine oder die andere der Alternativen verstanden, sofern nichts anderes angegeben ist.

Im Folgenden werden Ausführungsformen der Erfindung anhand der beiliegenden Figuren beschrieben. Hierin ist die Beschreibung von Merkmalen oder Komponenten von erfindungsgemäßen Ausführungsformen so zu verstehen, dass eine betreffende Ausführungsform erfindungsgemäß, sofern dies nicht explizit ausgeschlossen ist, auch zumindest ein Merkmal einer anderen Ausführungsform aufweisen kann, jeweils als zusätzliches Merkmal dieser betreffenden Ausführungsform oder als alternatives Merkmal, das ein anderes Merkmal dieser betreffenden Ausführungsform ersetzt. Die Figuren zeigen:
Figur 1 eine perspektivische Darstellung einer Ausführungsform des erfindungsgemäßen Antriebssystems mit zwei Antriebsvorrichtungen und eine von dieser aufgenommenen Spindel, die von dem Antriebssystem angetrieben wird,
Figur 2 eine Draufsicht der Ausführungsform des Antriebssystems der Figur 1 mit der Spindel,
Figur 3 eine perspektivische Darstellung einer Ausführungsform des erfindungsgemäßen Antriebsmotors mit der Ausführungsform des Antriebssystems der Figur 1 mit einer von dieser aufgenommenen Spindel, mit einem Basiskörper und einem Schlitten,
Figur 4 eine weitere perspektivische Darstellung der Ausführungsform des erfindungsgemäßen Antriebsmotors nach der Figur 3, wobei der Schlitten nur teilweise dargestellt ist,
Figur 5 eine Explosionsdarstellung der Ausführungsform des erfindungsgemäßen Antriebsmotors nach der Figur 3, wobei der Basiskörper, das Antriebssystem mit der von dieser aufgenommenen Spindel und der Schlitten als voneinander separierte Teile gezeigt sind,
Figur 6 eine Draufsicht der Ausführungsform des erfindungsgemäßen Antriebsmotors nach der Figur 3, wobei der Schlitten nur teilweise dargestellt ist,
Figur 7 eine Schnittdarstellung der Ausführungsform des erfindungsgemäßen Antriebsmotors nach der Figur 3, wobei der Schnitt durch die Linie S7-S7 der Figur 6 definiert ist,
Figur 8 eine weitere Schnittdarstellung der Ausführungsform des erfindungsgemäßen Antriebsmotors nach der Figur 3, wobei der Schnitt durch die Linie S8-S8 der Figur 6 definiert ist,
Figur 9 eine schematische Schnittdarstellung einer Anordnung aus einem Abschnitt der Spindel, einem Gewindeabschnitt der Betätigungs-Bauteilstruktur einer ersten Antriebsvorrichtung und einem Gewindeabschnitt der Betätigungs-Bauteilstruktur einer zweiten Antriebsvorrichtung des Antriebsystems der Figur 1, wobei die Gewindeabschnitte der Betätigungs-Bauteilstrukturen an der Spindel anliegen und von dem Antriebssystem in einer Neutralstellung so angeordnet sind, dass deren Gewindeabschnitte gegenüber dem Gewinde der Spindel voneinander weg gedrückt werden,
Figur 10 die schematische Schnittdarstellung der Anordnung der Figur 9, wobei die Gewindeabschnitte der Betätigungs-Bauteilstrukturen gegenüber dem Gewinde der Spindel zusammengedrückt werden,
Figur 11 die schematische Schnittdarstellung der Anordnung der Figur 9, wobei die Gewindeabschnitte der Betätigungs-Bauteilstrukturen passend in dem Gewinde der Spindel gelegen sind,
Figur 12 die schematische Schnittdarstellung der Anordnung der Figur 9, wobei die Gewindeabschnitte der Betätigungs-Bauteilstrukturen gemäß Figur 10 gegenüber dem Gewinde der Spindel zusammengedrückt werden, wobei sich die Gewindeform der Gewindeabschnitte der Betätigungs-Bauteilstrukturen von denselben gemäß Figur 10 unterscheiden,
Figur 13 eine Seitendarstellung einer weiteren Ausführungsform des erfindungsgemäßen Antriebssystems, die drei Antriebsvorrichtungen und eine zusätzliche Positionsfixierungs-Vorrichtung aufweist,
Figur 14 eine perspektivische Darstellung einer Ausführungsform des erfindungsgemäßen Antriebssystems für drei Antriebsvorrichtungen, wobei nur zwei Antriebsvorrichtungen gezeigt sind;
Figur 15 eine Frontdarstellung einer Ausführungsform des erfindungsgemäßen Antriebsmotors mit der Ausführungsform des Antriebssystems der Figur 14,
Figur 16 eine weitere Ausführungsform der Antriebsvorrichtung, die in einem erfindungsgemäßen Antriebssystem oder einem erfindungsgemäßen Antriebsmotor verwendbar ist,
Figur 17 eine Frontdarstellung einer weiteren Ausführungsform der Antriebsvorrichtung, die in einem erfindungsgemäßen Antriebssystem oder einem erfindungsgemäßen Antriebsmotor verwendbar ist,
Figur 18 eine Darstellung eines beispielartigen ersten elektrischen Ansteuerungssignals zur Aktivierung der ersten Aktorvorrichtung der Ausführungsform der Antriebsvorrichtung der Figur 17,
Figur 19 eine Darstellung eines beispielartigen zweiten elektrischen Ansteuerungssignals zur Aktivierung der zweiten Aktorvorrichtung der Ausführungsform der Antriebsvorrichtung der Figur 17 bei dem Ansteuerungssignal, das in der Figur 18 dargestellt ist, wobei mit dem ersten Ansteuerungssignal und zeitgleich mit dem zweiten Ansteuerungssignal die Spindel in der ersten Stellrichtung, die in der Figur 17 gezeigt ist, angetrieben wird,
Figur 20 eine perspektivische Darstellung einer Ausführungsform des erfindungsgemäßen Antriebsmotors mit zwei Exemplaren der Ausführungsform des Antriebssystems der Figur 14, die in der Spindelachse hintereinander angeordnet sind, mit einer von dieser aufgenommenen Spindel, mit einem Teil des Basiskörpers, jedoch ohne den Schlitten,
Figur 21 eine Seitendarstellung der Ausführungsform des erfindungsgemäßen Antriebsmotors nach der Figur 20 , wobei der Schlitten nicht dargestellt ist,
Figur 22 eine perspektivische Darstellung einer weiteren Ausführungsform des erfindungsgemäßen Antriebssystems mit drei Antriebsvorrichtungen, mit einer von dieser aufgenommenen Spindel, mit einer Positionsfixierungs-Vorrichtung, die die Positionen der zwei äußeren der drei Antriebsvorrichtungen fixiert,
Figur 23 eine perspektivische Darstellung einer Ausführungsform einer erfindungsgemäßen Antriebsvorrichtung, die in dem Antriebssystem der Figur 22 verwendbar ist,
Figur 24 eine Frontdarstellung der Ausführungsform der Antriebsvorrichtung der Figur 23,
Figur 25 eine perspektivische Darstellung einer weiteren Ausführungsform einer erfindungsgemäßen Antriebsvorrichtung, die in dem Antriebssystem der Figur 22 verwendbar ist,
Figur 26 eine Frontdarstellung der Ausführungsform der Antriebsvorrichtung der Figur 25,
Figur 27 eine perspektivische Darstellung einer weiteren Ausführungsform einer erfindungsgemäßen Antriebsvorrichtung, die in dem Antriebssystem der Figur 22 verwendbar ist,
Figur 28 eine Frontdarstellung der Ausführungsform der Antriebsvorrichtung der Figur 27.

Nach der Erfindung ist generell ein Antriebssystem S mit zumindest zwei Antriebseinheiten jeweils zur Aufnahme und zum Antreiben einer Spindel 90 mit einer Spindelachse A90 vorgesehen. Durch jede der Antriebseinheiten erstreckt sich jeweils ein Spindelraum jeweils mit einer Spindelaufnahmeachse, die zusammenfallen, so dass diese die Spindel 90 aufnehmen können. Dabei fallen auch die Spindelaufnahmeachsen und die Spindelachse A90 zusammen. Unter einer Spindelaufnahmeachse wird hierin eine Achse verstanden, entlang der sich ein Spindelraum erstreckt, in dem ein Abschnitt einer Spindel, die von den Antriebeinheiten anzutreiben ist, aufgenommen werden kann. Zumindest zwei Antriebseinheiten oder jeweils zwei Antriebseinheiten sind durch zumindest eine Kopplungsvorrichtung K in Richtung oder entlang der Spindelaufnahmeachsen federnd miteinander gekoppelt.

Zur Darstellung der Erfindung in den Figuren wird in diesen auch ein kartesisches Koordinatensystem verwendet.

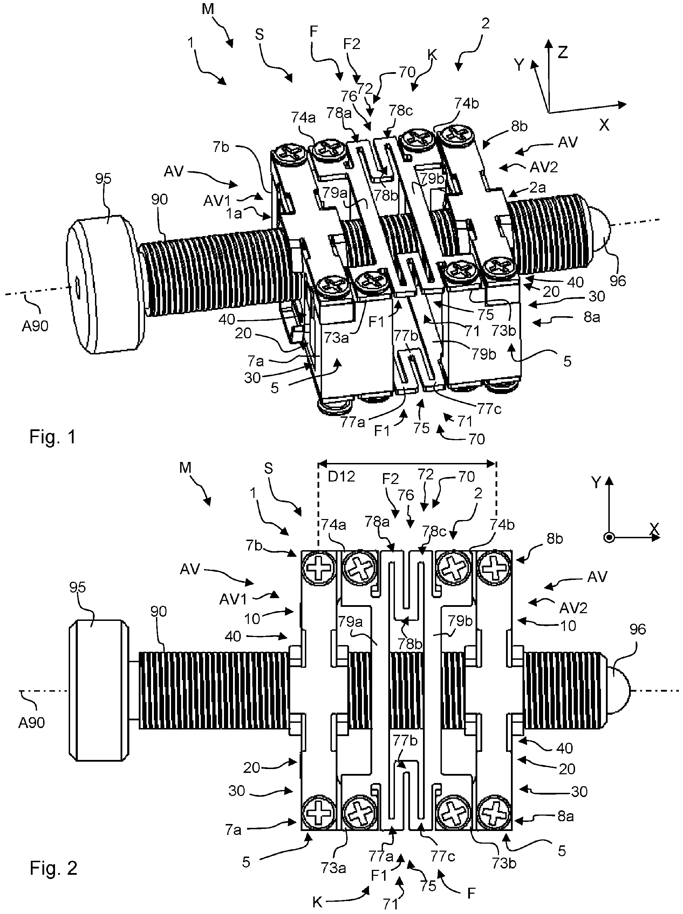

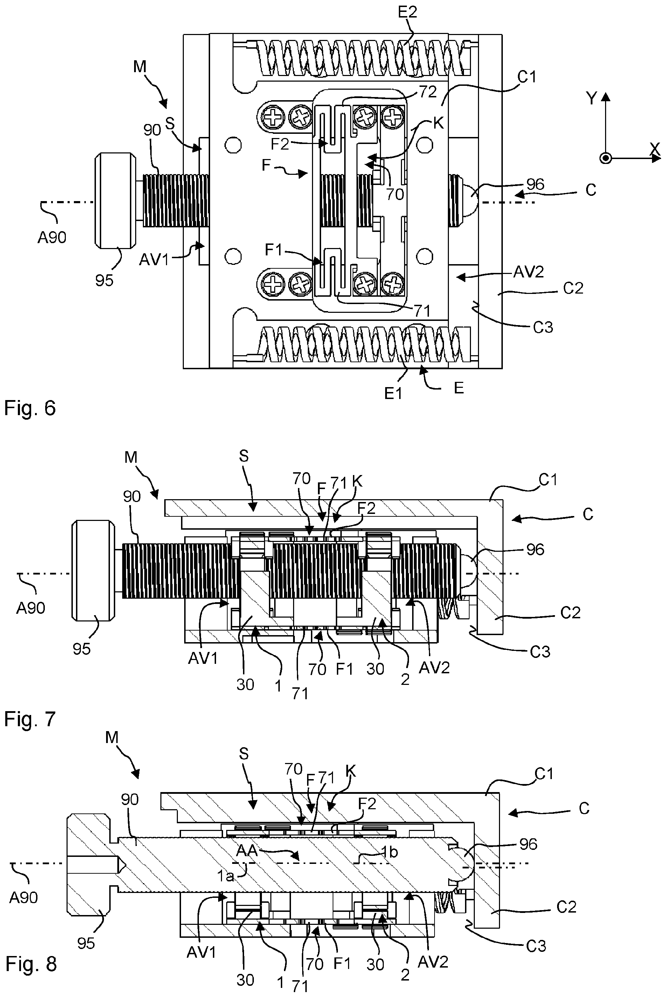

Eine Ausführungsform des erfindungsgemäßen Antriebssystems S ist in den Figuren 1 und 2 dargestellt. Dieses Antriebssystem S weist zwei Antriebseinheiten 1, 2 auf. Generell weisen die erfindungsgemäß vorgesehenen Antriebseinheiten 1, 2 jeweils eine Antriebsvorrichtung, dem hierin generell das Bezugszeichen AV zugeordnet ist, und optional eine Lagervorrichtung 5, in der die jeweilige Antriebsvorrichtung AV aufgenommen oder gelagert sind, auf. Die zwei Antriebsvorrichtungen, die in den Figuren 1 und 2 gezeigt sind, sind zusätzlich konkret die Bezugszeichen AV1 bzw. AV2 zugeordnet. Durch jede der Antriebseinheiten 1, 2 erstreckt sich jeweils ein Spindelraum 1a, 2a jeweils mit einer Spindelaufnahmeachse 1b, 2b. Die Spindelaufnahmeachsen 1b, 2b fallen zusammen und werden im Folgenden auch als Spindelaufnahmeachse AA, die diese in Kombination definieren (siehe auch Figur 8), bezeichnet. Wenn eine Spindel 90 in den Spindelräumen 1a, 2a gelegen ist, fällt deren Spindelachse A90 mit den Spindelaufnahmeachsen 1b, 2b oder der Spindelaufnahmeachse AA zusammen. Die Lagervorrichtung 5 kann, wie in den Figuren 1 und 2 dargestellt, aus seitlichen Halterungen gebildet sein, zwischen denen eine jeweilige Antriebsvorrichtung angeordnet ist und von denen die jeweilige Antriebsvorrichtung gelagert ist. In dieser Hinsicht weist die Ausführungsform des erfindungsgemäßen Antriebssystems S der Figuren 1 und 2 auf: eine erste Antriebseinheit 1 mit zwei ersten, in Bezug auf die Spindelaufnahmeachse AA seitlichen Halterungen 7a, 7b, an denen eine erste Antriebsvorrichtung AV1 gelagert ist, und eine zweite Antriebseinheit 2 mit zwei zweiten, in Bezug auf die Spindelaufnahmeachse AA seitlichen Halterungen 8a, 8b realisiert sein.

Die Lagervorrichtung 5 kann bei jeder Ausführungsform der erfindungsgemäß verwendeten Antriebseinheit einstückig geformt oder als ein Stück hergestellt sein, wobei beispielsweise die seitlichen Halterungen 7a, 7b oder 8a, 8b jeweils ein einzelnes Bauteil bilden, das jeweils ein Verbindungsstück aufweist, das die jeweiligen seitlichen Halterungen 7a und 7b bzw. 8a und 8b strukturell, also formsteif, verbindet.

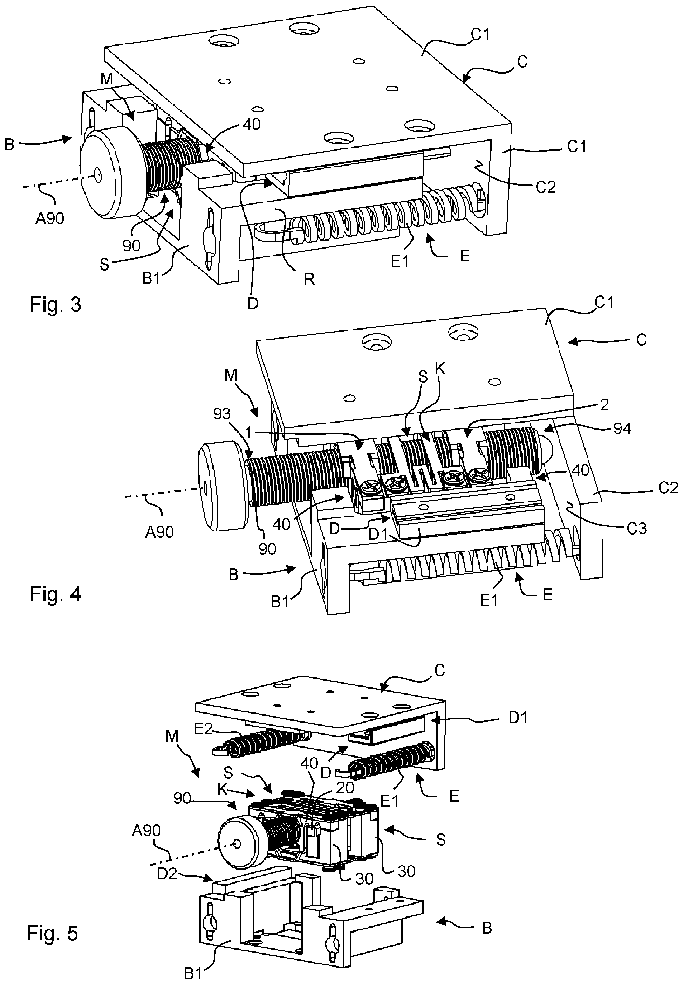

Die Spindel 90 kann ein Spindel-Betätigungsteil 95 aufweisen, das beispielsweise an einem Endabschnitt der Spindel 90 angebracht oder als Endabschnitt der Spindel 90 geformt ist, um eine Drehstellung oder Drehbewegung der Spindel 90 manuell vornehmen zu können. Das Spindel-Betätigungsteil 95 ist für eine manuelle Betätigung geeignet, um die Spindel manuell in Drehung zu versetzen. Auch kann die Spindel 90 ein Spindel-Stellteil 96 aufweisen, mit dem die Axialposition oder Axialbewegungen der Spindel 90 auf einen Schlitten C (Figur 3), der mit dem Antriebssystem S zusammenwirkt, übertragen werden kann. In der Darstellung der Figuren 1 und 2 ist das Spindel-Stellteil 96 als Endstück geformt, das als Anschlag an einem Mitnehmer oder einer Anschlagsoberfläche des Schlittens C dienen soll. Statt als ein Endstück kann das Spindel-Stellteil 96 auch auf andere Weise, beispielsweise als relativ zur Spindel 90 drehfeste Mutter, die mit dem Schlitten C verbunden ist, realisiert sein.

Das erfindungsgemäße Antriebssystem S weist eine Kopplungsvorrichtung K auf, die zumindest zwei Antriebseinheiten aneinanderkoppelt. Die Kopplungsvorrichtung K verbindet somit jeweils zwei Antriebseinheiten miteinander, wobei die Antriebseinheiten entlang der Spindelaufnahmeachse AA hintereinander gelegen sind. Die Kopplungsvorrichtung K kann erfindungsgemäß generell als Federvorrichtung F ausgeführt sein. Die Ausführungsform des Antriebssystems S nach den Figuren 1 und 2 weist eine Kopplungsvorrichtung K mit zwei Federvorrichtungen F1, F2 auf. Die Kopplungsvorrichtung K oder die Federvorrichtungen F1, F2 ist oder sind gemäß der Ausführungsform des Antriebssystems S nach den Figuren 1 und 2 jeweils als zumindest eine einstückige Kopplungseinheit 70 ausgeführt, die im Wesentlichen plattenförmig realisiert ist. Generell kann eine Kopplungseinheit 70 auch aus mehreren einzelnen Teilen gebildet sein.

Bei Ausführungsformen des Antriebssystems S, bei denen die Antriebseinheiten jeweils eine Antriebsvorrichtung und eine Lagerungsvorrichtung, die die Antriebvorrichtung lagert, aufweisen, können - wie in den Figuren 1 und 2 gezeigt - die Lagerungsvorrichtungen der Antriebseinheiten mittels der Kopplungsvorrichtung K miteinander verbunden sein. Alternativ dazu können in diesen Fällen die Antriebsvorrichtungen mittels der Kopplungsvorrichtung K oder sowohl die Antriebsvorrichtungen als auch deren Lagerungsvorrichtungen miteinander verbunden sein.

Die Kopplungsvorrichtung K der erfindungsgemäßen Ausführungsformen des Antriebssystems S weist zumindest eine Federvorrichtung F auf, mit der die Antriebsvorrichtungen AV, die die Kopplungsvorrichtung K jeweils koppelt, zueinander einen Neutralzustand, bei dem auf die jeweiligen Antriebsvorrichtungen AV keine oder in Bezug auf die von der Federvorrichtung F jeweils ausgeübte Federkraft vernachlässigbare äußere Kräfte wirken und diese Antriebsvorrichtungen AV zueinander einen Neutralzustand-Abstand einnehmen, und, bei Einwirkung entsprechender äußerer Kräfte auf die Antriebsvorrichtungen AV, Verstellzustände einnehmen können. Bei den Verstellzuständen nehmen die Antriebsvorrichtungen AV Abstände zueinander ein, die von dem Neutralzustand-Abstand differieren und die, je nach den auf die jeweiligen Antriebsvorrichtungen AV einwirkenden äußeren Kräfte, sowohl Verstellzustände, bei denen die Abstände zwischen den jeweiligen Antriebsvorrichtungen AV geringer als bei dem Neutralzustand-Abstand sind, als auch Verstellzustände, bei denen die Abstände zwischen den jeweiligen Antriebsvorrichtungen AV größer als bei dem Neutralzustand-Abstand sind, sein können.

Insbesondere ist erfindungsgemäß vorgesehene Kopplungsvorrichtung K derart realisiert, dass die zumindest eine Federvorrichtung F derselben sich in Richtung der Spindelaufnahmeachse AA verkürzen oder verlängern kann. Somit bewegen die Antriebsvorrichtungen AV, die die Kopplungsvorrichtung K jeweils koppelt, aufeinander zu oder voneinander weg, wenn die Antriebsvorrichtungen AV jeweils entsprechende Kräfte auf die Kopplungsvorrichtung K ausüben. Die Kräfte können also entweder Druckkräfte oder Zugkräfte sein, die von den Antriebsvorrichtungen, die die Kopplungsvorrichtung K jeweils koppelt, auf die Kopplungsvorrichtung K und insbesondere die zumindest eine Federvorrichtung F, die zur Bereitstellung der vorgenannten Federwege vorgesehen ist, wirken. Mit anderen Worten ist die zumindest eine zumindest eine Federvorrichtung F jeweils derart ausgeführt, dass diese ausgehend von ihrem Neutralzustand sowohl eine Vergrößerung als auch eine Verkleinerung der wirksamen Federlänge zwischen den Antriebsvorrichtungen, die die Kopplungsvorrichtung K jeweils koppelt, ermöglicht.

Zusammenfassend weist die Kopplungsvorrichtung K die zumindest eine Federvorrichtung F auf, die jeweils in einem unbelasteten Neutralzustand, in dem keine oder vernachlässigbare äußere Kräfte auf die die Antriebsvorrichtungen AV wirken, also insbesondere wenn keine Spindel 90 in dem Antriebssystem S aufgenommen ist, die jeweils zwei Antriebseinheiten 1, 2 stabil in einem vorbestimmten Abstand D12 hält und von dem Neutralzustand in zueinander entgegen gesetzten Richtungen entlang der Spindelaufnahmeachse AA jeweils einen Federweg bereitstellt. Dieser jeweilige Federweg tritt insbesondere dann auf, wenn keine Spindel 90 in dem Antriebssystem S aufgenommen ist und die Antriebsvorrichtungen AV jeweils entsprechende Kräfte auf die Kopplungsvorrichtung K ausüben.

Generell kann jede der erfindungsgemäß vorgesehenen Antriebseinheit eines Antriebssystems S auch ohne Lagervorrichtung 5 realisiert sein. Dabei können die Antriebseinheiten 1, 2 oder deren jeweilige Rahmenvorrichtung 30 direkt, also ohne dazwischen liegendem Bauteil, mittels der Kopplungsvorrichtung K gehalten und gelagert sein, indem diese miteinander gekoppelt sind. Auch sind dabei die jeweiligen Antriebsvorrichtungen direkt durch die Kopplungsvorrichtung K miteinander gekoppelt sein. Auch kann, wie die Figur 1 zeigt, die Rahmenvorrichtung 30 einstückig mit der Lagervorrichtung 5 realisiert sein
Die jeweilige Kopplungseinheit 70 ist, in Blickrichtung der Spindelaufnahmeachse AA oder der Spindelachse A90 gesehen, seitlich des jeweiligen Spindelraums 1a oder 1b und seitlich der Spindel 90 gelegen und erstreckt sich generell entlang der Spindelaufnahmeachse AA und bei der Realisierung gemäß Figuren 1 und 2 zusätzlich quer zur Spindelaufnahmeachse AA. Die Ausführungsform des erfindungsgemäßen Antriebssystems S der Figuren 1 und 2 weist eine Kopplungseinheit 70 mit zwei Kopplungseinheit-Verbindungsstücken 71, 72 auf, die, in Blickrichtung der Spindelaufnahmeachse AA gesehen, an jeweils einem von zwei zueinander entgegen gesetzt gelegenen Enden der Kopplungseinheit 70 gelegen sind. Die Kopplungseinheit-Verbindungsstücke 71, 72 weisen jeweils zwei in Richtung der Spindelaufnahmeachse AA hintereinander gelegene Befestigungsabschnitte 73a, 73b bzw. 74a, 74b auf, die z.B. mittels einer Verbindungvorrichtung an einer Rahmenvorrichtung 30 der jeweiligen Antriebsvorrichtung AV, AV1, AV2 befestigt sind. Die in Bezug auf die Spindelaufnahmeachse AA jeweils entgegen gesetzt zueinander gelegenen ersten Befestigungsabschnitte 73a, 74a sind an einer ersten Antriebseinheit 1 und die in Bezug auf die Spindelaufnahmeachse AA entgegen gesetzt zueinander gelegenen Befestigungsabschnitte 73b, 74b sind an einer zweiten Antriebseinheit 2 befestigt. Die zwei Befestigungsabschnitte 73a, 73b eines ersten Kopplungseinheit-Verbindungsstücks 71 und die zwei Befestigungsabschnitte 74a, 74b jeweils eines zweiten Kopplungseinheit-Verbindungsstücks 71, 72 sind durch jeweils einen Federabschnitt 75 bzw. 76 miteinander verbunden.

Nach den Darstellungen der Figuren 1 und 2 weist jeder Federabschnitt 75 bzw. 76 drei u-förmige Abschnitte 77a, 77b, 77c bzw. 78a, 78b, 78c oder Schlaufen-Abschnitte auf, die in der Spindelaufnahmeachse AA hintereinander angeordnet und zur Ausbildung einer Mäanderform abwechselnd zueinander entgegengesetzt geformt sind, so dass die Federabschnitte 75 bzw. 76 hierin auch als Mäanderabschnitt bezeichnet werden. Generell kann jeder Mäanderabschnitt auch nur einen Schlaufenabschnitt oder mehrere Schlaufenabschnitte aufweisen. Die Schlaufen können, wie dargestellt eckig oder paraboloid oder dreieckförmig oder in anderer Art geformt sein.

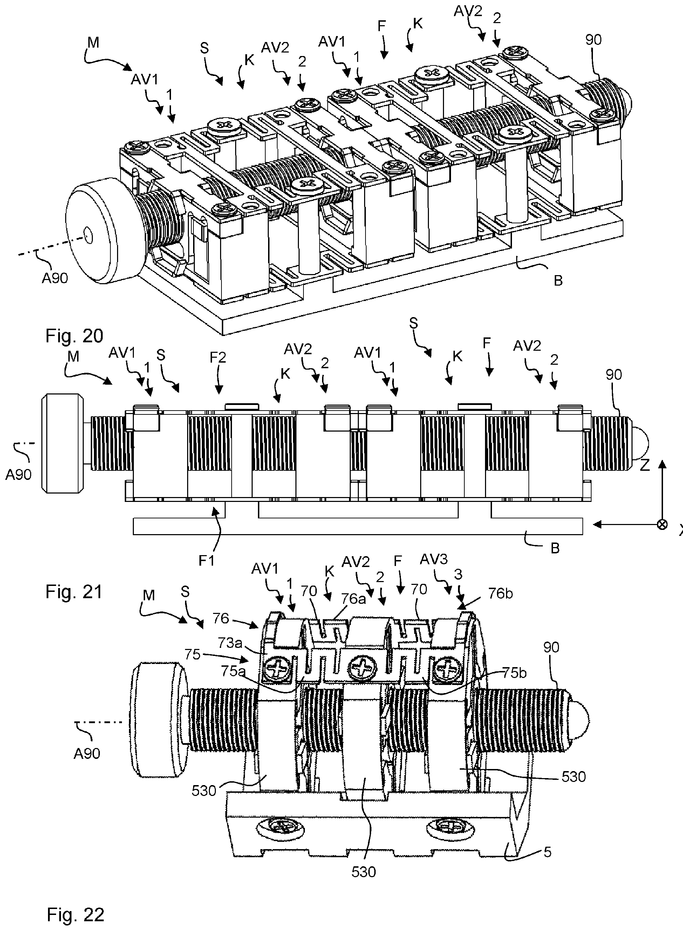

Je nach der Anzahl der Antriebseinheiten, die die Kopplungsvorrichtung K verbinden soll, weist die Kopplungsvorrichtung K oder Federvorrichtung eine entsprechende Anzahl von Kopplungseinheiten 70 auf. Bei den Ausführungsformen des Antriebssystems S der Figur 22 weist die Kopplungsvorrichtung K eine Kopplungseinheit 70 jeweils mit zwei Kopplungseinheit-Verbindungsstücken 71, 72 auf, die, in Blickrichtung der Spindelaufnahmeachse AA gesehen, an jeweils einem von zwei zueinander entgegen gesetzt gelegenen Enden der Kopplungseinheit 70 gelegen sind.

Die Kopplungseinheit 70 der Ausführungsform des Antriebssystems der Figuren 1 und 2 weist einen ersten Brückenabschnitt 79a und einen zweiten Brückenabschnitt 79b auf, die sich jeweils quer zur Spindelaufnahmeachse AA erstrecken und in der Spindelaufnahmeachse AA hintereinander gelegen sind, wobei der erste Brückenabschnitt 79a die Befestigungsabschnitte 73a, 74a und der zweite Brückenabschnitt 79b die Befestigungsabschnitte 73b, 74b verbindet. Somit sind die Federabschnitte 75 bzw. 76 zwischen den Brückenabschnitten 79a, 79b gelegen und können insbesondere diese miteinander verbinden.

Jeder Federabschnitt 75 bzw. 76 kann auch derart geformt sein, dass der jeweilige Mäanderabschnitt über jeweils einen Zwischenabschnitt, der sich entlang der Spindelaufnahmeachse AA erstreckt, einerseits mit dem ersten Brückenabschnitt 79a oder dem jeweiligen ersten Befestigungsabschnitt 73a, 74a und andererseits mit dem zweiten Brückenabschnitt 79b oder dem jeweiligen zweiten Befestigungsabschnitt 73b, 74b verbunden ist, wobei der u-förmige Abschnitt 77c oder 78c quer zur Spindelaufnahmeachse AA ausgeformt ist.

Jede Kopplungseinheit 70 oder eine der Kopplungseinheiten 70 kann anstatt im Wesentlichen plattenförmig in anderer Weise, z.B. als Stabwerk oder gitterförmig oder als Gussteil, realisiert ist
Die Kopplungseinheit 70 der ersten Federvorrichtung F1 und die Kopplungseinheit 70 der zweiten Federvorrichtungen F2 sind bei der Ausführungsform des Antriebssystems S nach den Figuren 1 und 2 zueinander identisch geformt. Alternativ dazu können die Kopplungseinheit 70 der ersten Federvorrichtung F1 und die Kopplungseinheit 70 der zweiten Federvorrichtung F2 zueinander unterschiedlich geformt sein.

Jede Kopplungseinheit 70 oder eine der Kopplungseinheiten 70 kann im Unterschied zu den beschriebenen Formen der Kopplungseinheit 70 mehrstückig und insbesondere zweistückig, also als Kombination zweier Stücke, realisiert sein. Beispielsweise können ein erstes Teil der Kopplungseinheit 70 und ein zweites Teil der Kopplungseinheit 70 jeweils als Kopplungseinheit-Verbindungsstück 71 bzw. 72 realisiert sein, so dass in diesem Fall die jeweilige Kopplungseinheit 70 keine Brückenabschnitte, die die Kopplungseinheit-Verbindungsstücke miteinander verbindet, aufweist.

Alternativ zu den voranstehend beschriebenen Ausführungsformen der Kopplungseinheit 70 kann, ansonsten mit den beschriebenen Merkmalskombinationen, vorgesehen sein, dass die Kopplungseinheit 70 nur eine erste Federvorrichtung F1 und nur eine zweite Federvorrichtung F2 aufweist.

Auch können die Ausführungsformen der Kopplungseinheit 70, ansonsten mit den beschriebenen Merkmalskombinationen des Antriebssystems S, nur ein Kopplungseinheit-Verbindungsstück oder mehr als zwei Kopplungseinheit-Verbindungsstücke aufweisen.

Die Ausführungsformen der Kopplungseinheit 70, ansonsten mit den beschriebenen Merkmalskombinationen, können derart realisiert sein, dass ein Federabschnitt oder mehrere Federabschnitte als Schlaufenabschnitt oder als Spiralfederabschnitt oder als Tellerfederabschnitt oder in anderer Weise als Federabschnitt realisiertist.

Die Ausführungsformen des Antriebssystems S nach den Figuren 1 und 2 können eine Ausführungsform der Kopplungsvorrichtung K aufweisen, die nur eine Kopplungseinheit 70 aufweist, die in der Richtung der Spindelaufnahmeachse AA gesehen seitlich der Spindel 90 gelegen ist.

Durch die erfindungsgemäß vorgesehenen Ausführungsformen der Kopplungsvorrichtung K wird erreicht, dass die jeweils zwei Antriebseinheiten 1, 2, auch bei deren Betätigungen im operationellen Betrieb, stabil in einem vorbestimmten Abstand D12 gehalten und die Kopplungsvorrichtung K, ausgehend von dem Neutralzustand, bei dem auf die Kopplungsvorrichtung K keine äußeren Kräfte insbesondere in Richtung der Spindelaufnahmeachse AA wirken, in zueinander entgegen gesetzten Richtungen entlang der Spindelaufnahmeachse AA jeweils einen Federweg bereitstellt.

Das erfindungsgemäße Antriebssystem S kann in einem Antriebsmotor M verwendet werden, bei dem in das Antriebssystem S eine Spindel 90 eingesetzt ist.

Eine Ausführungsform des erfindungsgemäßen Antriebsmotors M ist in den Figuren 3 bis 8 gezeigt. Zur Herstellung des Antriebsmotors M ist die an Hand der Figuren 1 und 2 gezeigte Ausführungsform des Antriebssystems S in einen Basiskörper B eingesetzt oder mit diesem integriert. Der Basiskörper B kann, wie dargestellt, derart geformt sein, dass das Antriebssystem S in dem Basiskörper B eingebettet oder gelagert ist. Auf dem Basiskörper B ist mittels einer Führungsvorrichtung D ein Schlitten C mit einem Tisch oder einer Schlitten-Anschlussvorrichtung C1 bewegbar gelagert. Die Führungsvorrichtung D ist derart ausgeführt, dass der Schlitten C eine lineare Bewegung relativ zu dem Basiskörper B ausführen kann. Bei der dargestellten Ausführungsform ist die Führungsvorrichtung D durch zwei in Bezug auf die Spindelaufnahmeachse AA seitlich angeordnete Führungsschienen-Kombinationen D1, D2 realisiert, wobei jeweils eine erste Führungsschienen-Komponente an dem Basiskörper B und eine zweite Führungsschienen-Komponente an dem Schlitten C angebracht oder ausgebildet ist und wobei beide Führungsschienen-Komponenten eine Stellbewegung des Schlittens C relativ zum Basiskörper B in Richtung der Spindelaufnahmeachse AA bereitstellt. Die Führungsvorrichtung D kann auch durch nur eine Führungsschienen-Kombination D1 oder D2 realisiert oder auf andere Weise realisiert sein. Alternativ oder zusätzlich kann eine oder beide der Führungsschienen-Kombinationen D1, D2 als Encoder oder Positions-Sensor ausgeführt sein, wie die in der Figur 5 für die zweite Führungsschienen-Komponente D2 der Fall ist.

Die Antriebseinheiten 1, 2 des Antriebsmotors M können jeweils durch ein entsprechendes elektrisches Ansteuerungssignal betätigt werden, mit dem eine Betätigungs-Bauteilstruktur 40 in jeder Antriebsvorrichtung des Antriebssystems S die Spindel 90 in Drehung versetzt werden kann oder in eine vorbestimmte Drehstellung gebracht werden kann. Ein Betätigungs-Bauteilstruktur 40 befindet sich dabei in Anlage mit der Spindel 90 oder einer entsprechenden Spindel-Kontaktstelle der Spindel 90 oder mit mehreren entsprechenden Spindel-Kontaktstellen der Spindel 90.

Bei der Ausführungsform des erfindungsgemäßen Antriebsmotor M nach den Figuren 3 bis 8 wird die eindeutige Umsetzung einer Drehbewegung der Spindel 90 in eine vorbestimmte Linearbewegung des Schlittens C durch eine Stellwand C2 mit einer Stellwand-Oberfläche C3, die der Spindel 90 zugewandt gelegen ist, und durch eine Vorspannvorrichtung E, die die Stellwand C2 und somit den Schlitten C in Richtung zum Basiskörper B und somit zur Spindel 90 hin erreicht. Der Basiskörper B weist eine Frontwand B1 auf, an der ein erstes Ende 93 der Spindel 90 gelegen ist. Der Schlitten C weist eine Stellwand C2 auf, die an einem zweiten Ende 94 der Spindel 90 gelegen ist. Dabei liegt das zweite Ende 94 der Spindel 90 an der Stellwand C2 an. Die Vorspannvorrichtung E ist einerseits insbesondere mit einem ersten Ende an dem Basiskörper B und andererseits insbesondere mit einem zweiten Ende an dem Schlitten C fixiert.

Die Vorspannvorrichtung E der Ausführungsform des erfindungsgemäßen Antriebsmotor M nach den Figuren 3 bis 8 ist durch zwei Spiralfedern E1, E2 und generell zwei Federn realisiert, die entlang zueinander und auch entlang der Spindelaufnahmeachse AA verlaufen und einerseits an der Frontwand B1 des Basiskörpers B und andererseits an der Stellwand C2 des Schlittens C fixiert sind. Generell kann die Vorspannvorrichtung E auch mit zumindest einem elastischen Bauteil realisiert sein, das mit einer Anziehungskraft den Basiskörper B und den Schlittens C relativ zueinander vorspannt. Dabei kann das elastische Bauteil an einer Stelle des Basiskörpers B und an einer Stelle des Schlittens C fixiert sein, wobei die Stellen in der Spindelaufnahmeachse AA voneinander beabstandet sind und eine vorbestimmte minimale Anziehungskraft bei einer eingefahrenen Stellung der Spindel 90 ausübt. Ein Vorteil dieser Anordnung ist, dass die Bewegung des Schlittens C auf dem Basiskörper B entkoppelt ist von der Bewegung der Spindel in den Antriebsvorrichtungen des Antriebssystems S. Insbesondere kann dadurch eine Verklemmung der Spindel in den Antriebsvorrichtungen vermieden werden.

Die Kopplung der Drehbewegung der Spindel 90 und einer Linearbewegung des Schlittens C auf eindeutige Weise kann auch andere Weise realisiert sein, beispielsweise durch eine auf die Spindel 90 geschraubte Spindelmutter, die relativ zur Spindel 90 drehfest mit dem Schlitten C verbunden ist.

Die Antriebseinheiten 1, 2 weisen jeweils eine Antriebsvorrichtung AV mit der Betätigungs-Bauteilstruktur 40 auf, die mit zumindest einem Betätigungsabschnitt oder einem Anlage-Oberflächenabschnitt an einer jeweiligen Spindel-Kontaktstelle 91 der Spindel 90, in der Spindelaufnahmeachse AA gesehen, anliegt. Die jeweilige Antriebsvorrichtung AV weist eine elektrische Anschlussvorrichtung auf, über die das elektrisches Ansteuerungssignal der Antriebsvorrichtung AV und somit der jeweiligen Antriebseinheit 1, 2 zugeführt werden kann. Die Antriebsvorrichtung AV setzt das Ansteuerungssignal in eine Betätigungsbewegung der Betätigungs-Bauteilstruktur 40 um. Die Betätigungsbewegung ist derart realisiert, dass diese eine Drehbewegung der Spindel 90 entsprechend des Ansteuerungssignals bewirkt.

Jede Antriebsvorrichtung AV weist auch zumindest eine Aktorvorrichtung auf, mit der zumindest ein Betätigungsabschnitt 58a, 58b oder einem Anlage-Oberflächenabschnitt, der jeweils eine Spindel-Kontaktstelle der Spindel 90 kontaktiert und im Umfangsrichtung der Spindel 90 bewegt werden kann, um die Spindel 90 in Drehung zu versetzen und anzutreiben.

Die Antriebsvorrichtung AV kann auch zwei oder mehr als zwei Aktorvorrichtungen aufweisen, die jeweils einen Betätigungsabschnitt 58a, 58b oder jeweils einen Anlage-Oberflächenabschnitt aufweisen, der jeweils eine Spindel-Kontaktstelle der Spindel 90 kontaktiert, wobei die Spindel-Kontaktstellen der Spindel 90 in Umfangsrichtung der Spindel 90 unterschiedliche Spindel-Kontaktstellen der Spindel 90 kontaktieren und bei entsprechender Ansteuerung der Aktorvorrichtungen in Umfangsrichtung der Spindel 90 bewegt werden, um die Spindel 90 in Drehung zu versetzen und anzutreiben.

Dabei können zwei von den zumindest zwei Aktorvorrichtungen gleichphasig oder gegenphasig angesteuert werden, um die Spindel 90 in Bewegung zu versetzen.

Insbesondere kann zum Antrieb der Spindel 90 jede der zumindest einen Antriebvorrichtungen derart angesteuert werden, dass zwischen dem jeweiligen Betätigungsabschnitt 58a, 58b oder dem jeweiligen Anlage-Oberflächenabschnitt und der zugehörigen Spindel-Kontaktstelle der Spindel 90 eine zeitliche Abfolge eines Schlupf-Zustand und eines Friktions-Zustands entsteht.

Die Genauigkeit der Positionierung des Schlittens C relativ zum Basiskörper B hängt zum Teil von der Genauigkeit ab, mit der zumindest ein entsprechender Betätigungsabschnitt 58 der Betätigungs-Bauteilstruktur 40 der jeweiligen Antriebsvorrichtung AV an einer jeweiligen Spindel-Kontaktstelle 91 der Spindel 90 in Bezug auf die Spindelaufnahmeachse AA anliegt.

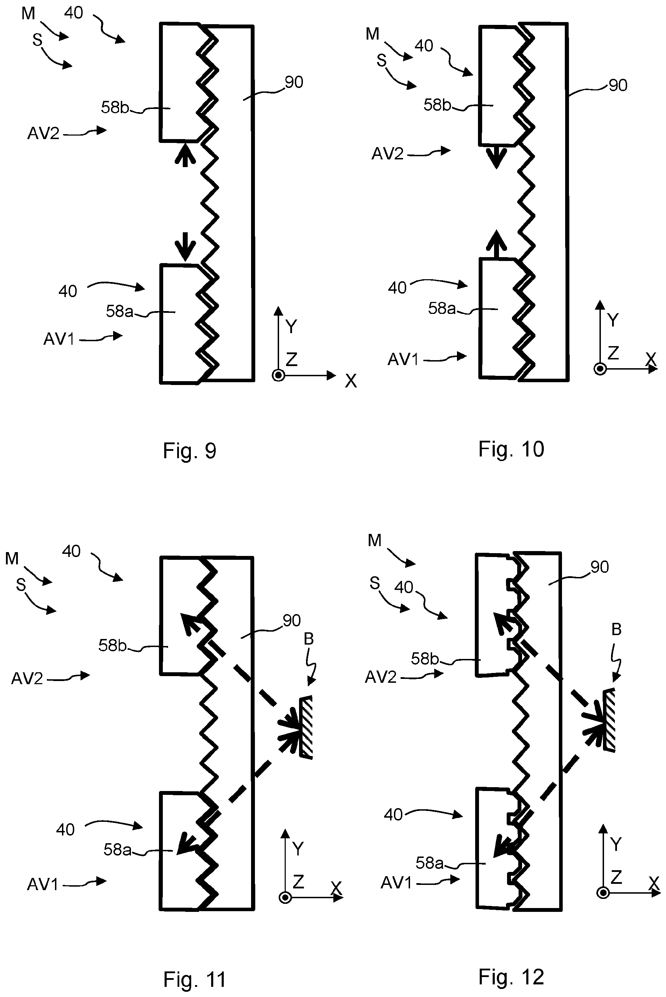

Zu diesem Zweck kann die Kopplungsvorrichtung K nach einer der erfindungsgemäß vorgesehenen Ausführungsformen gemäß der Darstellung der Figur 9 derart vorgesehen sein, dass diese eine von äußeren Kräften unbelastete Neutralstellung der Betätigungsabschnitte 58a, 58b jeweils zweier benachbarter Antriebsvorrichtungen AV einstellt, bei der der Abstand der Gewindeabschnitte der jeweiligen Betätigungsabschnitte 58a, 58b beim Anliegen an entsprechenden Spindel-Kontaktstellen der Spindel 90 um einen Bruchteil der Größe eines Gewindegangs des Spindelgewindes größer ist, als es einer genau passenden Übereinstimmung der Gewindeabschnitte der jeweiligen Betätigungsabschnitte 58 mit dem Gewindeabschnitt einer jeweiligen Spindel-Kontaktstelle 91 der Spindel 90, an der der Betätigungsabschnitt 58 jeweils anliegt, entsprechen würde. Dieser Zustand ist in der Figur 9 dargestellt. Dadurch ergibt sich eine Zentrierung der Gewindeabschnitte der jeweiligen Betätigungsabschnitte 58 mit dem Gewindeabschnitt einer jeweiligen Spindel-Kontaktstelle 91 der Spindel 90.

Dieser Effekt ist insbesondere vorteilhaft, wenn die Querschnittsform der Gewindegänge der Gewindeabschnitte der jeweiligen Betätigungsabschnitte 58 und der Gewindeabschnitte der jeweiligen Spindel-Kontaktstellen 91 der Spindel 90 dreieckförmig ist oder derart realisiert ist, dass deren entgegen gesetzt zueinander gelegenen Außenflächen zueinander schräg verlaufen.

In der Figur 10 ist der Effekt einer Kopplungsvorrichtung K gezeigt, bei der der Abstand der Gewindeabschnitte der jeweiligen Betätigungsabschnitte 58a, 58b beim Anliegen an entsprechenden Spindel-Kontaktstellen der Spindel 90 um einen Bruchteil der Größe eines Gewindegangs des Spindelgewindes kleiner ist.

Die Figuren 11 und 12 zeigen diesen Effekt einer Zentrierung der Gewindeabschnitte der jeweiligen Betätigungsabschnitte 58 mit dem Gewindeabschnitt einer jeweiligen Spindel-Kontaktstelle 91 der Spindel 90 anstatt durch eine zwischen den Antriebsvorrichtungen AV angeordneten Kopplungsvorrichtung K durch Kopplungsvorrichtungen K1, K2 die mit einem ersten Ende an einem Betätigungsabschnitt 58a, 58b der jeweiligen Antriebsvorrichtung AV und mit einem zweiten Ende an dem Basiskörper B befestigt ist.

In der Figur 12 ist eine weitere Querschnittsform der Gewindegänge der Betätigungsabschnitt 58 der jeweiligen Antriebsvorrichtung AV dargestellt, die eine Zentrierung der Gewindeabschnitte der jeweiligen Betätigungsabschnitte 58 mit dem Gewindeabschnitt einer jeweiligen Spindel-Kontaktstelle 91 der Spindel 90 bewirkt. Dabei ist die Querschnittsform der Gewindeabschnitte der jeweiligen Betätigungsabschnitte 58 trapezförmig ausgeführt, wobei die schräg zueinander verlaufenden Oberflächenabschnitte Bestandteil der Seitenflächen der Gewindegänge ist.

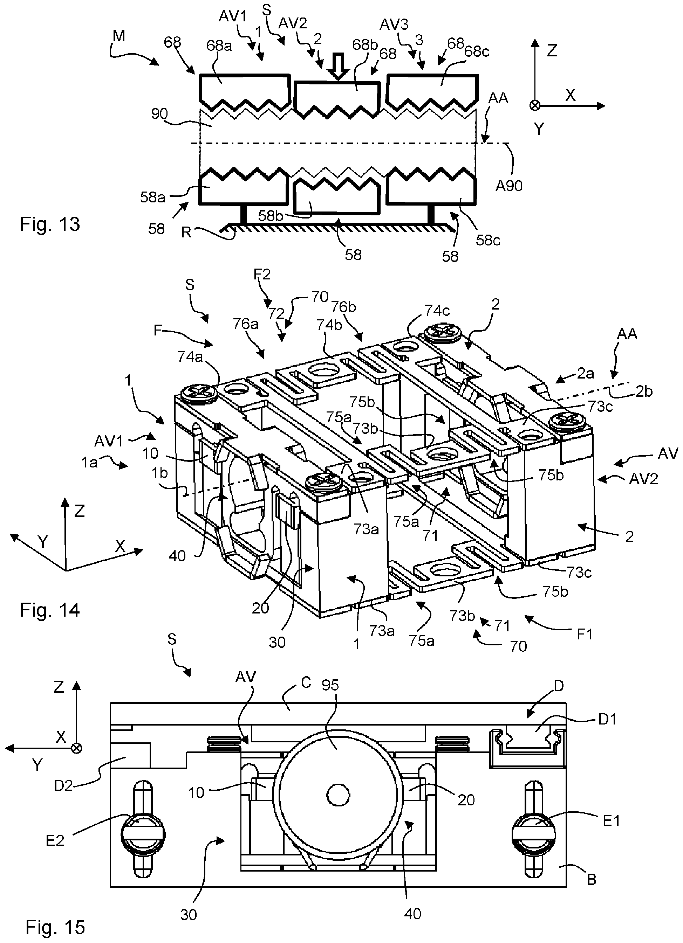

Die Figur 13 stellt anhand eines Antriebssystems mit drei Antriebseinheiten 1, 2, 3 eine weitere Option der Zentrierung der Gewindeabschnitte der jeweiligen Betätigungsabschnitte 58, 68 oder 58a, 58b, 58c bzw. 68a, 68b, 68c mit dem jeweiligen Gewindeabschnitt einer jeweiligen Spindel-Kontaktstelle 91 der Spindel 90 dar. Dabei werden die Betätigungsabschnitte 58a, 68a oder 58b, 68b oder 58c, 68c zumindest einer der Antriebseinheiten 1 oder 2 oder 3, quer zur Spindelaufnahmeachse AA von einer Richtung auf die Spindel 90 gedrückt. Diese Maßnahme kann auch mit nur zwei Antriebssystemen, z.B. mit dem Antriebssystem der Figuren 1 und 2, oder mit mehr als drei Antriebssystemen 1, 2, 3 realisiert sein. Das Drücken zumindest einer der Antriebseinheiten mit ihrem jeweiligen Betätigungsabschnitt 58 oder 68 in Richtung zur Spindel 90 kann durch eine Positionsfixierungs-Vorrichtung, also z.B. durch eine Spannvorrichtung oder durch einen Aktor oder durch eine Einstellvorrichtung, die mit der Rahmenvorrichtung R des Antriebssystems und dem jeweiligen Betätigungsabschnitt 58a, 58b, 58c bzw. 68a, 68b, 68c oder dem Basiskörper B und dem jeweiligen Betätigungsabschnitt 58a, 58b, 58c bzw. 68a, 68b, 68c zu der Verstellung der Position derselben relativ zueinander integriert ist, realisiert sein.

Die Figur 14 zeigt eine Ausführungsform des Antriebssystems S mit einer Kopplungsvorrichtung K, die im Gegensatz zu der an Hand der Figuren 2 und 3 beschriebenen Kopplungsvorrichtung K derart realisiert ist, dass diese drei Antriebseinheiten in der Spindelaufnahmeachse AA zueinander elastisch lagern kann. Die Figur 14 stellt ein Antriebssystem S mit zwei Antriebseinheiten 1, 2 dar.

Die Kopplungsvorrichtung K der Ausführungsform des Antriebssystems S der Figur 14 weist zu diesem Zweck Federvorrichtungen F1, F2 mit Kopplungseinheit-Verbindungsstücken 71, 72 auf, die drei in Richtung der Spindelaufnahmeachse AA hintereinander gelegene Befestigungsabschnitte 73a, 73b, 73c bzw. 74a, 74b, 74c aufweisen, die z.B. jeweils mittels einer Verbindungvorrichtung an einer Rahmenvorrichtung 30 der jeweiligen Antriebsvorrichtung AV, AV1, AV2 befestigt werden können, wobei bei der dargestellten Ausführungsform nur zwei Befestigungsabschnitte 73a, 73c und 74a, 74c jeweils mittels einer Verbindungvorrichtung an einer Rahmenvorrichtung 30 der jeweiligen Antriebsvorrichtung AV1 und AV2 befestigt sind.

Die Federvorrichtungen F1, F2 der Ausführungsform des Antriebssystems S nach der Figur 14 unterscheidet sich somit von den Federvorrichtungen F1, F2 der Ausführungsform des Antriebssystems S nach der Figur 1 in der Gestalt der Kopplungseinheit-Verbindungsstücke 71, 72, die jeweils drei Befestigungsabschnitte 73a, 73b, 73c bzw. 74a, 74b, 74c aufweisen, wobei jeweils zwei in Richtung der Spindelaufnahmeachse AA benachbarte Befestigungsabschnitte jeweils durch einen Federabschnitt 75a, 75b bzw. 76a, 76b miteinander verbunden sind. Bei der dargestellten Ausführungsform sind die Federabschnitte 75a, 75b bzw. 76a, 76b wie nach der Figur 1 aus drei u-förmigen Abschnitten geformt. Jedoch können die Federabschnitte 75a, 75b bzw. 76a, 76b auch in anderer insbesondere hierin genannter Weise realisiert sein.

Die Antriebsvorrichtung AV der zumindest einen Antriebseinheit 1, 2 kann in verschiedener Weise ausgeführt sein.

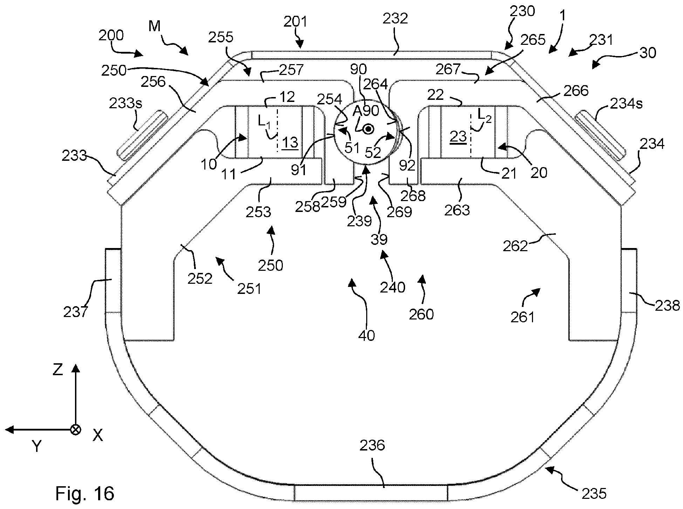

Eine Ausführungsform einer Antriebsvorrichtung AV, die in zumindest einer Antriebseinheit 1, 2 verwendbar ist, ist in der Figur 16 dargestellt und in dieser mit dem Bezugszeichen 201 bezeichnet, und weist eine Rahmenvorrichtung 230 mit einer ersten Spannvorrichtung 231, mit einer zweiten Spannvorrichtung 235, mit einem ersten Aktor-Stützteil 251 und mit einem zweiten Aktor-Stützteil 261 auf. Die Rahmenvorrichtung 230 der Antriebsvorrichtung AV ist in den Basiskörper B eines Antriebssystems S einsetzbar.

Die Antriebsvorrichtung 201 kann hierin generell einen Aktor 13 bzw. 23 aufweisen oder aus einem Aktor 13 bzw. 23 bestehen. Beispielsweise kann die Aktorvorrichtung 10, 20 den Aktor 13 bzw. 23 und eine zumindest teilweise vorhandene Außenbeschichtung des Aktors 13 bzw. 23 aufweisen. Dazu alternativ oder zusätzlich kann die Aktorvorrichtung 10, 20 den Aktor mit oder ohne zumindest teilweise Außenbeschichtung und ein Gehäuse, das den Aktor 13 bzw. 23 mit oder ohne zumindest teilweise Außenbeschichtung umgibt, aufweisen. Ein derartiges Gehäuse kann dabei derart ausführt sein, dass dieses den Aktor 13, 23 vorspannt oder zusätzlich vorspannt.

Der Aktor 13, 23 ist ein Piezoaktor, also ein Aktor 13, 23, der aus piezoelektrischem und insbesondere piezokeramischem Material besteht oder piezoelektrisches und insbesondere piezokeramisches Material aufweist. Aktoren aus einem anderen elektromechanischen Material sind ebenfalls denkbar. Generell ist jede Form von Aktoren denkbar, etwa auch hydraulisch oder pneumatisch betriebene Aktoren, oder Aktoren aus einem Formgedächtnismaterial.

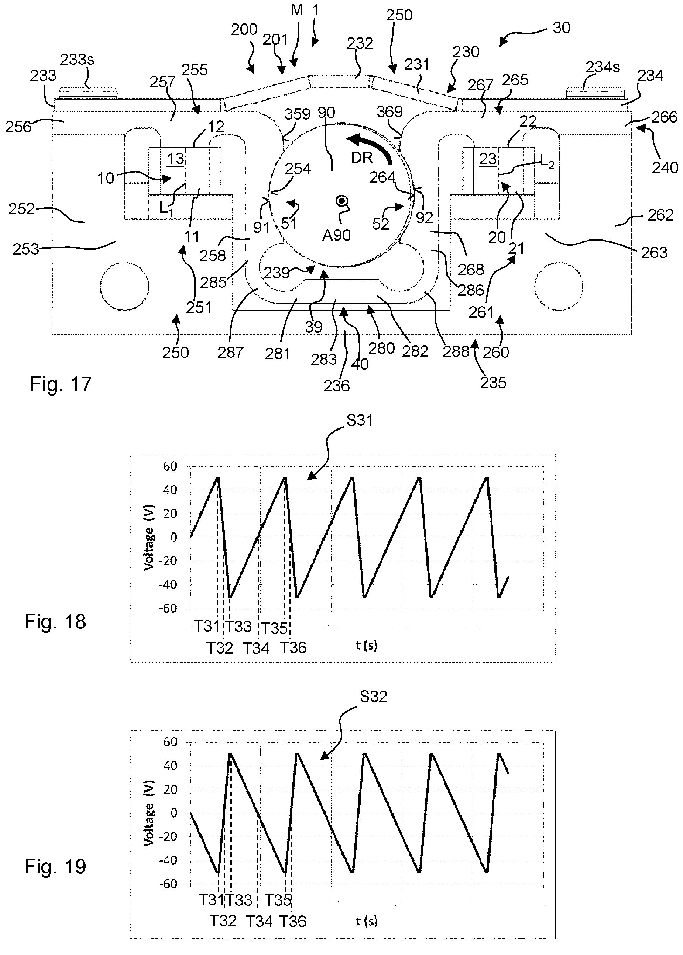

Die Antriebsvorrichtung AV, 201 ist zum Antreiben einer Spindel 90 mit einer Spindelachse A90 vorgesehen. Die Antriebsvorrichtung AV, 201 weist zur Aufnahme der Spindel 90 einen Spindelraum 39, der sich in einer Spindelraum-Längsachse erstreckt, auf. Hierzu weisen Ausführungsformen der Antriebsvorrichtung AV nach den Figuren 16 und 17 auf:
die erste Aktorvorrichtung 10 mit einem ersten Ende 11, mit einem zweiten Ende 12 und mit einem ersten Aktor 13, dessen Ausdehnung bei einer Ansteuerung entlang einer ersten Aktorachse L₁ reversibel veränderbar ist, wobei das erste Ende 11 und das zweite Ende 12 in Bezug auf die erste Aktorachse L₁ entgegengesetzt zueinander orientiert sind und wobei die erste Aktorachse L₁ quer zur Spindelachse A90 einer Spindel 90 verläuft,
die zweite Aktorvorrichtung 20 mit einem ersten Ende 21, mit einem zweiten Ende 22 und mit einem zweiten Aktor 23, dessen Ausdehnung bei einer elektrischen Ansteuerung entlang einer zweiten Aktorachse L₂ reversibel veränderbar ist, wobei das erste Ende 21 und das zweite Ende 22 in Bezug auf die erste Aktorachse L₁ entgegengesetzt zueinander orientiert sind und wobei die erste Aktorachse L₁ und die zweite Aktorachse L₂ entlang zueinander verlaufen,
die Betätigungs-Bauteilstruktur 40, 240 und
die Rahmenvorrichtung 30, die einen Spindelraum 39 zur Aufnahme der Spindel 90 bereitstellt.

Die Betätigungs-Bauteilstruktur 240 der Antriebsvorrichtung 201 weist auf: ein erstes Aktor-Funktionsteil 255 mit einem ersten Betätigungs-Oberflächenabschnitt 254 und ein zweites Aktor-Funktionsteil 265 mit einem zweiten Betätigungs-Oberflächenabschnitt 264, wobei die Betätigungs-Oberflächenabschnitte 254, 264 einander gegenüber liegend angeordnet sind und zusammen zwischen sich einen Spindelraum 239 ausbilden.

Zwischen dem ersten Aktor-Stützteil 251 und dem ersten Aktor-Funktionsteil 255 ist die erste Aktorvorrichtung 10 gelegen, wobei das erste Aktor-Stützteil 251 und das erste Aktor-Funktionsteil 255 jeweils an zueinander entgegen gesetzten Enden 11 bzw. 12 der ersten Aktorvorrichtung 10 direkt oder indirekt über ein Zwischen-Bauteil anliegen. Beispielsweise liegt das erste Ende 11 an dem ersten Aktor-Stützteil 251 und das zweite Ende 12 an dem ersten Aktor-Funktionsteil 255 an. Das erste Aktor-Stützteil 251, das erste Aktor-Funktionsteil 255 und die erste Aktorvorrichtung 10 bilden eine erste Betätigungsstruktur 250.

Zwischen dem zweiten Aktor-Stützteil 261 und dem zweiten Aktor-Funktionsteil 265 ist die zweite Aktorvorrichtung 20 gelegen, wobei das zweite Aktor-Stützteil 261 und das zweite Aktor-Funktionsteil 265 jeweils an zueinander entgegen gesetzten Enden 21 bzw. 22 der zweiten Aktorvorrichtung 20 direkt oder indirekt über ein Zwischen-Bauteil anliegen. Beispielsweise liegt das erste Ende 21 an dem zweiten Aktor-Stützteil 261 und das zweite Ende 22 an dem zweiten Aktor-Funktionsteil 265 an. Das zweite Aktor-Stützteil 261, das zweite Aktor-Funktionsteil 265 und die zweite Aktorvorrichtung 20 bilden eine zweite Betätigungsstruktur 260.

Die Betätigungs-Oberflächenabschnitte 254, 264 können die Merkmale einer hierin beschriebenen Variante eines Betätigungs-Oberflächenabschnitts aufweisen und insbesondere vom Spindelraum 239 her gesehen konkav gekrümmt sein. Die Krümmungen sind in der bezüglich der Spindelachse A90 definierten Umfangsrichtung ausgebildet und geeignet, dass diese jeweils an der Spindeloberfläche 90a flächig anliegen.

Das erste Aktor-Stützteil 251 weist einen ersten Basisabschnitt 252 und einen daran anschließendes ersten Stützabschnitt 253 auf. Das erste Aktor-Funktionsteil 255 weist einen ersten Befestigungsabschnitt 256 und einen ersten Betätigungsabschnitt 258 und einen diese verbindenden ersten Verbindungsabschnitt 257 auf. Der erste Stützabschnitt 253 liegt am ersten Ende 11 der ersten Aktorvorrichtung 10 und der erste Verbindungsabschnitt 257 liegt am zweiten Ende 12 der ersten Aktorvorrichtung 10 an. Der erste Basisabschnitt 252 und der erste Befestigungsabschnitt 256 sind mittels eines Verbindungselements 233s an einem ersten Endabschnitt 233 der Spannvorrichtung 231 befestigt. Dabei können das erste Aktor-Stützteil 251 und das erste Aktor-Funktionsteil 255 derart gestaltet sein, dass der erste Stützabschnitt 253 einen Druck auf das erste Ende 11 und der erste Verbindungsabschnitt 257 einen Druck auf das zweite Ende 12 ausübt, um die erste Aktorvorrichtung 10 von seinen beiden Enden 11, 12 her zusammenzudrücken. In einer Variante der Betätigungs-Bauteilstruktur 240 kann der erste Befestigungsabschnitt 258 entfallen und der erste Verbindungsabschnitt 257 an dem zweiten Ende 12 befestigt sein. Von dem ersten Verbindungsabschnitt 257 aus erstreckt sich ein erster Betätigungsabschnitt 258 entlang der ersten Aktorachse L₁ . Der erste Betätigungsabschnitt 258 weist einen Oberflächenabschnitt 259 auf, der dem Spindelraum 239 zugewandt gelegen ist. In der Betätigungsoberfläche 259 ist der erste Betätigungs-Oberflächenabschnitt 254 gelegen. Dieser kann generell Merkmale aufweisen, die hierin anhand anderer Betätigungs-Oberflächenabschnitte beschrieben sind, und insbesondere gegenüber einem Oberflächenabschnitt, der die Betätigungsoberfläche 259 umgibt, als Friktions-Oberfläche realisiert sein.

In analoger Weise weist das zweite Aktor-Stützteil 261 einen zweiten Basisabschnitt 262 und einen daran anschließendes zweiten Stützabschnitt 263 auf. Das zweite Aktor-Funktionsteil 265 weist einen zweiten Befestigungsabschnitt 266 und einen zweiten Betätigungsabschnitt 268 und einen diese verbindenden zweiten Verbindungsabschnitt 267 auf. Der zweite Stützabschnitt 263 liegt am ersten Ende 21 und der zweite Verbindungsabschnitt 267 liegt am zweiten Ende 22 der zweiten Aktorvorrichtung 20 an. Der zweite Basisabschnitt 262 und der zweite Befestigungsabschnitt 266 sind mittels eines Verbindungselements 234s an dem zweiten Endabschnitt 234 der Spannvorrichtung 231 befestigt. Dabei können das zweite Aktor-Stützteil 261 und das zweite Aktor-Funktionsteil 265 derart gestaltet sein, dass der zweite Stützabschnitt 263 einen Druck auf das erste Ende 21 und der zweite Verbindungsabschnitt 267 einen Druck auf das zweite Ende 12 ausübt, um die zweite Aktorvorrichtung 20 von seinen beiden Enden 21, 22 her zusammenzudrücken.

In einer Variante der Betätigungs-Bauteilstruktur 240 kann der zweite Befestigungsabschnitt 266 entfallen und der zweite Verbindungsabschnitt 267 an dem zweiten Ende 22 befestigt sein. Von dem zweiten Verbindungsabschnitt 267 aus erstreckt sich ein zweiter Betätigungsabschnitt 268 entlang der zweiten Aktorachse L₂ . Der zweite Betätigungsabschnitt 268 weist einen Oberflächenabschnitt 269 auf, der dem Spindelraum 239 zugewandt gelegen ist. In der Betätigungsoberfläche 269 ist der zweite Betätigungs-Oberflächenabschnitt 264 gelegen. Dieser kann generell Merkmale aufweisen, die hierin anhand anderer Betätigungs-Oberflächenabschnitte beschrieben sind, und insbesondere gegenüber einem Oberflächenabschnitt, der die Betätigungsoberfläche 269 umgibt, als Friktions-Oberfläche realisiert sein.

Die Oberflächenabschnitte 259, 269 liegen einander zugewandt und einander gegenüber. Ebenso liegen die Betätigungs-Oberflächenabschnitte 254, 264 einander zugewandt und einander gegenüber.

Die erste Spannvorrichtung 231 spannt den ersten Betätigungsabschnitt 258 und den zweiten Betätigungsabschnitt 268 in federnder Weise von zwei einander gegenüber liegenden Seiten zum Spindelraum 239 bzw. gegen die Spindel 90 hin vor.

In ähnlicher Weise verbindet die zweite Spannvorrichtung 235 den ersten Basisabschnitt 252 des ersten Aktor-Stützteils 251 und den zweiten Basisabschnitt 262 des zweiten Aktor-Stützteils 261.

Die Antriebsvorrichtung AV, 201 kann auch ohne zweite Spannvorrichtung 235 realisiert sein. Auch kann die Rahmenvorrichtung 230 in anderer Weise ausgeführt sein. Die Rahmenvorrichtung 230 kann auch entfallen und der erste Befestigungsabschnitt 256 und der zweite Befestigungsabschnitt 257 direkt aneinander in Bezug auf die Spindelaufnahmeachse einander gegenüber liegenden Abschnitten der Basiskörper-Rahmenvorrichtung R befestigt sein.

Die Integration oder das Einsetzen der Antriebsvorrichtung AV, 201 in die Basiskörper-Rahmenvorrichtung R kann auch auf andere Weise erfolgen, z.B. mittels der Verbindungselemente 233s, 234s an in Bezug auf die Spindelaufnahmeachse einander gegenüber liegenden Abschnitten der Basiskörper-Rahmenvorrichtung R.

Bei jeder Ausführungsform der erfindungsgemäßen Antriebsvorrichtung AV, 201 mit allen anderen ansonsten hierin beschriebenen Merkmalen und gegebenenfalls alternativen Merkmalen können die erste Spannvorrichtung 231 und die zweite Spannvorrichtung 235 aneinander befestigt sein und auf diese Weise eine umlaufende Rahmenvorrichtung 230 bilden. Dabei kann vorgesehen sein, dass das erste Aktor-Stützteil 251 und das erste Aktor-Funktionsteil 255 voneinander beabstandet oder zusammen an zumindest einer der Spannvorrichtungen 231, 235 befestigt ist. Auch kann dabei kann vorgesehen sein, dass das zweite Aktor-Stützteil 261 und das zweite Aktor-Funktionsteil 265 voneinander beabstandet oder zusammen an zumindest einer der Spannvorrichtungen 231, 235 befestigt ist.

Die Rahmenvorrichtung 230 mit der ersten Spannvorrichtung 235 und der zweiten Spannvorrichtung 235 ist bei den hierin beschriebenen Ausführungsformen der Antriebsvorrichtung 200 somit als strukturell durchgehendes Bauteil ausgeführt, das den Spindelraum 239, die erste Aktorvorrichtung 10 und die zweite Aktorvorrichtung 20 in der durch die Spindelraum-Längsachse definierten Umfangsrichtung vollständig umgibt.

Dabei kann insbesondere vorteilhaft sein, wenn der erste Basisabschnitt 252 und der erste Aktor-Stützabschnitt 253 sowie der zweite Basisabschnitt 262 und der zweite Aktor-Stützabschnitt 263 jeweils einen Hebel ausbilden. Dadurch bewirken die von der zweiten Spannvorrichtung 235 ausgeübten Kräfte,
(D1) dass der erste Aktor-Stützabschnitt 253 die erste Aktorvorrichtung 10 gegen das erste Aktor-Funktionsteil 255 oder den ersten Verbindungsabschnitt 257 drückt und dadurch die erste Aktorvorrichtung 10 sowie das erste Aktor-Funktionsteil 255 mit dem ersten Betätigungsabschnitt 258 vorspannt;
(D2) dass der zweite Aktor-Stützabschnitt 263 die zweite Aktorvorrichtung 20 gegen das zweite Aktor-Funktionsteil 265 oder den zweiten Verbindungsabschnitt 267 drückt und dadurch die zweite Aktorvorrichtung 20 sowie das zweite Aktor-Funktionsteil 265 mit dem zweiten Betätigungsabschnitt 268 vorspannt.

Bei der Ausführungsform der erfindungsgemäßen Antriebsvorrichtung 1, 201 nach der Figur 16 erstreckt sich der Verbindungsabschnitt 257 des ersten Aktor-Funktionsteils 255, das am zweiten Ende 12 der ersten Aktorvorrichtung 10 anliegt, seitlich zum Spindelraum 239 hin und von dem ersten Befestigungsabschnitt 256 des ersten Aktor-Stützteils 251 weg. Auch erstreckt sich bei der Ausführungsform der Figur 10 der erste Betätigungsabschnitt 258 von dem Verbindungsabschnitt 257 aus entlang der ersten Aktorachse L₁ und der erste Betätigungs-Oberflächenabschnitt 254 zumindest abschnittsweise entlang der ersten Aktorachse L₁. Weiterhin erstreckt sich der Verbindungsabschnitt 267 des zweiten Aktor-Funktionsteils 265, das am zweiten Ende 12 der zweiten Aktorvorrichtung 20 anliegt, seitlich zum Spindelraum 239 hin und von dem zweiten Befestigungsabschnitt 266 des zweiten Aktor-Stützteils 261 weg. Auch erstreckt sich bei der Ausführungsform der Figur 10 der zweite Betätigungsabschnitt 268 von dem Verbindungsabschnitt 267 aus entlang der zweiten Aktorachse L₂ und der zweite Betätigungs-Oberflächenabschnitt 264 zumindest abschnittsweise entlang der zweiten Aktorachse L₂. Somit bilden der erste und der zweite Betätigungs-Oberflächenabschnitt 254, 264 in Richtung der Spindelraum-Längsachse gesehen voneinander verschieden gelegene Oberflächenbereiche. Ebenso definieren die Flächennormalen-Richtungen von Punkten zumindest eines Bereichs von Betätigungs-Oberflächenabschnitten 254, 264 einen Winkelbereich, der die Richtung einer Vertikalen der ersten Aktorachse L₁ oder der zweiten Aktorachse L₂ oder beider Aktorachsen L₁ , L₂ enthält.

Bei der Ausführungsform der der erfindungsgemäßen Antriebsvorrichtung 1, 201 nach der Figur 16 ist der erste Betätigungsabschnitt 258 und der zweite Betätigungsabschnitt 268 jeweils als ein freies Ende des ersten Befestigungsabschnitts 256 bzw. des zweiten Befestigungsabschnitt 266 ausgebildet, das nur an dem jeweiligen Verbindungsabschnitt 257 bzw. 267 bewegungsfest gelagert ist oder mit dem jeweiligen Verbindungsabschnitt 257 bzw. 267 verbunden ist. Dabei kann der erste Befestigungsabschnitts 256 und der zweite Befestigungsabschnitt 266 insbesondere am jeweiligen Verbindungsabschnitt 257 bzw. 267 federnd gelagert sein. Durch die vorgenannten Merkmale (D1), (D2) wird somit der erste Betätigungsabschnitt 258 und der zweite Betätigungsabschnitt 268 jeweils federnd gegen die Spindel 90 gedrückt, um das Antreiben der Spindel 90 zu optimieren.

Alternativ zu diesen Ausführungsformen kann die erfindungsgemäße Antriebsvorrichtung 1, 201 auch derart realisiert sein, dass die Betätigungsabschnitte 258, 268 an dem jeweiligen Aktor-Stützteil 251 bzw. 261 gelagert sein, so dass der jeweilige Betätigungs-Oberflächenabschnitt 254, 264, je nach der Gestaltung der Betätigungsabschnitte 258 und 268, weniger oder nicht federnd gegen die Spindel 90 drückt.

Die zweite Spannvorrichtung 235 kann, wie in der Figur 16 dargestellt, in dem Bereich zwischen dem ersten Endabschnitt 237 und dem zweiten Endabschnitt 238 gekrümmt oder im Wesentlichen gekrümmt gestaltet sein. Insbesondere kann der der Verbindungsabschnitt 236 gekrümmt oder im Wesentlichen gekrümmt gestaltet sein. Davon unabhängig kann die zweite Spannvorrichtung 235 insgesamt plattenförmig oder bügelförmig gestaltet sein. Insbesondere weist der Verbindungsabschnitt 236 in dem Bereich, der nicht an dem ersten Endabschnitt 237 und dem zweiten Endabschnitt 238 anliegt, eine Krümmung auf. Diese kann, wie in der Figur 10 gezeigt, eine einheitliche Krümmung sein, so dass diese also keinen Wendpunkt aufweist. Die Krümmung ist gemäß Figur 10 von dem Spindelraum 239 aus gesehen konkav gekrümmt. Alternativ dazu kann der Verbindungsabschnitt 236 auch konvex gekrümmt sein. Auf diese Weise spannt der Verbindungsabschnitt 236 den ersten Betätigungsabschnitt 258 und den zweiten Betätigungsabschnitt 268 in federnder Weise von zwei einander gegenüber liegenden Seiten zum Spindelraum 239 bzw. gegen die Spindel 90 hin vor.

Eine Betätigung zumindest einer der Aktorvorrichtungen 10, 20 des Antriebsmotors 200 nach der Figur 16 bewirkt, wie bei den voranstehend beschriebenen Ausführungsformen, eine Relativbewegung des ersten Betätigungs-Oberflächenabschnitts 254 entlang der ersten Aktorachse L₁ oder des zweiten Betätigungs-Oberflächenabschnitts 264 entlang der zweiten Aktorachse L₂ oder beide dieser Relativbewegungen. Aufgrund des Kontakts der Betätigungs-Oberflächenabschnitte 254, 264 mit der Spindeloberfläche 90a treibt zumindest eine der beiden Betätigungs-Oberflächenabschnitte 254, 264 die Spindel 90 in einer vorbestimmten und entsprechend der Ansteuerungssignale gesteuerten Drehrichtung an. In dem Fall, in dem nur eine der Aktorvorrichtungen 10, 20 betätigt wird, treibt nur derjenige Betätigungs-Oberflächenabschnitt 254 oder 264 die Spindel 90 an, die mit der jeweils betätigten Aktorvorrichtungen 10 bzw. 20 funktional in Verbindung steht. Bei gleichzeitig gegensinniger Betätigung der Aktorvorrichtungen 10, 20 treiben die Betätigungs-Oberflächenabschnitte 254, 264 die Spindel 90 in einem Zeitabschnitt die 90 in derselben Drehrichtung an, entsprechend der Umfangsrichtung, in der sich die Betätigungs-Oberflächenabschnitte 254 und 264 die erste Spindel-Kontaktstelle 91 und die zweite Spindel-Kontaktstelle 92 bewegen.

Die Figuren 14 und 15 sowie 17 zeigen eine erfindungsgemäße Variante der hierin anhand der Figur 16 beschriebenen Ausführungsformen des erfindungsgemäßen Antriebsmotors M bzw. 200. Die in der Figur 17 dargestellte Ausführungsform des erfindungsgemäßen Antriebsmotors 200 zeigt die Merkmale, die anhand der Figur 16 beschrieben sind. Da die Merkmale dieser Ausführungsform dieselbe oder ähnliche Funktionen wie die Merkmale des in der Figur 14 dargestellten Antriebsmotors 200 aufweisen, sind für die jeweils einander entsprechenden Merkmale in der Figur 17 dieselben Bezugszeichen wie in der Figur 16 eingesetzt.

Im Unterschied zu den Ausführungsformen des erfindungsgemäßen Antriebsmotors 200, der in der Figur 16 gezeigt ist, weist der Antriebsmotor 200 der Figur 17 Verbindungsabschnitte 232 und 236 auf, die von dem Spindelraum 239 aus gesehen konvex gekrümmt ist.

Zudem sind im Unterschied zu der Ausführungsform des erfindungsgemäßen Antriebsmotors M bzw. 200, die in der Figur 16 gezeigt ist, bei der in der Figur 17 gezeigten Ausführungsform des erfindungsgemäßen Antriebsmotors M bzw. 200 die ersten Aktor-Stützteile 251, 261 jeweils blockartig gebildet.

Die Antriebsvorrichtungen der Figuren 16 und 17 sind derart realisiert, dass eine relativ kleine Verformung des zweiten Endes 22 des zweiten Aktors 23 eine größere Verschiebung oder Wegamplitude des zweiten Betätigungs-Oberflächenabschnitts 264 bewirkt, die insbesondere um den Faktor 1,1 oder um den Faktor 1,2 größer als die jeweils zugehörige Bewegung des zweiten Endes 22 des zweiten Aktors 23 sein kann. Dies gilt in analoger Weise auch für die Verformung des zweiten Endes 12 des ersten Aktors 13 und der Verschiebung oder Wegamplitude des ersten Betätigungs-Oberflächenabschnitts 254.

Die Betätigungs-Bauteilstruktur 240 ist einstückig ausgeführt und weist hierzu einen Koppelabschnitt 280 auf. Alternativ dazu kann die Betätigungs-Bauteilstruktur 240 auch einstückig ausgeführt sein, also ohne den Koppelabschnitt 280. Der Koppelabschnitt 280 weist einen ersten Endabschnitt 281, einen zweiten Endabschnitt 282 und einen Verbindungsabschnitt 283, der den ersten Endabschnitt 281 und den zweiten Endabschnitt 282 miteinander verbindet, auf. Der erste Endabschnitt 281 ist mit einem, vom ersten Verbindungsabschnitt 257 oder, von der ersten Spannvorrichtung 231 aus gesehen, äußeren Endabschnitt 285 des ersten Betätigungsabschnitts 258 über einen ersten Übergangsabschnitt 287 insbesondere formsteif oder federnd verbunden. Der zweite Endabschnitt 282 ist mit einem, vom zweiten Verbindungsabschnitt 267 oder, von der ersten Spannvorrichtung 231 aus gesehen, äußeren Endabschnitt 286 des zweiten Betätigungsabschnitts 268 über einen zweiten Übergangsabschnitt 288 insbesondere formsteif verbunden. Auf diese Weise ist die Spindel 90 zwischen dem Verbindungsabschnitt 283 und der ersten Spannvorrichtung 231 gelegen.

Wie in der Figur 17 gezeigt, sind die Querschnitte der Übergangsabschnitte 287, 288 in der Spindelraum-Längsachse bzw. der Spindelachse A90 gesehen gegenüber den Betätigungsabschnitten 258, 268 sowie deren Endabschnitten 285, 286 und gegenüber dem Verbindungsabschnitt 283 des Koppelabschnitts 280 verringert. Dies bewirkt bei der in der Figur 19 dargestellten Ausführungsform des Antriebsmotors 200 eine federnde Verbindung des Verbindungsabschnitts 283 jeweils mit dem ersten Betätigungsabschnitts 258 und dem zweiten Betätigungsabschnitts 268.

Dabei kann, wie in der Figur 17 dargestellt, die zweite Spannvorrichtung 236 formsteif ausgebildet sein, so dass diese sich bei Betätigung der Aktoren 13, 23 nicht oder nur unwesentlich verformt. In der Figur 22 ist gezeigt, dass dabei eine federnde Vorspannung der Betätigungsabschnitte 258, 268 gegen die Spindel 90 durch die einteilige Ausführung der Betätigungs-Bauteilstruktur 240 erreicht wird. Somit wird auch erreicht, dass die Anordnung aus der Rahmenvorrichtung 230 und der Betätigungs-Bauteilstruktur 240 die erste Aktorvorrichtung 10 entlang der ersten Aktorachse L₁ und die zweite Aktorvorrichtung 20 entlang der zweiten Aktorachse L₂ federnd vorspannen und dabei eine federnde Vorspannung der Betätigungs-Bauteilstruktur 240 in Richtung zum Spindelraum 239 bereitstellen.

In den Figuren 18 und 19 sind beispielartig Spannungssignale S31, S32 gezeigt, mit denen Ausführungsformen des Antriebsmotors 200, die anhand der Figuren 16 oder 17 beschriebenen sind, betätigt werden kann und Stellbewegungen der Spindel 90 ausgeführt werden können. Die darin angegebenen Zeitpunkte T31, T32, T33, T34, T35, T36 sind zur Veranschaulichung eingetragen.

Generell ist das erste Spannungssignal S31 und das zweite Spannungssignal S32 jeweils periodisch und weist zwischen zwei relativen Extrema, die nebeneinander benachbart sind, einen Abschnitt mit einer betragsmäßig größeren Steigung auf als die betragsmäßig größte Steigung, die zwischen zwei relativen Extrema, die nebeneinander benachbart sind und den vorgenannten Extrema zeitlich voranstehen oder nachfolgen, auftritt. Dabei können die jeweiligen Paare von relativen Extrema zeitlich direkt benachbart sein. Allerdings müssen nicht die jeweiligen Paare von relativen Extrema zeitlich direkt benachbart sein, sondern es können auch mehrere Paare von Extrema mit betragsmäßig größerer Steigung, vorzugsweise mit demselben Steigungs-Vorzeichen, aber auch mit unterschiedlichen Steigungs-Vorzeichen, direkt aufeinander folgen, vor oder nach einem Paar von relativen Extrema mit betragsmäßig geringerer Steigung vorhanden sein.

Im Zusammenhang mit den Signalformen des ersten Spannungssignals S11 und des zweiten Spannungssignals S12 wird hierin unter "betragsmäßig größerer Steigung" eine Steigung verstanden, bei der zwischen dem ersten Betätigungs-Oberflächenabschnitt 254 und der mit diesem in Kontakt befindlichen ersten Spindel-Kontaktstelle 91 sowie zwischen dem zweiten Betätigungs-Oberflächenabschnitt 264 und der mit diesem in Kontakt befindlichen zweiten Spindel-Kontaktstelle 92 ein zumindest zeitweise Rutschen auftritt, da die Bewegung der Betätigungs-Oberflächenabschnitte 254, 264 aufgrund der jeweils gegebenen Reibungskoeffizienten relativ zur jeweiligen Spindel-Kontaktstelle 91, 92 die Trägheit der Spindel 90 nicht überwindet oder weniger überwindet, als die Bewegungen der Betätigungs-Oberflächenabschnitte 254, 264 in einem Abschnitt mit "betragsmäßig geringerer Steigung".

Zur Verursachung einer Stellbewegung der Spindel 90 in der Umdrehungsrichtung DR (Figur 17) ist die Steigung des ersten Spannungssignals S31 zwischen einem ersten relativen Minimum zu einem Zeitpunkt T31 und einem als nächstes zeitlich nachfolgenden relativen Maximum zu einem Zeitpunkt T33 betragsmäßig größer als die Steigung des ersten Spannungssignals S31 zwischen diesem relativen Maximum zu dem Zeitpunkt T33 und dem auf dieses als nächstes zeitlich nachfolgenden relativen Minimum zu dem Zeitpunkt T35. Dabei kann die Steigung zwischen den Zeitpunkten T31 und T33 um mindestens den Faktor 1,05 größer sein als zwischen den Zeitpunkten T33 und T35.

Gleichzeitig ist zur Verursachung einer Stellbewegung der Spindel 90 in der Umdrehungsrichtung DR (Figur 17) die Steigung des zweiten Spannungssignals S32 zwischen einem ersten relativen Maximum zu dem Zeitpunkt T31 und einem als nächstes zeitlich nachfolgenden relativen Minimum zu dem Zeitpunkt T33 betragsmäßig größer als die Steigung des zweiten Spannungssignals S32 zwischen diesem relativen Minimum zu dem Zeitpunkt T33 und dem auf dieses als nächstes zeitlich nachfolgenden relativen Maximum zu dem Zeitpunkt T33.

Die Figuren 20 und 21 zeigen eine Ausführungsform des Antriebssystems S, das zwei in der Spindelaufnahmeachse AA hintereinander angeordnete Antriebssysteme nach der Figur 14 aufweist, die auf dem Basiskörper B montiert sind. Die mittleren Befestigungsabschnitte 73b bzw. 74b der Federvorrichtungen F1, F2 werden dabei zur Verbindung derselben mit dem Basiskörper B verwendet. Alternativ könnten diese auch zur Befestigung einer Antriebsvorrichtung AV verwendet werden.

Die Figur 22 zeigt eine Ausführungsform des Antriebssystems S mit einer Kopplungsvorrichtung K, die wie die anhand der Figur 14 beschriebenen Kopplungsvorrichtung K derart realisiert ist, dass diese drei Antriebseinheiten 1, 2, 3 in der Spindelaufnahmeachse AA zueinander elastisch lagern kann. Die Kopplungsvorrichtung K ist wie die Kopplungsvorrichtung K der Figur 14 realisiert, wobei nach der Figur 22 die zwei Kopplungseinheit-Verbindungsstücke 71, 72 als separate Bauteile realisiert sind. Die Kopplungsvorrichtung K weist zwei Federabschnitte 75 bzw. 76 auf.

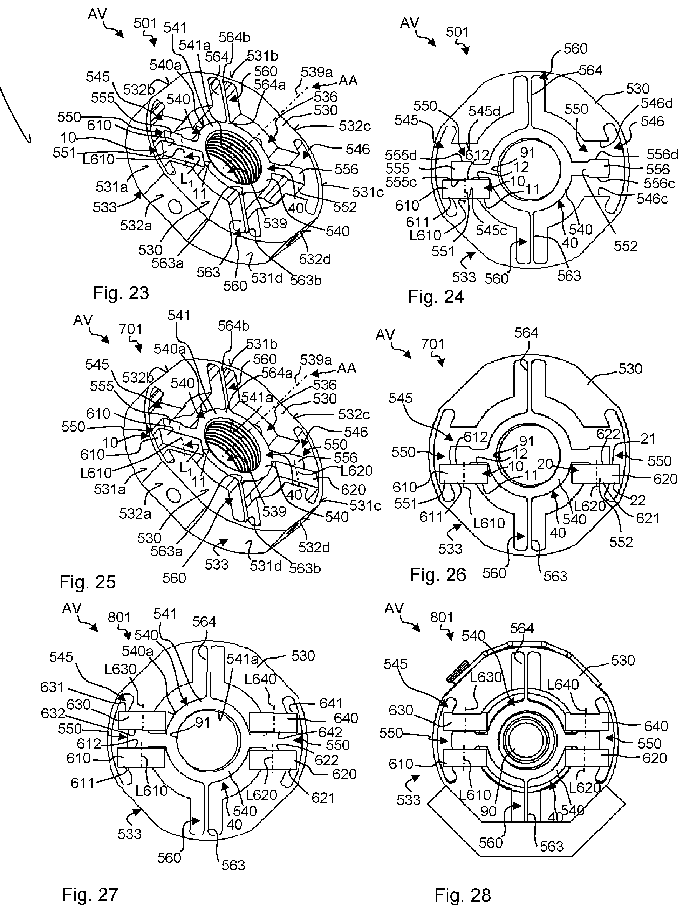

Im Unterschied zu dem Ausführungsform des Antriebssystems S nach der Figur 14 weistdie Ausführungsform des Antriebssystems S nach der Figur 22 drei Antriebsvorrichtungen AV1, AV2, AV3 auf, die nach einer der Ausführungsformen der Figuren 23 bis 28 realisiert sind. Die Kopplungsvorrichtung K weist zwei Federabschnitte 75, 76 auf. Jeder Federabschnitt 75, 76 weist zwei Feder-Teilabschnitte 75a, 75b bzw. 76a, 76b auf, von denen jeder Teilabschnitt zwischen jeweils zwei Antriebsvorrichtungen gelegen ist. Die Federabschnitte 75, 76 können, wie es in der Figur 22 gezeigt ist, einstückig realisiert sein, wobei die drei Antriebsvorrichtungen AV1, AV2, AV3 an Stellen, die über die entlang der Spindelaufnahmeachse AA verlaufenden Längsrichtung des jeweiligen Federabschnitts 75 bzw. 76 verteilt und insbesondere gleichmäßig verteilt an dem Federabschnitt 75 bzw. 76 befestigt sind. Die Kopplungsvorrichtung K weist somit keinen Brückenabschnitt auf, da dessen Verbindungsfunktion von den Antriebsvorrichtungen AV1, AV2, AV3 wahrgenommen wird.

Die Ausführungsform des Antriebssystems S nach der Figur 22 kann eine oder zwei weitere Federabschnitte aufweisen, die baugleich zu den Federabschnitte 75, 76 realisiert sind und die jeweils in Bezug auf die Achse AA punktsymmetrisch zu den Federabschnitten 75 bzw. 76 gelegen sind.

Die Antriebsvorrichtungen AV1, AV2, AV3 sind in der Lagervorrichtung 5 gelagert.

Die Figur 22 zeigt eine Ausführungsform des erfindungsgemäßen Antriebssystems S, bei der drei Antriebsvorrichtungen AV, AV1, AV2, AV3 integriert sind, die in den Figuren 23 bis 28 dargestellt sind. In jeder der Ausführungsformen der Antriebsvorrichtung, die nachfolgend anhand der Figuren 23 bis 28 beschrieben sind, ist zumindest eine Aktorvorrichtung integriert. Jede hierzu jeweils vorgesehene Aktorvorrichtung ist nach einer der Ausführungsformen der Aktorvorichtungen gebildet, die hierin voranstehend beschrieben und denen hierin das Bezugszeichen "10" oder das Bezugszeichen "20" zugeordnet sind.

Auch kann jede Ausführungsformen der Antriebsvorrichtung, die nachfolgend anhand der Figuren 23 bis 28 beschrieben sind, eine Ansteuerungsvorrichtung aufweisen, die elektrisch mit jeder der jeweiligen Antriebsvorrichtung verbunden ist und die in einem aktivierten Zustand an die jeweilige Antriebsvorrichtung ein periodisches Antriebssignal sendet.

Der Antriebsvorrichtung nach der Figur 23, der im Folgenden das Bezugszeichen 501 zugeordnet ist, weist eine Rahmenvorrichtung 30 auf, die zusammen mit zumindest einer weiteren Antriebsvorrichtung ein Antriebssystems S bilden kann. In jeder dieser Antriebsvorrichtungen ist zumindest eine Aktorvorrichtung integriert.

Die Rahmenvorrichtung 30 ist als Antriebsgehäuse 530 mit einer Gehäusewand 533, die einen von dieser umgebene und in dieser gebildeten Gehäuse-Innenraum 536 freigibt, realisiert. Die Rahmenvorrichtung 30 kann auch auf andere Weise realisiert sein. In dem Gehäuse-Innenraum 536 ist eine erfindungsgemäß vorgesehene Betätigungs-Bauteilstruktur 40 angeordnet, der in der Ausführungsform der Antriebsvorrichtung 501 der Figur 23 das Bezugszeichen 540 zugeordnet ist. Die Betätigungs-Bauteilstruktur 540 weist auf:
- eine Betätigungs-Spindelmutter 541, deren Inneres einen Spindelraum 539 mit einer Spindelaufnahmeachse AA, die zentral durch diesen hindurch verläuft, definiert und die eine Spindelmutter-Außenoberfläche 541a und ein Innengewinde 542, das an einer umlaufenden Spindel-Kontaktstelle 91 der Spindel 90 anliegt, aufweist, und
- eine Mitnahmevorrichtung 550, mit der die Betätigungs-Spindelmutter 541 aufgrund einer Betätigung der zumindest einen Aktorvorrichtung in Drehung versetzt wird.

Das Innengewinde 542 oder die innere Oberfläche der Betätigungs-Spindelmutter 541, die dieses ausbildet, bildet bei den von Ausführungsformen der Antriebsvorrichtungen, die hierin an Hand der Figuren 23 bis 28 beschrieben sind, einen Betätigungs-Oberflächenabschnitt 543 aus, der am Außengewinde oder der Spindeloberfläche 90a einer von dem Spindelraum 539 aufgenommenen Spindel 90 anliegt und der bei einer entsprechenden Ansteuerung der jeweiligen Antriebsvorrichtung mit Ansteuerungssignalen, die von einer Ansteuerungsvorrichtung an die jeweilige Antriebsvorrichtung übermittelt wird, im Zusammenwirken mit der in den Spindelraum 539 eingesetzten Spindel 90 eine Drehbewegung derselben verursacht. Insbesondere kann bei entsprechenden Ansteuerungssignalen eine zeitliche Abfolge eines Schlupf-Zustands und eines Friktions-Zustands zwischen dem Betätigungs-Oberflächenabschnitt 543 und der Spindel 90 realisiert. Derartige Ansteuerungssignale sind hierin an Hand der Figuren 18 und 19 beschrieben.

Optional weist die Betätigungs-Bauteilstruktur 540 eine Rückstellvorrichtung 560 auf, die ein Rückstellkraft gegen eine Drehung der Betätigungs-Spindelmutter 541 aufgrund der Betätigung der zumindest einen Aktorvorrichtung bereitstellt.

Die Betätigungs-Spindelmutter 541 oder das Innengewinde 542 definiert somit einen Spindelraum 539 mit einer Spindelaufnahmeachse AA, deren Position und Lage identisch oder im Wesentlichen identisch ist mit einer Spindelachse A90 einer in den Spindelraum 539 eingesetzten und von der Antriebsvorrichtung 501 anzutreibenden Spindel 39 und der hierin das Bezugszeichen 539a zugeordnet ist. Für die weitere Beschreibung der Antriebsvorrichtung 501 mit einer derartigen Betätigungs-Spindelmutter werden zwei in zueinander entgegengesetzten Richtungen verlaufende Umfangsrichtungen definiert, die jeweils mit der Umfangsrichtung einer fiktiven zylindrischen Mantelfläche, die am Innengewinde 542 anliegt, übereinstimmen. Die Umfangsrichtungen sind entsprechende Bewegungsrichtungen eines fiktiven Punktes der Betätigungs-Spindelmutter 541, wenn sich die Betätigungs-Spindelmutter 541 dreht. Mit diesen Umfangsrichtungen sind auch radiale Richtungen definiert, die sich aus einem jeweiligen Radius an die zylindrischen Mantelfläche ergeben.

Bei der strukturellen Integration von Ausführungsformen der Antriebsvorrichtung 501, die hierin anhand der Figur 23 beschrieben sind, zusammen mit zumindest einer weiteren Antriebsvorrichtung in ein Antriebssystem S wird in die Betätigungs-Spindelmutter 541 die Spindel 90 geschraubt, wie es in der Figur 22 gezeigt ist. Die Figur 22 zeigt ein erfindungsgemäßes Antriebssystem S mit drei Antriebsvorrichtungen 501 gemäß der Figur 23 und mit einer Spindel 39, die in die drei Antriebsvorrichtungen 501 geschraubt ist.

Aus dem Antriebsgehäuse 530 resultieren Querschnittsformen, die sich jeweils in Richtung der Spindelaufnahmeachse 539b gesehen ergeben und die jeweils bei der dargestellten Ausführungsform aufgrund verschiedener Schnitte entlang der Spindelaufnahmeachse 539b im Wesentlichen eine gleichbleibende Form haben. Das Antriebsgehäuse 530 kann in Varianten dieser Ausführungsform auch anders realisiert sein und insbesondere nicht gleichbleibende Querschnittsformen aufweisen.

Das Antriebsgehäuse 530 der Antriebsvorrichtung 501 weist eine umlaufende Gehäusewand 533 mit einer Gehäuseaußenfläche 531 auf, die gemäß den gezeigten Ausführungsformen des Antriebsgehäuses 530 in Richtung der Spindelaufnahmeachse AA gesehen im Wesentlichen die Form einer kreiszylindrischen Fläche hat und dabei aus vier kreiszylindrischen Abschnitten 531a, 531b, 531c, 531d und vier geradflächigen Abschnitten 532a, 532b, 532c, 532d geformt ist, die in Umfangsrichtung über die Gehäuseaußenfläche 531 hintereinander abwechselnd angeordnet sind. Bei der dargestellten Ausführungsform sind die geradflächigen Abschnitte 532a, 532b, 532c, 532d als Anlageflächen vorgesehen, um an das Gehäuse 530 eine Kopplungsvorrichtung K eines Antriebssystems S und insbesondere an eine Lagervorrichtung 5 montieren zu können.

Das Antriebsgehäuse 530 und insbesondere dessen Gehäuseaußenfläche 531 kann jeweils jegliche Form haben, die für eine Integration zusammen mit zumindest einer weiteren Antriebsvorrichtung und einer Kopplungsvorrichtung K in ein Antriebssystem S insbesondere hinsichtlich einer effizienten Herstellung und einer operationellen Verwendung der Antriebsvorrichtung 501 zweckmäßig oder vorteilhaft ist. Insbesondere muss das Antriebsgehäuse 530 nicht umlaufend realisiert sein, d.h. dessen Außenseite kann auch aus mehreren Außenflächen, also in der Umfangsrichtung unterbrochen oder diskontinuierlich gebildet sein.

Die Betätigungs-Spindelmutter 541 der Ausführungsformen der Antriebsvorrichtungen nach den Figuren 23 bis 28 ist im Wesentlichen zylindrisch geformt. Alternativ dazu kann die Betätigungs-Spindelmutter 541 jede andere für die effiziente Herstellung und die operationelle Verwendung der Antriebsvorrichtung 501 zweckmäßige oder vorteilhafte Form haben.

Die Mitnahmevorrichtung 550 ist generell als zumindest ein Anlage-Oberflächenabschnitt der Betätigungs-Spindelmutter 541 realisiert. Dabei kann der Anlage-Oberflächenabschnitt eine Oberfläche einer Bauteilkomponente der Betätigungs-Spindelmutter 541 sein. Der jeweilige Anlage-Oberflächenabschnitt ist entlang der Umfangsrichtung der Spindelmutter orientiert. Der Anlage-Oberflächenabschnitt oder die Mitnahmevorrichtung 550 liegt an einemjeweiligen, von der Spindelaufnahmeachse 539a aus gesehen, in ihrer Längsrichtung gebildeten äußeren Ende an der zumindest einen Aktorvorrichtung an und überträgt jede Verformung der zumindest einen Aktorvorrichtung in ihrer jeweiligen Längsrichtung auf die Betätigungs-Spindelmutter 541 und versetzt diese dadurch in Drehung.

Zwischen der zumindest einen Mitnahmevorrichtung 550 und dem Antriebsgehäuse 530 ist jeweils zumindest eine Aktorvorrichtung 610 gelegen, wobei die Längsrichtung L610 der jeweiligen Aktorvorrichtung 610 entlang der Umfangsrichtungen und insbesondere quer zur Längserstreckung eines jeweiligen Anlage-Oberflächenabschnitts der Mitnahmevorrichtung 550oder der Längserstreckung der jeweiligen Mitnahmevorrichtung 550 verläuft. Die Aktorvorrichtung 610 weist einen Aktor 613 auf oder ist mit diesem Identisch. Jede der zumindest einen Aktorvorrichtung 610 oder jeder des zumindest einen Aktors 613 ist elektrisch mit einer Ansteuerungsvorrichtung verbunden, die Ansteuerungssignale an die jeweilige der zumindest einen Aktorvorrichtung sendet, die je nach dem Ansteuerungssignal expandiert oder sich zusammenzieht. Bei Expansion oder Retraktion der Aktorvorrichtung 610 aufgrund eines entsprechenden Ansteuerungssignals in der Längsrichtung L610 wird die Betätigungs-Spindelmutter 541 relativ zum Antriebsgehäuse 530 in jeweils einer von zwei zueinander entgegen gesetzten Umfangsrichtungen gedreht.

Die Ausführungsformen der Antriebsvorrichtung 501, die in der Figur 23 gezeigt ist, weist eine einzelne Aktorvorrichtung auf, der hierin das Bezugszeichen 610 zugeordnet ist. Für jede der zumindest einen Aktorvorrichtung, die die Ausführungsformen nach den Figuren 23 bis 28 aufweisen, ist eine Längsrichtung der jeweiligen Aktorvorrichtung derart definiert, dass sich die jeweilige Aktorvorrichtung aufgrund entsprechender Kommandosignale entlang der Längsrichtung ausdehnt oder zusammenzieht.

Weiterhin weisen die erfindungsgemäßen Ausführungsformen der Antriebsvorrichtung 501 zwei Mitnahmevorrichtungen 550 auf, denen in den Figuren 23 bis 28 auch speziell die Bezugszeichen 551, 552 zugeordnet sind. Generell kann jede der erfindungsgemäß vorgesehenen Mitnahmevorrichtungen 550 jeweils als Streben oder sich radial erstreckende Arme ausgebildet sind. Die Ausführungsformen der Antriebsvorrichtung 501, die in den Figuren 23 bis 28 gezeigt sind, ist eine erste Mitnahmevorrichtung 551 als ein erster Arm oder eine erste Mitnahmestrebe 555 und eine zweite Mitnahmevorrichtung 552 als ein zweiter Arm oder eine zweite Mitnahmestrebe 556 realisiert. Die Mitnahmestreben 555, 556 sind mit jeweils in Bezug auf die Spindelaufnahmeachse AA gegenüber liegenden Anschlussstelle 555a bzw. 556a der Spindelmutter 540 mit dieser verbunden sind und erstrecken sich in ihrer Längsrichtung jeweils von der Außenoberfläche 540a der Spindelmutter 540 radial und in Bezug auf die Spindelaufnahmeachse AA in zueinander entgegengesetzten Richtungen nach außen. Die Längsrichtung der jeweiligen Mitnahmevorrichtung 550 oder Mitnahmestrebe oder generell die Erstreckung des jeweiligen Anlage-Oberflächenabschnitts der Betätigungs-Spindelmutter 541 verläuft quer zur Längsrichtung L610 der jeweiligen Aktorvorrichtung 610 und quer zu den Umfangsrichtungen der Spindelmutter 540. Das von der Spindelmutter 540 aus gesehen äußere Ende 555a der ersten Mitnahmestrebe 555 ist in einem Abstand zu dem Gehäuse 530 oder zu einem in radialer Richtung dieser und der Spindelmutter 540 zugewandten Innenflächenabschnitt 533a der Gehäusewand 533 gelegen. Auch ist das von der Spindelmutter 540 aus gesehen äußere Ende 556a der zweiten Mitnahmestrebe 556 in einem Abstand zu dem Gehäuse 530 oder zu einem in radialer Richtung dieser und der Spindelmutter 540 zugewandten Innenflächenabschnitt 533b der Gehäusewand 533 gelegen. Auf diese Weise sind die Mitnahmestreben 555, 556 zusammen mit der Betätigungs-Spindelmutter 541 in Umfangsrichtung relativ zum Antriebsgehäuse 530 bewegbar. Das Antriebsgehäuse 530 kann zwei Ausnehmungen 545, 546 aufweisen, in denen sich jeweils eine der Mitnahmestreben 555, 556 teilweise erstrecken. Dabei erstreckt sich die erste Mitnahmestrebe 555 in einer ersten Ausnehmung 545, so dass das äußere Ende 555a in der ersten Ausnehmung 545 gelegen ist, und erstreckt sich die zweite Mitnahmestrebe 556 in einer zweiten Ausnehmung 546, so dass das äußere Ende 556a in der zweiten Ausnehmung 546 gelegen ist.

Beide Mitnahmestreben 555, 556 sind als Teile oder Bauteilkomponenten der Spindelmutter 540 ausgebildet und können, wie dargestellt, einstückig mit der Spindelmutter 540 hergestellt oder realisiert sein. Alternativ dazu kann eine der Mitnahmestreben 555, 556 oder können beide der Mitnahmestreben 555, 556 jeweils als separate Teile realisiert sein, die an einem Basisteil der Spindelmutter 540, das das Innengewinde 542 aufweist, befestigt sind. Die gezeigten Ausführungsformen der Antriebsvorrichtung 501 weisen eine erste Mitnahmestrebe 555 und eine zweite Mitnahmestrebe 556 auf, die jeweils als formsteife Strebe oder formsteifer Balken realisiert sind.

Die Ausführungsformen der Antriebsvorrichtung 501, die hierin anhand der Figuren 23 bis 28 beschrieben ist, können auch ohne die erste Mitnahmestrebe 555 oder ohne die zweite Mitnahmestrebe 556 oder sowohl ohne die erste Mitnahmestrebe 555 als auch ohne die zweite Mitnahmestrebe 556 realisiert sein. In jedem dieser Fälle weist die Betätigungs-Spindelmutter 541 zumindest einen sich in radialer Richtung erstreckenden Anlage-Oberflächenabschnitt 555c auf, der generell entlang der Umfangsrichtung orientiert ist und weist die Gehäusewand 533 zumindest einen Anlage-Oberflächenabschnitt 545c auf. Der Begriff "formsteif" bedeutet in diesem Zusammenhang, dass die Kräfte und Momente, die im operationellen Einsatz in jeder der jeweiligen Antriebsvorrichtungen, die hierin an Hand der Figuren 23 bis 28 beschrieben sind, durch Betätigung der zumindest einen Aktorvorrichtung einer jeweiligen Antriebsvorrichtung auftreten, allenfalls Verformungen der ersten Stützstrebe 555 und der zweiten Stützstrebe 556 verursachen, die gering oder vernachlässigbar sind gegenüber den Verformungen und Bewegungen der jeweiligen Aktorvorrichtungen bei deren Aktuierung oder Ansteuerung sowie gegenüber den dadurch verursachten Antriebsbewegungen der Betätigungs-Spindelmutter 541.

Die Ausführungsformen der Antriebsvorrichtung 501, die hierin anhand der Figuren 23 bis 28 beschrieben ist, weisen eine Aktorvorrichtung 610 auf, die zwischen der ersten Mitnahmestrebe 555, generell einem Anlage-Oberflächenabschnitt 555c, und der Gehäusewand 533 gelegen und von diesen derart gelagert ist, dass sich die Längsrichtung L610 der Aktorvorrichtung 610 entlang der Umfangsrichtung erstreckt. Dabei liegt die Aktorvorrichtung 610 einerseits an einem sich in radialer Richtung erstreckenden Anlage-Oberflächenabschnitt 555c der ersten Mitnahmestrebe 555 oder der Betätigungs-Spindelmutter 541 oder als ein Anlage-Oberflächenabschnitt einer Bauteilkomponente, die an der Betätigungs-Spindelmutter 541 angebracht oder mit der Betätigungs-Spindelmutter 541 verbunden ist, und andererseits an einem sich in radialer Richtung erstreckenden Anlage-Oberflächenabschnitt 545c der Gehäusewand 533 an. Die Aktorvorrichtung 610 ist nach einer der hierin insbesondere in Bezug auf die Figur 16 beschriebenen Aktorvorrichtungen 10, 20 realisiert und weist einen Aktor 613 mit einer Längsachse L610 auf, die entlang der Umfangsrichtung der Antriebsvorrichtung 501 verläuft, so dass sich bei einer Ausdehnung der Aktorvorrichtung 610 der Abstand zwischen dem Anlage-Oberflächenabschnitt 555c und dem Anlage-Oberflächenabschnitt 545c vergrößert und bei einer Kontraktion der Aktorvorrichtung 610 dieser Abstand verkleinert. Die Aktorvorrichtung 610 kann insbesondere identisch mit dem Aktor 613 sein. Somit wird bei einer Ansteuerung der Aktorvorrichtung 610 mit einem Ansteuerungssignal gemäß Figur 18 oder Figur 19, bei dem die Flanken einer Schwingung zueinander unterschiedliche Steigungen aufweisen, ein Friktion-Schlupf-Effekt, mit der eine Relativdrehung einer Spindel 39, die in dem Innengewinde 542 der Betätigungs-Spindelmutter 541 eingesetzt ist, erreicht werden kann.

Bei den Ausführungsformen der Antriebsvorrichtungen, die hierin anhand der Figur 23 beschrieben sind, können auch nur mit der ersten Mitnahmestrebe 555 und nicht mit der zweiten Mitnahmestrebe 556 realisiert sein.

Generell können die erfindungsgemäßen Ausführungsformen der Antriebsvorrichtungen, die hierin anhand der Figuren 23 bis 28 beschrieben sind, aneinander gegenüber liegenden Seiten zumindest einer Mitnahmestrebe oder einer Bauteilkomponente jeweils eine Aktorvorrichtung oder jeweils ein Aktor mit ihrem bezüglich ihrer Längsrichtung ersten Ende anliegen, deren Längsrichtung quer zur Längsrichtung der Mitnahmestrebe oder der Bauteilkomponente verläuft, wobei die Aktorvorrichtungen oder Aktoren an ihren bezüglich ihrer Längsrichtung zweiten Ende an einer jeweiligen Oberfläche des Aktorgehäuses anliegen. Dadurch können die Aktorvorrichtungen oder Aktoren die Betätigungsvorrichtung 540 paarweise antreiben oder betätigen, insbesondere wenn die Längenvergrößerung und Längenverringerung der jeweiligen Aktorvorrichtung oder des jeweiligen Aktors aufgrund von elektrischen Betätigungssignalen gegensinnig erfolgt. Auf diese Weise kann eine zeitabhängige Betätigung der Betätigungsvorrichtung 540 in beiden Antriebsrichtungen erfolgen. Die Ausführungsformen der Antriebsvorrichtungen, die hierin anhand der Figuren 23 bis 28 beschrieben sind, weisen weiterhin eine Rückstellvorrichtung 560 auf, mit der die Betätigungs-Spindelmutter 541 an das Antriebsgehäuse 530 gekoppelt ist, wobei die Rückstellvorrichtung 560 Drehungen der Betätigungs-Spindelmutter 541 um eine Drehachse zulässt, die entlang der Spindelaufnahmeachse AA verläuft. Zu diesem Zweck kann die Rückstellvorrichtung 560 in jeglicher Weise realisiert sein, die für den jeweils vorgesehenen operationellen Einsatz der Antriebsvorrichtung 501 geeignet ist.

Generell ist die Rückstellvorrichtung 560 nur optional vorgesehen, d.h. die Antriebsvorrichtungen, die hierin anhand der Figuren 23 bis 28 beschrieben sind, können auch ohne Rückstellvorrichtung 560 realisiert sein.

Die Ausführungsformen der Antriebsvorrichtung 501, die in den Figuren 23 bis 28 dargestellt sind, weist eine Rückstellvorrichtung 560 mit zwei Verbindungsstücken 563, 564 auf, in der Spindelaufnahmeachse 539a gesehen, auf zueinander entgegen gesetzten Seiten der Spindelmutter 540 gelegen sind. Die Verbindungsstücke 563, 564 der Ausführungsformen der Antriebsvorrichtungen nach den Figuren 23 bis 28 sind jeweils als Holm realisiert. Jedes Verbindungsstück 563, 564 erstreckt sich in radialer Richtung von einer Anschlussstelle 563a bzw. 564a der Betätigungs-Spindelmutter 541 zu einer Anschlussstelle 563b bzw. 564b des Antriebsgehäuses 530. Die Anschlussstellen 563a und 564a der Betätigungs-Spindelmutter 541 und die Anschlussstellen 563b bzw. 564b des Antriebsgehäuses 530 sind, jeweils in Bezug auf die Spindelaufnahmeachse AA einander gegenüber liegend angeordnet. Dabei ist jedes der Verbindungsstücke 563, 564 in Umfangsrichtung jeweils zwischen zwei Mitnahmestreben 555, 556 angeordnet.

Jedes Verbindungsstück 563, 564 ist vorzugsweise als elastische Verbindung von Betätigungs-Spindelmutter 541 und Antriebsgehäuse 530 realisiert. Jedes Verbindungsstück 563, 564 ist vorzugsweise aus einem elastischen Material realisiert. Jedes Verbindungsstück 563, 564 kann auf andere Weise als durch einen Holm realisiert sein, z.B. ein elastisches Band.

Die Ausführungsformen der Antriebsvorrichtung 501 der Figuren 23 bis 28 können auch nur eines der Verbindungsstücke 563, 564 aufweisen.

Optional kann, wie es in der Figur 23 bis 28 gezeigt ist, zur Realisierung einer ausreichenden Länge jedes jeweils vorgesehenen Verbindungsstücks 553, 554, insbesondere als längliches Verbindungsstück und z.B. in der Form eines Holms oder eines Bands, in der radialen Richtung auf der Innenseite des Antriebsgehäuses 530, die der Betätigungs-Spindelmutter 541 zugewandt ist, eine jeweilige GehäuseAusnehmung 565, 566 ausgebildet sein, in der sich das jeweilige Verbindungsstücks 563, 564 auf der Seite des Antriebsgehäuses 530 teilweise erstreckt. Je größer die Länge jedes jeweils vorgesehenen Verbindungsstücks 563, 564 ist, desto geringer kann die Elastizität des Materials des jeweiligen Verbindungsstücks 563, 564 sein, um mit derselben von der zumindest einen Aktorvorrichtung auf die Betätigungs-Spindelmutter 541 ausgeübten Kraft denselben Drehwinkel der Betätigungs-Spindelmutter 541 zu bewirken.

Alternativ zu der Realisierung der Antriebsvorrichtung 501 nach den Figuren 23 bis 28 kann die Rückstellvorrichtung 560, mit oder ohne dem zumindest einen Verbindungsstück 563, 564, auch durch ein einzelnes Festkörpergelenk oder durch mehrere Festkörpergelenke, also durch zumindest ein Festkörpergelenk realisiert sein. Die Ausführungsformen der Antriebsvorrichtung 501, die in den Figuren 23 bis 28 dargestellt sind, weist eine Festkörpergelenk-Vorrichtung mit zwei Festkörpergelenken 561, 562, die jeweils auch als Strukturgelenk bezeichnet werden können, auf.

Die Rückstellvorrichtung 560 kann bei jeder der hierin beschriebenen Ausführungsformen insbesondere als federnde Lagerung der Betätigungs-Spindelmutter 541 an dem Antriebsgehäuse 530 realisiert sein. Diese federnde Lagerung kann insbesondere derart vorgesehen sein, dass von einer Neutralstellung der Betätigungs-Spindelmutter 541 relativ zum Antriebsgehäuse 530 eine Drehbewegung in jede der zueinander entgegengesetzten Umfangsrichtungen eine Rückstellkraft zu der Neutralstellung bewirkt, deren Stärke von der Größe des Drehwinkels der jeweiligen Drehbewegung abhängt.

Dazu alternativ oder zusätzlich kann die Rückstellvorrichtung 560 als Kombination eines Drehgelenks, das als Scharniergelenk realisiert sein kann, und einer Feder, z.B. einer Spiralfeder, realisiert sein. Generell stellt die Rückstellvorrichtung 560 eine Drehung um eine Achse, die entlang der Spindelaufnahmeachse AA verläuft, bereit, wobei die Rückstellvorrichtung 560 eine Rückstellkraft bereitstellt, die proportional dem relativen Drehwinkel zwischen Betätigungs-Spindelmutter 541 und Antriebsgehäuse 530 ist.

Generell kann die Ausführungsform der Antriebsvorrichtung 501 ein Antriebsgehäuse 530 mit einer Gehäusewand 533 aufweisen, an dem zumindest ein sich in radialer Richtung erstreckender Betätigungs-Oberflächenabschnitt 545c realisiert ist, der in einer ersten Umfangsrichtung der Betätigungs-Spindelmutter 541 orientiert ist. Die Antriebsvorrichtung 501 kann eine Betätigungs-Spindelmutter 541 aufweisen, die einen Spindelraum 539 mit einer Spindelaufnahmeachse 539a ausbildet und eine radiale Richtung der Antriebsvorrichtung 501 definiert, wobei die Betätigungs-Spindelmutter 541 einen Anlage-Oberflächenabschnitt 555c aufweist (Figur 23), der entlang einer zweiten Umfangsrichtung der Betätigungs-Spindelmutter 541 orientiert ist, die entgegengesetzt zu der ersten Umfangrichtung gerichtet ist, wobei der eine Anlage-Oberflächenabschnitt 555c der Betätigungs-Spindelmutter 541 und ein jeweiliger Anlage-Oberflächenabschnitt 545c der Gehäusewand 533, der entlang der zweiten Umfangsrichtung der Betätigungs-Spindelmutter 541 orientiert ist, einander zugewandt gelegen sind. Dabei weist die Ausführungsform der Antriebsvorrichtung 501 zumindest eine Aktorvorrichtung 610 auf, die mit einem ersten Ende 11 bzw. 611 an dem Anlage-Oberflächenabschnitt 545c der Gehäusewand 533 anliegt und mit einem zweiten Ende 12 bzw. 612 an dem Anlage-Oberflächenabschnitt 555c der Betätigungs-Spindelmutter 541 anliegt, wobei die Längsrichtung der zumindest einen Aktorvorrichtung 610 von dem ersten Ende 11 zu dem zweiten Ende 12 verläuft.

In den Figuren 25 und 26 ist eine Antriebsvorrichtung dargestellt, der hierin das Bezugszeichen 701 zugeordnet ist. Diese Antriebsvorrichtung und die Ausführungsformen, die hierin an Hand der Figuren 25 und 26 beschrieben werden, basiert oder basieren auf den Ausführungsformen der Antriebsvorrichtung, die hierin an Hand der Figuren 23 und 24 beschrieben sind, so dass zur Beschreibung der Ausführungsformen, die hierin an Hand der Figuren 25 und 26 beschrieben sind, übereinstimmende Merkmale und Merkmalskombinationen nicht eigens nochmals beschrieben und deren Bezugszeichen übernommen werden

Diese Antriebsvorrichtung und die Ausführungsformen, die hierin an Hand der Figuren 25 und 26 beschrieben werden, weist eine Rahmenvorrichtung 30 auf, die zusammen mit zumindest einem weiteren Antriebsvorrichtung ein Antriebssystems S bilden kann. In jeder dieser Antriebsvorrichtungen ist zumindest eine Aktorvorrichtung integriert.

Die Ausführungsform der Antriebsvorrichtung 701 der Figuren 25 und 26 dargestellt ist, weist eine erste Aktorvorrichtung 610 und eine zweite Aktorvorrichtung 620 auf. Die Längsachse L610 der ersten Aktorvorrichtung 610 und die Längsachse L620 der zweiten Aktorvorrichtung 620 verlaufen jeweils entlang und insbesondere in der Umfangsrichtung.

Wie an Hand der Figur 23 beschrieben, liegt die erste Aktorvorrichtung 610 einerseits, also mit einem ersten Ende, an dem Anlage-Oberflächenabschnitt 555c der ersten Mitnahmestrebe 555 und andererseits, also mit einem zweiten Ende, an einem sich in radialer Richtung erstreckenden Anlage-Oberflächenabschnitt 545c der Gehäusewand 533 an. Die zweite Aktorvorrichtung 620 liegt einerseits, also mit einem ersten Ende, an einem sich in radialer Richtung erstreckenden Anlage-Oberflächenabschnitt 556c der zweiten Mitnahmestrebe 556 und andererseits, also mit einem zweiten Ende, an einem sich in radialer Richtung erstreckenden Anlage-Oberflächenabschnitt 546c der Gehäusewand 533 an. Dabei sind die erste Aktorvorrichtung 610 und die zweite Aktorvorrichtung 620, in der Spindelaufnahmeachse AA gesehen, an Seiten ihrer jeweiligen Mitnahmestrebe 555, 556 gelegen, die in dieselbe Richtung orientiert sind, und in Bezug auf die Spindelaufnahmeachse AA einander gegenüber liegend angeordnet.

Die Aktorvorrichtungen 610, 620 sind nach einer der hierin insbesondere in Bezug auf die Figur 16 beschriebenen Aktorvorrichtungen 10, 20 realisiert und weist jeweils einen Aktor 613 bzw. 623 mit einer Längsachse L610 bzw. L620 auf, die jeweils entlang der Umfangsrichtung der Antriebsvorrichtung 501 verlaufen. Die Aktoren 613 bzw. 623 können jeweils als Piezoaktoren realisiert sein. Die Aktorachsen L610, L620 verlaufen entlang zueinander. Bei einer Ausdehnung der Aktorvorrichtung 610 vergrößert sich der Abstand zwischen dem Anlage-Oberflächenabschnitt 555c und dem Anlage-Oberflächenabschnitt 545c und bei einer Kontraktion der Aktorvorrichtung 610 verkleinert sich dieser Abstand. Bei einer Ausdehnung der Aktorvorrichtung 620 vergrößert sich der Abstand zwischen dem Anlage-Oberflächenabschnitt 556c und dem Anlage-Oberflächenabschnitt 546c und bei einer Kontraktion der Aktorvorrichtung 610 verkleinert sich dieser Abstand. Die Aktorvorrichtungen 610, 620 können insbesondere identisch mit dem jeweiligen Aktor 613, 623 sein.

Bei einer Ansteuerung der Aktorvorrichtung 610 oder der Aktorvorrichtung 620 mit einem Ansteuerungssignal gemäß Figur 18 oder Figur 19, bei dem die Flanken einer Schwingung zueinander unterschiedliche Steigungen aufweisen, kann ein Friktion-Schlupf-Effekt zwischen dem Betätigungs-Oberflächenabschnitt 543 und der Spindeloberfläche 90a der Spindel 90 erreicht werden, mit der eine Relativdrehung einer Spindel 39, die in dem Innengewinde 542 der Betätigungs-Spindelmutter 541 eingesetzt ist, erreicht werden.

Die Ausführungsform der Antriebsvorrichtung 701 der Figuren 25 und 26 weist eine Gehäusewand 533 mit zumindest zwei sich in radialer Richtung erstreckenden Betätigungs-Oberflächenabschnitte 545c, 546c auf, von denen einer entlang einer ersten Umfangsrichtung der Betätigungs-Spindelmutter 541 orientiert ist und von denen ein anderer entlang einer zweiten Umfangsrichtung der Betätigungs-Spindelmutter 541 orientiert ist, die entgegengesetzt zu der ersten Umfangsrichtung der Betätigungs-Spindelmutter 541 orientiert ist. Dabei weist die Betätigungs-Spindelmutter 541 zumindest zwei Anlage-Oberflächenabschnitte 555c, 556c auf, von denen einer entlang der zweiten Umfangsrichtung der Betätigungs-Spindelmutter 541 orientiert ist und von denen ein anderer entlang der ersten Umfangsrichtung der Betätigungs-Spindelmutter 541 orientiert ist, wobei der zumindest eine Anlage-Oberflächenabschnitt der Betätigungs-Spindelmutter 541 und ein jeweiliger des zumindest einen Anlage-Oberflächenabschnitts 545c der Gehäusewand 533, der entlang der Umfangsrichtung der Betätigungs-Spindelmutter 541 orientiert ist, einander zugewandt gelegen sind. Weiterhin weist die Antriebsvorrichtung 701 eine erste und eine zweite Aktorvorrichtung 610, 620 auf, die jeweils mit einem ersten Ende 11 bzw. 611, 621 an einem der Anlage-Oberflächenabschnitte 545c, 546c der Gehäusewand 533 und mit einem zweiten Ende 12 bzw. 612, 622 an einem jeweiligen Anlage-Oberflächenabschnitt 555c, 556c der Betätigungs-Spindelmutter 541 anliegen, wobei der jeweilige Anlage-Oberflächenabschnitt 555c, 556c der Betätigungs-Spindelmutter 541 und der jeweilige Anlage-Oberflächenabschnitt 545c, 546c der Gehäusewand 533, an denen ein jeweiliger Aktor anliegt, einander gegenüber liegen.

Insbesondere erstrecken sich dabei zumindest zwei Betätigungs-Oberflächenabschnitte 545c, 546c der Gehäusewand 533 in radialer Richtung und sind in Bezug auf jede der Umfangsrichtungen voneinander abgewandt orientiert, wobei die Betätigungs-Spindelmutter 541 zwei Mitnahmevorrichtungen 550, 551, 552 aufweist, die jeweils einen Anlage-Oberflächenabschnitt 555c, 556c aufweist, die sich in radialer Richtung erstrecken und in Bezug auf jede der Umfangsrichtungen einander zugewandt orientiert sind, wobei jeweils ein Betätigungs-Oberflächenabschnitt 545c, 546c der Gehäusewand 533 und jeweils ein Anlage-Oberflächenabschnitt 555c, 556c der Betätigungs-Spindelmutter 541 einander gegenüber liegen, wobei die erste und eine zweite Aktorvorrichtung 610, in Richtung der Spindelaufnahmeachse 539a gesehen, an jeweils einem Anlage-Oberflächenabschnitt 555c, 556c der Mitnahmevorrichtungen 550 und an einem jeweiligen der Anlage-Oberflächenabschnitte 555c, 556c der Betätigungs-Spindelmutter 541 anliegen.

Alternativ dazu kann, wie in der Figur 27 und 28 gezeigt ist, die Antriebsvorrichtung 801 zumindest zwei Betätigungs-Oberflächenabschnitte 545c, 546c der Gehäusewand 533 sich in radialer Richtung erstrecken und sich einander gegenüber liegen, wobei die Betätigungs-Spindelmutter 541 eine Mitnahmevorrichtung 550 aufweist, die zumindest abschnittsweise zwischen den Betätigungs-Oberflächenabschnitten 545c, 546c der Gehäusewand 533 gelegen ist und die zwei Anlage-Oberflächenabschnitte 555c, 555d aufweist, die entgegengesetzt zueinander orientiert sind, wobei die erste und eine zweite Aktorvorrichtung 610, in Richtung der Spindelaufnahmeachse 539a gesehen, auf zueinander entgegengesetzt gelegenen Seiten der Mitnahmevorrichtung 550 an einem jeweiligen der Anlage-Oberflächenabschnitte 555c, 555d derselben anliegen.

Für den operationellen Betrieb kann vorgesehen sein, dass die erste Aktorvorrichtung 610 und die zweite Aktorvorrichtung 620 mit den Antriebssignalen, die an Hand der Figur 18 bzw. Figur 19 beschrieben sind, angesteuert werden, so dass diese gegenphasig angesteuert werden und gegenphasig zwischen einem jeweils zeitweisen Schlupf-Zustand und einem Friktions-Zustand alterieren.

Für den operationellen Betrieb kann auch vorgesehen sein, dass die periodischen Antriebssignale an die erste Aktorvorrichtung 610 und die zweite Aktorvorrichtung 620 des Paars von Aktorvorrichtungen 610, 620 gegenphasig verlaufen und gegenphasig zwischen einem jeweils zeitweisen Schlupf-Zustand und einem Friktions-Zustand alterieren, wobei die aufeinanderfolgenden Flankenabschnitte unterschiedlichen Vorzeichens derselben Halbperiode der beiden periodischen Antriebssignale ein gegenphasiges Expandieren und Kontrahieren der ersten Aktorvorrichtung 610 und der zweiten Aktorvorrichtung 620 und somit entsprechende Betätigung des Anlage-Oberflächenabschnitts 5456c und des Anlage-Oberflächenabschnitts 546c bewirken und dadurch Bewegungen des Betätigungs-Oberflächenabschnitts 543 in derselben Umfangsrichtung der Spindel 90 ausüben. Die Bewegungen des Betätigungs-Oberflächenabschnitts 543 erfolgen in ihrer zeitlichen Abfolge derart, dass auf einen Schlupf-Zustand ein Friktions-Zustand, oder umgekehrt, zwischen dem Betätigungs-Oberflächenabschnitt 543 und der Spindeloberfläche 90a der Spindel 90 erfolgt.

In den Figuren 27 und 28 ist eine Antriebsvorrichtung dargestellt, der hierin das Bezugszeichen 801 zugeordnet ist. Diese Antriebsvorrichtung und die Ausführungsformen, die hierin anhand der Figuren 25 und 26 beschrieben werden, basiert oder basieren auf den Ausführungsformen der Antriebsvorrichtung, die hierin an Hand der Figuren 23 und 24 beschrieben sind, so dass zur Beschreibung der Ausführungsformen, die hierin an Hand der Figuren 27 und 28 beschrieben sind, übereinstimmende Merkmale und Merkmalskombinationen nicht eigens nochmals beschrieben und deren Bezugszeichen übernommen werden.

Diese Antriebsvorrichtung und die Ausführungsformen, die hierin anhand der Figuren 27 und 28 beschrieben werden, weist eine erste Aktorvorrichtung 610, eine zweite Aktorvorrichtung 620, eine dritte Aktorvorrichtung 630 und eine vierte Aktorvorrichtung 640 auf. Die Längsachse L610 der ersten Aktorvorrichtung 610, die Längsachse L620 der zweiten Aktorvorrichtung 620, die Längsachse L630 der dritten Aktorvorrichtung 630 und die Längsachse L640 der vierten Aktorvorrichtung 640 verlaufen jeweils entlang und insbesondere in der Umfangsrichtung. Zusätzlich zu der Anordnung der ersten Aktorvorrichtung 610 und der zweiten Aktorvorrichtung 620 zwischen jeweils einer Mitnahmestrebe 555 bzw. 556 und einem jeweiligen Anlage-Oberflächenabschnitt der Gehäusewand 533, wie an Hand der Figuren 25 und 26 beschrieben, liegt die dritte Aktorvorrichtung 630 einerseits an einem sich in radialer Richtung erstreckenden zweiten Anlage-Oberflächenabschnitt 555d der ersten Mitnahmestrebe 555 und andererseits an einem sich in radialer Richtung erstreckenden Anlage-Oberflächenabschnitt 545d der Gehäusewand 533 an, die dem Anlage-Oberflächenabschnitt 555d zugewandt ist. Dabei sind die dritte Aktorvorrichtung 630 und die vierte Aktorvorrichtung 630, in der Spindelaufnahmeachse AA gesehen, auf derselben Seite ihrer jeweiligen Mitnahmestrebe 555, 556 gelegen.

Der zweite Anlage-Oberflächenabschnitt 555d der ersten Mitnahmestrebe 555 ist entgegen gesetzt zu dem ersten Anlage-Oberflächenabschnitt 555c der ersten Mitnahmestrebe 555 orientiert. Weiterhin liegt zusätzlich die vierte Aktorvorrichtung 640 einerseits an einem sich in radialer Richtung erstreckenden zweiten Anlage-Oberflächenabschnitt 556d der zweiten Mitnahmestrebe 556 und andererseits an einem sich in radialer Richtung erstreckenden Anlage-Oberflächenabschnitt 546d der Gehäusewand 533 an, die dem Anlage-Oberflächenabschnitt 556d zugewandt ist. Der zweite Anlage-Oberflächenabschnitt 556d der zweiten Mitnahmestrebe 556 ist entgegen gesetzt zu dem ersten Anlage-Oberflächenabschnitt 556c der zweiten Mitnahmestrebe 556 orientiert.

Für den operationellen Betrieb kann insbesondere vorgesehen sein, dass die Antriebsvorrichtung 801 der Figuren 27 und 28 eine Ansteuerungsvorrichtung aufweist, die elektrisch mit zwei Paaren von Aktorvorrichtungen verbunden ist. Grundsätzlich können die zwei Paare von Aktorvorrichtungen aus jeder möglichen Kombination von jeweils zwei Gruppen von zwei Aktorvorrichtungen 610, 620, 630, 640 gebildet werden:
- Ein erstes Paar von Aktorvorrichtungen kann die Kombination der Aktorvorrichtungen 610 und 620 und ein zweites Paar von Aktorvorrichtungen die Kombination der Aktorvorrichtungen 630 und 640 sein.
- Ein erstes Paar von Aktorvorrichtungen kann die Kombination der Aktorvorrichtungen 610 und 630 und ein zweites Paar von Aktorvorrichtungen die Kombination der Aktorvorrichtungen 620 und 640 sein.
- Ein erstes Paar von Aktorvorrichtungen kann die Kombination der Aktorvorrichtungen 610 und 640 und ein zweites Paar von Aktorvorrichtungen die Kombination der Aktorvorrichtungen 620 und 630 sein.

Für den operationellen Betrieb kann insbesondere vorgesehen sein, dass die Ansteuerungsvorrichtung in einem aktivierten Zustand an jeweils eine erste Aktorvorrichtung und an jeweils eine zweite Aktorvorrichtung der beiden Paare von Aktorvorrichtungen 610, 620, 630, 640 jeweils ein periodisches Antriebssignal sendet, das zumindest eine Halbperiode aufeinanderfolgende Flankenabschnitte unterschiedlichen Vorzeichens aufweist, deren maximale Steigungen dem Betrag nach eine minimale Differenz zueinander haben, wobei die periodischen Antriebssignale an die jeweils ersten Aktorvorrichtungen und die jeweils zweiten Aktorvorrichtungen der jeweiligen Paare von Aktorvorrichtungen 610, 620, 630, 640 gegenphasig verlaufen und gegenphasig zwischen einem jeweils zeitweisen Schlupf-Zustand und einem Friktions-Zustand alterieren, wobei die aufeinanderfolgenden Flankenabschnitte unterschiedlichen Vorzeichens derselben Halbperiode der beiden periodischen Antriebssignale Bewegungen des Betätigungs-Oberflächenabschnitts 543 in derselben Umfangsrichtung der Spindel 90 ausüben.

Dabei kann also z.B. vorgesehen sein, dass die erste Aktorvorrichtung 610 und die dritte Aktorvorrichtung 630 mit denselben Ansteuerungssignalen und die zweite Aktorvorrichtung 620 und vierte Aktorvorrichtung 640 mit denselben Ansteuerungssignalen angesteuert werden, wobei z.B. die die erste Aktorvorrichtung 610 und die dritte Aktorvorrichtung 630 mit den Antriebssignalen gemäß Figur 18 und die zweite Aktorvorrichtung 620 und vierte Aktorvorrichtung 640 mit den Antriebssignalen gemäß Figur 19 oder umgekehrt angesteuert werden, so dass die Aktorvorrichtungen paarweise gegenphasig angesteuert werden und gegenphasig zwischen einem jeweils zeitweisen Schlupf-Zustand und einem Friktions-Zustand alterieren. Die können auch auf andere Weise paarweise angesteuert werden.

Die Ausführungsformen der Antriebsvorrichtungen 501, 701, 801, die hierin anhand der Figuren 23 bis 28 beschrieben ist, können generell Aktorvorrichtungen nach einer Ausführungsform, die hierin beschrieben ist, aufweisen. Insbesondere kann jede der Aktorvorrichtungen einen Aktor 13 mit einem ersten Ende 11 und mit einem zweiten Ende 12 aufweisen. Das ersten Ende 11 kann an einem jeweiligen Anlage-Oberflächenabschnitt der Gehäusewand 533 und das am zweiten Ende 12 kann an einem Anlage-Oberflächenabschnitt der Spindelmutter 540 anliegen oder umgekehrt, wobei dessen Ausdehnung und Kontraktion bei einer Ansteuerung entlang einer ersten Aktorachse L₁ reversibel veränderbar ist, wobei das erste Ende 11 und das zweite Ende 12 in Bezug auf die jeweilige Aktorachse entgegengesetzt zueinander orientiert sind und wobei die jeweilige Aktorachse quer zur Spindelaufnahmeachse 539a und entlang dem Betätigungs-Oberflächenabschnitt 543 der Spindelmutter 540 verlaufen kann.

Bei jeder der Ausführungsformen kann der Anlage-Oberflächenabschnitt statt an einer Mitnahmestrebe an der Betätigungs-Spindelmutter 541 oder der realisiert ist.

### Bezugszeichenliste

- 1: Antriebseinheit
- 1a: Spindelraum
- 1b: Spindelaufnahmeachse
- 2: Antriebseinheit
- 2a: Spindelraum
- 2b: Spindelaufnahmeachse
- 3: Antriebseinheit
- 5: Lagervorrichtung
- 7a: seitliche Halterung
- 7b: seitliche Halterung
- 8a: seitliche Halterung
- 8b: seitliche Halterung
- 10: erste Aktorvorrichtung
- 11: erstes Ende des ersten Aktors 13
- 12: zweites Ende des ersten Aktors 13
- 13: erster Aktor
- 20: zweite Aktorvorrichtung
- 21: erstes Ende des zweiten Aktors 23
- 22: zweites Ende des zweiten Aktors 23
- 23: zweiter Aktor
- 30: Rahmenvorrichtung
- 39: Spindelraum
- 40: Betätigungs-Bauteilstruktur
- 51: erster Betätigungs-Oberflächenabschnitt
- 52: zweiter Betätigungs-Oberflächenabschnitt
- 58: Betätigungsabschnitt
- 58a: Betätigungsabschnitt
- 58b: Betätigungsabschnitt
- 58c: Betätigungsabschnitt
- 68a: Betätigungsabschnitt
- 68b: Betätigungsabschnitt
- 68c: Betätigungsabschnitt
- 70: Kopplungseinheit
- 71: Kopplungseinheit-Verbindungsstück
- 72: Kopplungseinheit-Verbindungsstück
- 73a: erster Befestigungsabschnitt
- 73b: zweiter Befestigungsabschnitt
- 73c: zweiter Befestigungsabschnitt
- 74a: erster Befestigungsabschnitt
- 74b: zweiter Befestigungsabschnitt
- 74c: zweiter Befestigungsabschnitt
- 75: Federabschnitt
- 75a: Feder-Teilabschnitt
- 75b: Feder-Teilabschnitt
- 76: Federabschnitt
- 76a: Feder-Teilabschnitt
- 76b: Feder-Teilabschnitt
- 77a: erster u-förmiger Abschnitt
- 77b: zweiter u-förmiger Abschnitt
- 77c: dritter u-förmiger Abschnitt
- 78a: erster u-förmiger Abschnitt
- 78b: zweiter u-förmiger Abschnitt
- 78c: dritter u-förmiger Abschnitt
- 79a: erstes Brückenabschnitt
- 79b: zweites Brückenabschnitt
- 90: Spindel
- 90a: Spindeloberfläche der Spindel 90
- 91: erste Spindel-Kontaktstelle der Spindel 90
- 92: zweite Spindel- Kontaktstelle der Spindel 90
- 93: erstes Ende der Spindel 90
- 94: zweites Ende der Spindel 90
- 95: Spindel-Betätigungsteil
- 96: Spindel-Stellteil
- 200: Antriebsmotor
- 201: Antriebsvorrichtung
- 230: Rahmenvorrichtung
- 231: erste Spannvorrichtung
- 232: Verbindungsabschnitt
- 233: erster Endabschnitt
- 233s: Verbindungselement
- 234: zweiter Endabschnitt
- 234s: Verbindungselement
- 235: zweite Spannvorrichtung
- 236: Verbindungsabschnitt
- 237: erster Endabschnitt
- 238: zweiter Endabschnitt
- 239: Spindelraum
- 240: Betätigungs-Bauteilstruktur
- 250: erste Betätigungsstruktur
- 251: erstes Aktor-Stützteil
- 252: erster Basisabschnitt des ersten Aktor-Stützteils 251
- 253: Aktor-Stützabschnitt des ersten Aktor-Stützteils 251
- 254: erster Betätigungs-Oberflächenabschnitt
- 255: erstes Aktor-Funktionsteil
- 256: erster Befestigungsabschnitt des ersten Aktor-Stützteils 251
- 257: erster Verbindungsabschnitt
- 258: erster Betätigungsabschnitt
- 259: Betätigungsoberfläche des ersten Aktor-Funktionsteils 255
- 260: zweite Betätigungsstruktur
- 261: zweites Aktor-Stützteil
- 262: zweiter Basisabschnitt des zweiten Aktor-Stützteils 261
- 263: Aktor-Stützabschnitt des zweiten Aktor-Stützteils 261
- 264: zweiter Betätigungs-Oberflächenabschnitt
- 265: zweites Aktor-Funktionsteil
- 266: zweiter Befestigungsabschnitt
- 267: zweiter Verbindungsabschnitt
- 268: zweiter Betätigungsabschnitt
- 269: Betätigungsoberfläche des zweiten Aktor-Funktionsteils 265
- 280: Koppelabschnitt
- 281: erster Endabschnitt des Koppelabschnitts 280
- 282: zweiter Endabschnitt des Koppelabschnitts 280
- 283: Verbindungsabschnitt des Koppelabschnitts 280
- 285: äußerer Endabschnitt des ersten Betätigungsabschnitts 258
- 286: äußerer Endabschnitt des zweiten Betätigungsabschnitts 268
- 287: erster Übergangsabschnitt zwischen dem ersten Endabschnitt 285 und dem Verbindungsabschnitt 283
- 288: zweiter Übergangsabschnitt zwischen dem zweiten Endabschnitt 286 und dem Verbindungsabschnitt 283
- 501: Antriebsvorrichtung
- 530: Antriebsgehäuse
- 531: Gehäuseaußenfläche des Gehäuses 530
- 531a: kreiszylindrischer Abschnitt der Außenfläche 531
- 531b: kreiszylindrischer Abschnitt der Außenfläche 531
- 531c: kreiszylindrischer Abschnitt der Außenfläche 531
- 531d: kreiszylindrischer Abschnitt der Außenfläche 531
- 532a: geradflächiger Abschnitt der Außenfläche 531
- 532b: geradflächiger Abschnitt der Außenfläche 531
- 532c: geradflächiger Abschnitt der Außenfläche 531
- 532d: geradflächiger Abschnitt der Außenfläche 531
- 533: Gehäusewand
- 533a: Innenflächenabschnitt der Gehäusewand 533
- 533b: Innenflächenabschnitt der Gehäusewand 533
- 533c: Anlage-Oberflächenabschnitt des Randabschnitts 533
- 533d: Anlage-Oberflächenabschnitt des Randabschnitts 533
- 536: Gehäuse-Innenraum
- 539: Spindelraum
- 540: Betätigungs-Bauteilstruktur
- 541: Betätigungs-Spindelmutter
- 541a: Spindelmutter-Außenoberfläche
- 542: Innengewinde
- 542a: Innenfläche, die das Innengewinde 541 ausbildet
- 543: Betätigungs-Oberflächenabschnitt der Betätigungs-Bauteilstruktur 540
- 545: erste Ausnehmung des Antriebsgehäuses 530
- 545c: Anlage-Oberflächenabschnitt der Gehäusewand 533
- 545d: Anlage-Oberflächenabschnitt der Gehäusewand 533
- 546: zweite Ausnehmung des Antriebsgehäuses 530
- 546c: Anlage-Oberflächenabschnitt der Gehäusewand 533
- 546d: Anlage-Oberflächenabschnitt der Gehäusewand 533
- 550: Mitnahmevorrichtung
- 555: erste Mitnahmestrebe
- 555a: äußeres Ende der ersten Mitnahmestrebe 555
- 555c: Anlage-Oberflächenabschnitt der ersten Mitnahmestrebe 555
- 556: zweite Mitnahmestrebe
- 556a: äußeres Ende der zweiten Mitnahmestrebe 556
- 560: Rückstellvorrichtung
- 563: Verbindungsstück
- 563a: Anschlussstelle
- 563b: Anschlussstelle
- 564: Verbindungsstück
- 564a: Anschlussstelle
- 564b: Anschlussstelle
- 610: Aktorvorrichtung
- 613: Aktor der Aktorvorrichtung 610
- 620: Aktorvorrichtung
- 623: Aktor der Aktorvorrichtung 620
- 630: Aktorvorrichtung
- 633: Aktor der Aktorvorrichtung 630
- 640: Aktorvorrichtung
- 643: Aktor der Aktorvorrichtung 640
- A: Stellsystem
- AA: Spindelaufnahmeachse
- AV: Antriebsvorrichtung
- AV1: Antriebsvorrichtung
- AV2: Antriebsvorrichtung
- AV3: Antriebsvorrichtung
- A90: Spindelachse
- B: Basiskörper
- C: Schlitten
- C1: Schlitten-Anschlussvorrichtung
- C2: Stellwand
- C3: Stellwand-Oberfläche
- D: Führungsvorrichtung
- D1: Führungsschienen-Kombination
- D2: Führungsschienen-Kombination
- D12: Abstand
- F: Federvorrichtung
- F1: Federvorrichtung
- F2: Federvorrichtung
- K: Kopplungsvorrichtung
- K1: Kopplungsvorrichtung
- K2: Kopplungsvorrichtung
- L₁: erste Aktorachse oder Längsrichtung der Aktorvorrichtung 10
- L₂: zweite Aktorachse oder Längsrichtung der Aktorvorrichtung 20
- L610: Aktorachse oder Längsrichtung der Aktorvorrichtung 610
- L620: Aktorachse oder Längsrichtung der Aktorvorrichtung 620
- L630: Aktorachse oder Längsrichtung der Aktorvorrichtung 630
- L640: Aktorachse oder Längsrichtung der Aktorvorrichtung 640
- M: Antriebsmotor
- RS: Umdrehungsrichtung der Spindel 90 in Figur 17
- S: Antriebssystem
- S11: Spannungssignal
- S12: Spannungssignal
- S21: Spannungssignal
- S22: Spannungssignal
- T11: Zeitpunkt eines relativen Minimums des Spannungssignals S11 und eines relativen Maximums des Spannungssignals S12
- T12: Zeitpunkt eines Referenzwertes oder Nulldurchgang des Spannungssignals S11 und S12
- T13: Zeitpunkt eines relativen Maximums des Spannungssignals S11 und eines relativen Minimums des Spannungssignals S12
- T14: Zeitpunkt eines Referenzwertes oder Nulldurchgang des Spannungssignals S11 und S12
- T15: Zeitpunkt eines relativen Minimums des Spannungssignals S11 und eines relativen Maximums des Spannungssignals S12
- T16: Zeitpunkt eines Referenzwertes oder Nulldurchgang des Spannungssignals S11 und S12
- T21: Zeitpunkt eines relativen Minimums des Spannungssignals S21 und eines relativen Maximums des Spannungssignals S22
- T22: Zeitpunkt eines Referenzwertes oder Nulldurchgang des Spannungssignals S21 und S22
- T23: Zeitpunkt eines relativen Maximums des Spannungssignals S21 und eines relativen Minimums des Spannungssignals S22
- T24: Zeitpunkt eines Referenzwertes oder Nulldurchgang des Spannungssignals S21 und S22
- T25: Zeitpunkt eines relativen Minimums des Spannungssignals S21 und eines relativen Maximums des Spannungssignals S22
- T26: Zeitpunkt eines Referenzwertes oder Nulldurchgang des Spannungssignals S21 und S22
- S31: Spannungssignal
- S32: Spannungssignal
- T31: Zeitpunkt eines relativen Minimums des Spannungssignals S31 und eines relativen Maximums des Spannungssignals S32
- T32: Zeitpunkt eines Referenzwertes oder Nulldurchgang des Spannungssignals S31 und S32
- T33: Zeitpunkt eines relativen Maximums des Spannungssignals S31 und eines relativen Minimums des Spannungssignals S32
- T34: Zeitpunkt eines Referenzwertes oder Nulldurchgang des Spannungssignals S31 und S32
- T35: Zeitpunkt eines relativen Minimums des Spannungssignals S31 und eines relativen Maximums des Spannungssignals S32
- T36: Zeitpunkt eines Referenzwertes oder Nulldurchgang des Spannungssignals S31 und S32

## Patentansprüche

1. Antriebssystem (S), aufweisend:
zumindest zwei Antriebseinheiten (1, 2) jeweils zur Aufnahme und zum Antreiben einer Spindel (90) mit einer Spindelachse (A90), wobei jede der Antriebseinheiten (1, 2) zur Aufnahme jeweils eines Abschnitts der Spindel (90) jeweils einen Spindelraum (1a, 2a) aufweist, der sich jeweils in einer Spindelaufnahmeachse (AA) durch jede der Antriebseinheiten (1, 2) erstreckt, die in Richtung der Spindelachse (A90) verläuft, wobei die zumindest zwei Antriebseinheiten (1, 2) die Spindel (90) stabil lagern,
eine Kopplungsvorrichtung (K), welche die zumindest zwei Antriebseinheiten (1, 2) in Richtung der Spindelaufnahmeachse (AA) aneinander elastisch koppelt, wobei die zumindest zwei Antriebseinheiten (4, 5) entlang der Spindelaufnahmeachse (AA) hintereinander gelegen sind und wobei die Kopplungsvorrichtung (K) zumindest eine Federvorrichtung (F) aufweist, die sich entlang der Spindelaufnahmeachse (AA) erstreckt,
**dadurch gekennzeichnet, dass** die zumindest eine Federvorrichtung (F) derart angeordnet ist, dass sie jeweils in einem unbelasteten Neutralzustand, in dem keine Spindel (90) in dem Antriebssystem (S) aufgenommen ist, die jeweils zwei Antriebseinheiten (1, 2) stabil in einem vorbestimmten Abstand (D12) hält und von dem Neutralzustand in zueinander entgegen gesetzten Richtungen entlang der Spindelaufnahmeachse (AA) jeweils einen Federweg bereitstellt.

2. Antriebssystem (S) nach dem Anspruch 1, **dadurch gekennzeichnet, dass** die Kopplungsvorrichtung (K) zwei Kopplungseinheit-Verbindungsstücke (71, 72) mit jeweils zumindest einem Federabschnitt (75, 76) aufweist, wobei die Kopplungseinheit-Verbindungsstücke (71, 72) in einer quer zu der Spindelaufnahmeachse (AA) verlaufenen Blickrichtung gesehen auf zueinander entgegen gesetzt gelegenen Seiten der Spindelaufnahmeachse (AA) jeweils mit den zumindest zwei Antriebseinheiten (1, 2) verbunden sind.

3. Antriebssystem (S) nach dem Anspruch 2, **dadurch gekennzeichnet, dass** die Federabschnitte (75, 76) der Kopplungseinheit-Verbindungsstücke (71, 72) jeweils einen Mäanderabschnitt zur Bereitstellung jeweils eines Federwegs in zueinander entgegen gesetzten Richtungen entlang der Spindelaufnahmeachse (S) aufweisen.

4. Antriebssystem (S) nach dem Anspruch 2 oder 3, **dadurch gekennzeichnet,**
**dass** die zumindest eine Kopplungsvorrichtung (K) zwei Kopplungseinheiten (70) aufweist, die jeweils in einer quer zur Spindelaufnahmeachse (S) verlaufenen Blickrichtung gesehen auf zueinander entgegen gesetzt gelegenen Seiten der Spindelaufnahmeachse (S) gelegen sind und sich zueinander entlang erstrecken,
**dass** jedes der Kopplungseinheiten (70) jeweils zwei Kopplungseinheit-Verbindungsstücke (71, 72) aufweist, die mit beiden Antriebseinheiten (1, 2) verbunden sind und die einen Federabschnitt (75, 76) jeweils zur Bereitstellung jeweils eines Federwegs in zueinander entgegen gesetzten Richtungen aufweisen,
**dass** sich die zwei Kopplungseinheiten (70) jeweils quer zur Spindelaufnahmeachse (S) und zueinander entlang erstrecken.

5. Antriebssystem (S) nach einem der voranstehenden Ansprüche, **dadurch gekennzeichnet,**
**dass** jede Antriebseinheit (1, 2, 3) eine Antriebsvorrichtung (AV, AV1, AV2, 201, 501, 701, 801) mit einem Spindelraum (1a, 2a) aufweist,
**dass** jede Antriebseinheit (1, 2, 3) eine Rahmenvorrichtung (30) aufweist, wobei die jeweiligen Rahmenvorrichtungen (30) mittels der Kopplungsvorrichtung (K) miteinander gekoppelt sind,
**dass** zumindest eine Antriebsvorrichtung (AV, AV1, AV2, 201, 501, 701, 801) eine Betätigungs-Bauteilstruktur (40) zum Kontaktieren und Antreiben einer Spindel (90) aufweist, die den Spindelraum (1a, 2a) teilweise begrenzt,
**dass** die zumindest eine Antriebsvorrichtung (AV, AV1, AV2, 201, 501, 701, 801) zumindest eine Aktorvorrichtung (10, 20, 610, 620, 630, 640) aufweist und derart konfiguriert ist, dass die Aktorvorrichtung (10, 20, 610, 620, 630, 640) bei entsprechender Ansteuerung die Betätigungs-Bauteilstruktur (40) derart bewegt, dass eine durch die Betätigungs-Bauteilstruktur (40) aufgenommene Spindel (90) angetrieben wird.

6. Antriebssystem (S) nach dem Anspruch 5, **dadurch gekennzeichnet, dass** zumindest eine Antriebsvorrichtung (AV) eine Aktorvorrichtung, die als Elektromotor realisiert ist, und die Betätigungs-Bauteilstruktur eine Antriebs-Spindelmutter aufweist, die derart angeordnet ist, dass sie drehbar in der Antriebsvorrichtung (AV) gelagert und dabei in Richtung der Spindelaufnahmeachse (AA) fixiert ist, wobei die Antriebs-Spindelmutter auf die Spindel (90) aufschraubbar ist, dass bei einer entsprechenden Ansteuerung der Aktorvorrichtung die Antriebs-Spindelmutter und dadurch aufgrund eines Friktionskontakts mit der Spindel (90) diesselbe in Drehung versetzt wird.

7. Antriebssystem (S) nach dem Anspruch 5, **dadurch gekennzeichnet, dass** zumindest eine Antriebsvorrichtung (AV) zumindest eine Aktorvorrichtung (10, 20, 610) mit zumindest einem Aktor (13, 23, 613) aufweist, der als Piezoaktor realisiert ist.

8. Antriebssystem (S) nach dem Anspruch 7, **dadurch gekennzeichnet, dass** das Antriebssystem (S) eine Ansteuerungsvorrichtung aufweist, die elektrisch mit jeder der zumindest einen Antriebsvorrichtung (AV, AV1, AV2, 201, 501, 701, 801) verbunden ist und die derart konfiguriert ist, dass sie in einem aktivierten Zustand an die jeweilige Antriebsvorrichtung ein periodisches Antriebssignal sendet, das zumindest eine Halbperiode aufeinanderfolgende Flankenabschnitte unterschiedlichen Vorzeichens aufweist, deren maximale Steigungen dem Betrag nach eine minimale Differenz zueinander haben, die Bewegungen der Betätigungs-Bauteilstruktur (40) und durch diese abwechselnd einen Schlupf-Zustand und einen Friktions-Zustand zwischen einem Betätigungs-Oberflächenabschnitt (254, 264, 543) der Betätigungs-Bauteilstruktur (40), die an der Spindel anliegt, und der Spindel (90) bewirken.

9. Antriebssystem (S) nach dem Anspruch 5, **dadurch gekennzeichnet, dass** zumindest eine Antriebsvorrichtung (AV) mit zumindest einem Paar von Aktorvorrichtungen (10, 20, 610, 620, 630, 640) aufweist, die jeweils einen Aktor (13, 23, 613, 623, 633, 643) aufweisen, der als Piezoaktor mit einer Aktorachse (L₁ , L₂ , L610, L620, L630, L640) realisiert ist,
dass zumindest eine Antriebsvorrichtung (AV) eine Betätigungs-Bauteilstruktur (40) aufweist, die mit der Oberfläche einer Spindel (90) in Kontakt bringbar ist, dass die Aktorachsen (L₁ , L₂ , L610, L620, L630, L640) entlang zueinander verlaufen und derart angeordnet sind, dass die Ausdehnung jeder Aktorvorrichtung bei entsprechender elektrischer Ansteuerung entlang seiner Aktorachse (L₁ , L₂ , L610, L620, L630, L640) reversibel veränderbar ist und die Ausdehnungsänderung der Aktoren die Betätigungs-Bauteilstruktur in Bewegung versetzt und eine von der Betätigungs-Bauteilstruktur aufgenommene Spindel (90) in Drehung versetzbar ist.

10. Antriebssystem (S) nach dem Anspruch 9, **dadurch gekennzeichnet, dass** das Antriebssystem (S) eine Ansteuerungsvorrichtung aufweist, die elektrisch mit jedem Paar von Aktorvorrichtungen (10, 20, 610, 620, 630, 640) der zumindest einen Antriebsvorrichtung (AV, AV1, AV2, 201, 701, 801) verbunden ist und die derart konfiguriert ist, dass sie in einem aktivierten Zustand an eine erste Aktorvorrichtung (10, 610) und eine zweite Aktorvorrichtung (20, 620) des Paars von Aktorvorrichtungen (10, 20, 610, 620, 630, 640) jeweils ein periodisches Antriebssignal sendet, das zumindest eine Halbperiode aufeinanderfolgende Flankenabschnitte unterschiedlichen Vorzeichens aufweist, deren maximale Steigungen dem Betrag nach eine minimale Differenz zueinander haben,
dass die Betätigungs-Bauteilstruktur (40) zumindest einen Betätigungs-Oberflächenabschnitt (254, 264, 543) aufweist, der mit der Spindel (90) in Kontakt ist und bei Ansteuerung der jeweiligen Aktorvorrichtungen des Paars von Aktorvorrichtungen (10, 20, 610, 620, 630, 640) jeweils mit dem periodischen Antriebssignal die Spindel (90) in Umfangsrichtung in Bewegung setzen kann,
dass die periodischen Antriebssignale an die erste Aktorvorrichtung (10, 610) und die zweite Aktorvorrichtung (20, 620) des jeweiligen Paars von Aktorvorrichtungen (10, 20, 610, 620, 630, 640) gegenphasig verlaufen und gegenphasig zwischen einem jeweils zeitweisen Schlupf-Zustand und einem Friktions-Zustand alterieren, wobei die aufeinanderfolgenden Flankenabschnitte unterschiedlichen Vorzeichens derselben Halbperiode der beiden periodischen Antriebssignale Bewegungen des zumindest einen Betätigungs-Oberflächenabschnitts (254, 264, 543) in derselben Umfangsrichtung der Spindel (90) ausüben.

11. Antriebssystem (S) nach dem Anspruch 10, **dadurch gekennzeichnet, dass** die Betätigungs-Bauteilstruktur einen ersten Betätigungsabschnitt (258) mit einem ersten Betätigungs-Oberflächenabschnitt (254) und einen zweiten Betätigungsabschnitt (268) mit einem zweiten Betätigungs-Oberflächenabschnitt (264) aufweist,
dass die Betätigungs-Bauteilstruktur derart angeordnet ist, dass sie bei Ansteuerung der ersten Aktorvorrichtung (10, 610) des jeweiligen Paars von Aktorvorrichtungen (10, 20, 610, 620, 630, 640) mit einem Ansteuerungssignal dieser den ersten Betätigungs-Oberflächenabschnitt (254) in Bewegung versetzt und bei Ansteuerung der zweiten Aktorvorrichtung (20, 620) des jeweiligen Paars von Aktorvorrichtungen (10, 20, 610, 620, 630, 640) mit einem Ansteuerungssignal dieser den zweiten Betätigungs-Oberflächenabschnitt (264) in Bewegung versetzt.

12. Antriebssystem (S) nach dem Anspruch 11, **dadurch gekennzeichnet,**
**dass** der erste Betätigungsabschnitt (258) mit einem Ende einer ersten Aktorvorrichtung (10) in Verbindung steht und der zweiten Betätigungsabschnitt (268) mit einem Ende einer zweiten Aktorvorrichtung (20) in Verbindung steht,
**dass** die Betätigungs-Oberflächenabschnitte (254, 264) zumindest jeweils in einem Abschnitt einander gegenüber liegen und den jeweiligen Spindelraum (1a, 2a) begrenzen und an Spindel-Kontaktstelle einer von der Betätigungs-Bauteilstruktur aufgenommenen Spindel (90) anliegen.

13. Antriebsmotor (M) mit einem Antriebssystem (S) nach einem der voranstehenden Ansprüche und einer Spindel (90) mit einer Spindelachse (A90), wobei die Spindel (90) in jedem Spindelraum (1a, 2a) gelegen ist und mit den Antriebseinheiten (1, 2) zum Antreiben der Spindel (90) gekoppelt ist.

14. Antriebsmotor (M) nach dem Anspruch 13, **dadurch gekennzeichnet,**
**dass** zumindest eine Antriebsvorrichtung (AV, AV1, AV2, 201, 501, 701, 801) eine Betätigungs-Bauteilstruktur (40) aufweist, die den Spindelraum (1a, 2a) teilweise begrenzt und mit der Spindel (90) in Kontakt ist zum Aufnehmen und Antreiben der Spindel (90),
**dass** die zumindest eine Antriebsvorrichtung (AV, AV1, AV2, 201, 501, 701, 801) zumindest eine Aktorvorrichtung (10, 20, 610, 620, 630, 640) aufweist, die derart angeordnet ist, dass sie bei entsprechender Ansteuerung die Betätigungs-Bauteilstruktur (40) derart bewegt, dass die durch die Betätigungs-Bauteilstruktur (40) aufgenommene Spindel (90) antreibt.

15. Stellsystem (A) mit einem Antriebssystem (S) nach einem der Ansprüche 1 bis 12 und mit einem Schlitten, der mit der Spindel (90) gekoppelt ist.

16. Antriebsvorrichtung (501), aufweisend:
ein Antriebsgehäuse (530) mit einer Gehäusewand (533), an dem zumindest ein sich in radialer Richtung erstreckender Betätigungs-Oberflächenabschnitt (545c) realisiert ist, der in einer ersten Umfangsrichtung der Betätigungs-Spindelmutter (541) orientiert ist, eine Betätigungs-Spindelmutter (541), die einen Spindelraum (539) mit einer Spindelaufnahmeachse (539a) ausbildet und eine radiale Richtung der Antriebsvorrichtung (501) definiert, wobei die Betätigungs-Spindelmutter (541) zumindest einen Anlage-Oberflächenabschnitt (555c, 555d, 556c, 556d) aufweist, der entlang einer zweiten Umfangsrichtung der Betätigungs-Spindelmutter (541) orientiert ist, die entgegengesetzt zu der ersten Umfangrichtung gerichtet ist, wobei der zumindest eine Anlage-Oberflächenabschnitt (555c) der Betätigungs-Spindelmutter (541) und ein jeweiliger des zumindest einen Anlage-Oberflächenabschnitts (545c) der Gehäusewand (533), der entlang der zweiten Umfangsrichtung der Betätigungs-Spindelmutter (541) orientiert ist, einander zugewandt gelegen sind,
**dadurch gekennzeichnet, dass** die Antriebsvorrichtung (501) zumindest eine Aktorvorrichtung (610) aufweist, die mit einem ersten Ende (11) an dem Anlage-Oberflächenabschnitt (545c) der Gehäusewand (533) anliegt und mit einem zweiten Ende (12) an dem Anlage-Oberflächenabschnitt (555c) der Betätigungs-Spindelmutter (541) anliegt, wobei die Längsrichtung der zumindest einen Aktorvorrichtung (610) von dem ersten Ende (11) zu dem zweiten Ende (12) verläuft.

17. Antriebsvorrichtung (701) nach dem Anspruch 16, **dadurch gekennzeichnet,**
**dass** die Gehäusewand (533) zumindest zwei sich in radialer Richtung erstreckende Betätigungs-Oberflächenabschnitte (545c, 546c) aufweist, von denen einer entlang einer ersten Umfangsrichtung der Betätigungs-Spindelmutter (541) orientiert ist und von denen ein anderer entlang einer zweiten Umfangsrichtung der Betätigungs-Spindelmutter (541) orientiert ist, die entgegengesetzt zu der ersten Umfangsrichtung der Betätigungs-Spindelmutter (541) orientiert ist,
**dass** die Betätigungs-Spindelmutter (541) zumindest zwei Anlage-Oberflächenabschnitte (555c, 556c) aufweist, von denen einer entlang der zweiten Umfangsrichtung der Betätigungs-Spindelmutter (541) orientiert ist und von denen ein anderer entlang der ersten Umfangsrichtung der Betätigungs-Spindelmutter (541) orientiert ist, wobei der zumindest eine Anlage-Oberflächenabschnitt der Betätigungs-Spindelmutter (541) und ein jeweiliger des zumindest einen Anlage-Oberflächenabschnitts (545c) der Gehäusewand (533), der entlang der Umfangsrichtung der Betätigungs-Spindelmutter (541) orientiert ist, einander zugewandt gelegen sind,
wobei die Antriebsvorrichtung (501) eine erste und eine zweite Aktorvorrichtung (610, 620) aufweist, die jeweils mit einem ersten Ende (11) an einem der Anlage-Oberflächenabschnitte (545c, 546c) der Gehäusewand (533) und mit einem zweiten Ende (12) an einem jeweiligen Anlage-Oberflächenabschnitt (555c, 556c) der Betätigungs-Spindelmutter (541) anliegen, wobei der jeweilige Anlage-Oberflächenabschnitt (555c, 556c) der Betätigungs-Spindelmutter (541) und der jeweilige Anlage-Oberflächenabschnitt (545c, 546c) der Gehäusewand (533), an denen ein jeweiliger Aktor anliegt, einander gegenüber liegen.

18. Antriebsvorrichtung (501) nach dem Anspruch 17, **dadurch gekennzeichnet,**
**dass** zumindest zwei Betätigungs-Oberflächenabschnitte (545c, 546c) der Gehäusewand (533) sich in radialer Richtung erstrecken und in Bezug auf jede der Umfangsrichtungen voneinander abgewandt orientiert sind,
**dass** die Betätigungs-Spindelmutter (541) zwei Mitnahmevorrichtungen (550, 551, 552) aufweist, die jeweils einen Anlage-Oberflächenabschnitt (555c, 556c) aufweist, die sich in radialer Richtung erstrecken und in Bezug auf jede der Umfangsrichtungen einander zugewandt orientiert sind, wobei jeweils ein Betätigungs-Oberflächenabschnitt (545c, 546c) der Gehäusewand (533) und jeweils ein Anlage-Oberflächenabschnitt (555c, 556c) der Betätigungs-Spindelmutter (541) einander gegenüber liegen,
**dass** die erste und eine zweite Aktorvorrichtung (610), in Richtung der Spindelaufnahmeachse (539a) gesehen, an jeweils einem Anlage-Oberflächenabschnitt (555c, 556c) der Mitnahmevorrichtungen (550) und an einem jeweiligen der Anlage-Oberflächenabschnitte (555c, 556c) der Betätigungs-Spindelmutter (541) anliegen.

19. Antriebsvorrichtung (801) nach dem Anspruch 17, **dadurch gekennzeichnet,**
**dass** zumindest zwei Betätigungs-Oberflächenabschnitte (545c, 546c) der Gehäusewand (533) sich in radialer Richtung erstrecken und sich einander gegenüber liegen,
**dass** die Betätigungs-Spindelmutter (541) eine Mitnahmevorrichtung (550) aufweist, die zumindest abschnittsweise zwischen den Betätigungs-Oberflächenabschnitten (545c, 546c) der Gehäusewand (533) gelegen ist und die zwei Anlage-Oberflächenabschnitte (555c, 555d) aufweist, die entgegengesetzt zueinander orientiert sind,
**dass** die erste und eine zweite Aktorvorrichtung (610), in Richtung der Spindelaufnahmeachse (539a) gesehen, auf zueinander entgegengesetzt gelegenen Seiten der Mitnahmevorrichtung (550) an einem jeweiligen der Anlage-Oberflächenabschnitte (555c, 555d) derselben anliegen.

20. Antriebsvorrichtung (501) nach einem der Ansprüche 16 bis 19, **dadurch gekennzeichnet, dass** die Antriebsvorrichtung (501) eine Rückstellvorrichtung (560) aufweist, die derart angeordnet ist, dass sie von einer Neutralstellung der Betätigungs-Spindelmutter (541) relativ zum Antriebsgehäuse (530) eine Drehbewegung in jede der zueinander entgegengesetzten Umfangsrichtungen eine Rückstellkraft zu der Neutralstellung bewirkt, deren Stärke von der Größe des Drehwinkels der jeweiligen Drehbewegung abhängt.

## Claims

1. Drive system (S), comprising:
at least two drive units (1, 2) each for accommodating and driving a spindle (90) with a spindle axis (A90), wherein each of the drive units (1, 2) for accommodating a respective section of the spindle (90) comprises a respective spindle space (1a, 2a) which extends in a respective spindle accommodating axis (AA) through each of the drive units (1, 2), which runs in the direction of the spindle axis (A90), wherein the at least two drive units (1, 2) stably support the spindle (90),
a coupling device (K) which elastically couples the at least two drive units (1, 2) to one another in the direction of the spindle accommodating axis (AA), wherein the at least two drive units (4, 5) are arranged one behind the other along the spindle accommodating axis (AA) and where the coupling device (K) comprises at least one spring device (F) which extends along the spindle accommodating axis (AA),
**characterized in that** the at least one spring device (F) is arranged such that it is in an unstressed neutral state in each case, in which no spindle (90) is accommodated in the drive system (S), keeps the two drive units (1, 2) in each case stable at a predetermined distance (D12) and provides a respective spring travel from the neutral state in mutually opposite directions along the spindle accommodating axis (AA).

2. Drive system (S) according to claim 1, **characterized in that** the coupling device (K) comprises two coupling unit connecting parts (71, 72) each with at least one spring section (75, 76), wherein the coupling unit connecting parts (71, 72) are each connected to the at least two drive units (1, 2) on opposite sides of the spindle accommodating axis (AA) as viewed in a direction transverse to the spindle accommodating axis (AA).

3. Drive system (S) according to claim 2, **characterized in that** the spring sections (75, 76) of the coupling unit connection parts (71, 72) each comprise a meander section for providing a spring travel in mutually opposite directions along the spindle accommodating axis (S).

4. Drive system (S) according to claim 2 or 3, **characterized**
**in that** the at least one coupling device (K) comprises two coupling units (70) which, viewed in a direction transverse to the spindle accommodating axis (S), are each located on opposite sides of the spindle accommodating axis (S) and extend along one another,
**in that** each of the coupling units (70) respectively comprises two coupling unit connection parts (71, 72) which are connected to both drive units (1, 2) and each of which comprise a spring section (75, 76) for providing a spring travel in opposite directions to each other,
**in that** the two coupling units (70) each extend transversely to the spindle accommodating axis (S) and along one another.

5. Drive system (S) according to one of the preceding claims, **characterized**
**in that** each drive unit (1, 2, 3) comprises a drive device (AV, AV1, AV2, 201, 501, 701, 801) with a spindle space (1a, 2a),
**in that** each drive unit (1, 2, 3) comprises a frame device (30), the respective frame devices (30) being coupled to one another by means of the coupling device (K),
**in that** at least one drive device (AV, AV1, AV2, 201, 501, 701, 801) comprises an actuating component structure (40) for contacting and driving a spindle (90) which partially delimits the spindle space (1a, 2a),
**in that** the at least one drive device (AV, AV1, AV2, 201, 501, 701, 801) comprises at least one actuator device (10, 20, 610, 620, 630, 640) and is configured such that the drive device (AV, AV1, AV2, 201, 501, 701, 801), moves the actuating component structure (40), when actuated appropriately, in such a way that a spindle (90) accommodated by the actuating component structure (40) is driven.

6. Drive system (S) according to claim 5, **characterized in that** at least one drive device (AV) comprises an actuator device which is implemented as an electric motor, and the actuating component structure comprises a drive spindle nut which is arranged such that it is rotatably mounted in the drive device (AV) and is thereby fixed in the direction of the spindle accommodating axis (AA), wherein the drive spindle nut can be screwed onto the spindle (90) such that, when the actuator device is actuated accordingly, the drive spindle nut and thereby, due to frictional contact with the spindle (90), the spindle (90) are set in rotation.

7. Drive system (S) according to claim 5, **characterized in that** at least one drive device (AV) comprises at least one actuator device (10, 20, 610) with at least one actuator (13, 23, 613) which is realized as a piezo actuator.

8. Drive system (S) according to claim 7, **characterized in that**
the drive system (S) comprises an control device which is electrically connected to each of the at least one drive device (AV, AV1, AV2, 201, 501, 701, 801) and which is configured such that, in an activated state, it sends to the respective drive device a periodic actuation signal which comprises at least one half-period with successive edge sections of different sign, the maximum gradients of which have a minimum difference according to amount to one another, which causes movements of the actuating component structure (40) and, through this, alternately a slip state and a friction state between an actuating surface section (254, 264, 543) of the actuating component structure (40), which contacts the spindle, and the spindle (90).

9. Drive system (S) according to claim 5, **characterized in that** at least one drive device (AV) comprises at least one pair of actuator devices (10, 20, 610, 620, 630, 640), each of which comprises an actuator (13, 23, 613, 623, 633, 643) which is realized as a piezo actuator with an actuator axis (L₁ , L₂ , L610, L620, L630, L640),
**in that** at least one drive device (AV) comprises an actuating component structure (40) which can be brought into contact with the surface of a spindle (90), **in that** the actuator axes (L₁ , L₂ , L610, L620, L630, L640) run along one another and are arranged such that the extension of each actuator device can be reversibly changed along its actuator axis (L₁ , L₂ , L610, L620, L630, L640) with corresponding electrical control and that the change in extension of the actuators sets the actuating component structure in motion and a spindle (90) accommodated by the actuating component structure can be set in rotation.

10. Drive system (S) according to claim 9, **characterized**
**in that** the drive system (S) comprises a drive device which is electrically connected to each pair of actuator devices (10, 20, 610, 620, 630, 640) of the at least one drive device (AV, AV1, AV2, 201, 701, 801) and which is configured such that, in an activated state, it sends to a first actuator device (10, 610) and a second actuator device (20, 620) of the pair of actuator devices (10, 20, 610, 620, 630, 640) in each case a periodic actuation signal, which comprises at least one half-period with successive edge sections of different edge sections of the pair of actuator devices (10, 20, 610, 620, 630, 640), 620) of the pair of actuator devices (10, 20, 610, 620, 630, 640) a periodic actuation signal which comprises at least one half-period of successive edge sections of different sign, the maximum gradients of which having a minimum difference according to amount from one another,
**in that** the actuating component structure (40) comprises at least one actuating surface section (254, 264, 543) which is in contact with the spindle (90) and, when the respective actuator devices of the pair of actuator devices (10, 20, 610, 620, 630, 640) are actuated, can set the spindle (90) in motion in the circumferential direction in each case with the periodic actuation signal,
**in that** the periodic actuation signals to the first actuator device (10, 610) and the second actuator device (20, 620) of the respective pair of actuator devices (10, 20, 610, 620, 630, 640) run in antiphase and alternate in antiphase between a respective temporary slip state and a friction state, wherein the successive edge sections of different sign of the same half-period of the two periodic actuation signals exert movements of the at least one actuating surface section (254, 264, 543) in the same circumferential direction of the spindle (90).

11. Drive system (S) according to claim 10, **characterized**
**in that** the actuating component structure comprises a first actuating section (258) comprising a first actuating surface section (254) and a second actuating section (268) comprising a second actuating surface section (264),
**in that** the actuating component structure is arranged such, when the first actuator device (10, 610) of the respective pair of actuator devices (10, 20, 610, 620, 630, 640) is actuated with an actuation signal, it sets the first actuating surface section (254) in motion and, when the second actuator device (20, 620) of the respective pair of actuator devices (10, 20, 610, 620, 630, 640) is actuated with an actuation signal, it sets the second actuating surface section (264) in motion.

12. Drive system (S) according to claim 11, **characterized**
**in that** the first actuating section (258) is connected to an end of a first actuator device (10) and the second actuating section (268) is connected to an end of a second actuator device (20),
**in that** the actuating surface sections (254, 264) are located opposite one another, in at least one section in each case, and delimit the respective spindle space (1a, 2a) and contact the spindle contact area of a spindle (90) accommodated by the actuating component structure.

13. Drive motor (M) with a drive system (S) according to one of the preceding claims and a spindle (90) with a spindle axis (A90), wherein the spindle (90) is located in each spindle space (1a, 2a) and is coupled to the drive units (1, 2) for driving the spindle (90).

14. Drive motor (M) according to claim 13, **characterized**
**in that** at least one drive device (AV, AV1, AV2, 201, 501, 701, 801) comprises an actuating component structure (40) which partially delimits the spindle space (1a, 2a) and is in contact with the spindle (90) for receiving and driving the spindle (90),
**in that** the at least one drive device (AV, AV1, AV2, 201, 501, 701, 801) comprises at least one actuator device (10, 20, 610, 620, 630, 640) which is arranged such that, when actuated accordingly, moves the actuating component structure (40) in such a way that it drives the spindle (90) accommodated by the actuating component structure (40).

15. Positioning system (A) with a drive system (S) according to one of claims 1 to 12 and with a slide coupled to the spindle (90).

16. Drive device (501), comprising:
a drive housing (530) with a housing wall (533), on which at least one actuating surface section (545c) extending in the radial direction is realized, which is oriented in a first circumferential direction of the actuating spindle nut (541),
a actuating spindle nut (541), which forms a spindle space (539) with a spindle accommodating axis (539a) and defines a radial direction of the drive device (501), wherein the actuating spindle nut (541) comprises at least one contact surface section (555c, 555d, 556c, 556d) oriented along a second circumferential direction of the actuating spindle nut (541) which is directed opposite to the first circumferential direction, wherein the at least one contact surface section (555c) of the actuating spindle nut (541) and a respective one of the at least one contact surface section (545c) of the housing wall (533), which is oriented along the second circumferential direction of the actuating spindle nut (541), are located facing each other,
**characterized in that** the drive device (501) comprises at least one actuator device (610), which with a first end (11) contacts the contact surface section (545c) of the housing wall (533) and with a second end (12) contacts the contact surface section (555c) of the actuating spindle nut (541), the longitudinal direction of the at least one actuator device (610) runing from the first end (11) to the second end (12).

17. Drive device (701) according to claim 16, **characterized**
**in that** the housing wall (533) comprises at least two actuating surface sections (545c, 546c) extending in a radial direction, one of which is oriented along a first circumferential direction of the actuating spindle nut (541) and another of which is oriented along a second circumferential direction of the actuating spindle nut (541), which is oriented opposite to the first circumferential direction of the actuating spindle nut (541),
**in that** the actuating spindle nut (541) comprises at least two contact surface sections (555c, 556c), one of which is oriented along the second circumferential direction of the actuating spindle nut (541) and another of which is oriented along the first circumferential direction of the actuating spindle nut (541), wherein the at least one contact surface section of the actuating spindle nut (541) and a respective one of the at least one contact surface section (545c) of the housing wall (533), which is oriented along the circumferential direction of the actuating spindle nut (541), are located facing each other,
**in that** the drive device (501) comprises a first and a second actuator device (610, 620), each of which bears with a first end (11) against one of the contact surface sections (545c, 546c) of the housing wall (533) and with a second end (12) against a respective contact surface section (555c, 556c) of the actuating spindle nut (541), wherein the respective contact surface section (555c, 556c) of the actuating spindle nut (541) and the respective contact surface section (545c, 546c) of the housing wall (533), against which a respective actuator rests, lie opposite one another.

18. Drive device (501) according to claim 17, **characterized**
**in that** at least two actuating surface sections (545c, 546c) of the housing wall (533) extend in a radial direction and are oriented away from each other with respect to each of the circumferential directions,
**in that** the actuating spindle nut (541) comprises two entrainment devices (550, 551, 552) each comprising a contact surface section (555c, 556c) extending in the radial direction and oriented to face each other with respect to each of the circumferential directions, wherein an actuating surface section (545c, 546c) of the housing wall (533) and an contact surface section (555c, 556c) of the actuating spindle nut (541) are opposed to each other, respectively,
**in that** the first and a second actuator device (610), viewed in the direction of the spindle accommodating axis (539a), each abut against a respective contact surface section (555c, 556c) of the entrainment devices (550) and against a respective one of the contact surface sections (555c, 556c) of the actuating spindle nut (541).

19. Drive device (801) according to claim 17, **characterized**
**in that** at least two actuating surface sections (545c, 546c) of the housing wall (533) extend in a radial direction and lie opposite one another,
**in that** the actuating spindle nut (541) comprises an entrainment device (550) which is located at least in a section between the actuating surface sections (545c, 546c) of the housing wall (533) and which comprises two contact surface sections (555c, 555d) which are oriented in opposite directions to one another,
**in that** the first and a second actuator device (610), as viewed in the direction of the spindle accommodating axis (539a), contact a respective one of the contact surface sections (555c, 555d) of the entrainment device (550) on opposite sides thereof.

20. Drive device (501) according to any one of claims 16 to 19, **characterized in that** the drive device (501) comprises a restoring device (560) which is arranged such that, from a neutral position of the actuating spindle nut (541) relative to the drive housing (530), it causes a rotational movement in each of the mutually opposite circumferential directions to produce a restoring force to the neutral position, the strength of which depends on the magnitude of the angle of rotation of the respective rotational movement.

## Revendications

1. Système d'entraînement (S), comprenant :
au moins deux unités d'entraînement (1, 2), chacune destinée à recevoir et à entraîner une broche (90) dotée d'un axe (A90) de broche, pour recevoir chacune une section de la broche (90), chacune des unités d'entraînement (1, 2) comportant respectivement un espace (1a, 2a) de broche, qui s'étend respectivement dans un axe (AA) de réception de la broche à travers chacune des unités d'entraînement (1, 2), qui s'écoule dans la direction de l'axe (A90) de broche, les au moins deux unités d'entraînement (1, 2) supportant avec stabilité la broche (90),
un dispositif d'accouplement (K), lequel accouple élastiquement l'une avec l'autre les au moins deux unités d'entraînement (1, 2) dans la direction de l'axe (AA) de réception de la broche, les au moins deux unités d'entraînement (4, 5) étant situées l'une derrière l'autre le long de l'axe (AA) de réception de la broche et le dispositif d'accouplement (K) comportant au moins un dispositif de ressort (F), qui s'étend le long de l'axe (AA) de réception de la broche,
**caractérisé en ce que** l'au moins un dispositif de ressort (F) est placé de telle sorte que dans respectivement un état neutre non chargé, dans lequel aucune broche (90) n'est reçue dans le système d'entraînement (S), il maintienne avec stabilité les deux unités d'entraînement (1, 2) à une distance (D12) prédéfinie et mette à disposition à partir de la position neutre, respectivement une course de ressort dans des directions opposées l'une à l'autre le long de l'axe (AA) de réception de la broche.

2. Système d'entraînement (S) selon la revendication1, **caractérisé en ce que** le dispositif d'accouplement (K) comporte deux pièces de connexion (71, 72) d'unités d'accouplement, dotée chacune d'au moins une section à ressort (75, 76), considérées dans une direction de visée s'écoulant à la transversale de l'axe (AA) de réception de la broche, sur des côtés de l'axe (AA) de réception de la broche situés en sens opposé l'un de l'autre, les pièces de connexion (71, 72) d'unités d'accouplement étant connectées, chaque fois avec les au moins deux unités d'entraînement (1, 2).

3. Système d'entraînement (S) selon la revendication 2, **caractérisé en ce que** les sections à ressort (75, 76) des pièces de connexion (71, 72) d'unités d'accouplement comportent chacune une section en méandres, pour mettre à disposition respectivement une course de ressort dans des directions situées en sens opposé l'une de l'autre, le long de l'axe (S) de réception de la broche.

4. Système d'entraînement (S) selon la revendication 2 ou 3, **caractérisé**
**en ce que** l'au moins un dispositif d'accouplement (K) comporte deux unités d'accouplement (70), qui considérées respectivement dans une direction de visée s'écoulant à la transversale de l'axe (S) de réception de la broche, sont situées sur des côtés situés en sens opposé l'un de l'autre de l'axe (S) de réception de la broche et s'étendent le long l'une de l'autre,
**en ce que** chacune des unités d'accouplement (70) comporte respectivement deux pièces de connexion (71, 72) d'unités d'accouplement, qui sont connectées avec les deux unités d'entraînement (1, 2) et qui comportent une section à ressort (75, 76), pour mettre à disposition respectivement une course de ressort dans des directions situées en sens opposé l'une de l'autre,
**en ce que** les deux unités d'accouplement (70) s'étendent chacune à la transversale de l'axe (S) de réception de la broche et le long l'une de l'autre.

5. Système d'entraînement (S) selon l'une quelconque des revendications précédentes, **caractérisé**
**en ce que** chaque unité d'entraînement (1, 2, 3) comporte un dispositif d'entraînement (AV, AV1, AV2, 201, 501, 701, 801), doté d'un espace (1a, 2a) de broche,
**en ce que** chaque unité d'entraînement (1, 2, 3) comporte un dispositif de cadre (30),
les dispositifs de cadres (30) respectifs étant accouplés les uns avec les autres au moyen du dispositif d'accouplement (K),
**en ce qu'**au moins un dispositif d'entraînement (AV, AV1, AV2, 201, 501, 701, 801) comporte une structure de composants d'actionnement (40), destinée à mettre en contact et à entraîner une broche (90), qui délimite partiellement l'espace (1a, 2a) de broche,
**en ce que** l'au moins un dispositif d'entraînement (AV, AV1, AV2, 201, 501, 701, 801) comporte au moins un dispositif actionneur (10, 20, 610, 620, 630, 640) et est configuré de telle sorte, que lors d'une activation correspondante, le dispositif actionneur (10, 20, 610, 620, 630, 640) déplace la structure de composants d'actionnement (40) de manière qu'une broche (40) reçue par la structure de composants d'actionnement (40) soit entraînée.

6. Système d'entraînement (S) selon la revendication 5, **caractérisé en ce qu'**au moins un dispositif d'entraînement (AV) comporte un dispositif actionneur, qui est réalisé sous la forme d'un moteur électrique et la structure de composants d'actionnement comporte un écrou de broche d'entraînement qui est placé de sorte à être logé de manière rotative dans le dispositif d'entraînement (AV) et à être fixé à cet effet dans la direction de l'axe (AA) de réception de la broche, l'écrou de broche d'entraînement pouvant se visser sur la broche (90), **en ce que** lors d'une activation correspondante du dispositif actionneur, l'écrou de broche d'entraînement et de ce fait, sous l'effet d'un contact en friction avec la broche (90), cette dernière soit amené(e) en rotation.

7. Système d'entraînement (S) selon la revendication 5, **caractérisé en ce qu'**au moins un dispositif d'entraînement (AV) comporte au moins un dispositif actionneur (10, 20, 610), doté d'au moins un actionneur (13, 23, 613) qui est réalisé sous la forme d'un actionneur piézoélectrique.

8. Système d'entraînement (S) selon la revendication 7, **caractérisé en ce que** le système d'entraînement (S) comporte un dispositif d'activation qui est électriquement connecté avec chacun des au moins un dispositif d'entraînement (AV, AV1, AV2, 201, 501, 701, 801) et qui est configuré de sorte à envoyer dans un état activé au dispositif d'entraînement respectif un signal d'entraînement périodique, qui comporte au moins une demi-période de sections de front successives de signes différents, dont les pentes maximales présentent entre elles une différence minimale en valeur, qui provoque des déplacements de la structure de composants d'actionnement (40) et par ceux-ci, alternativement, un état de glissement et un état de friction entre une section de surface d'actionnement (254, 264, 543) de la structure de composants d'actionnement (40) qui est en appui contre la broche et la broche (90).

9. Système d'entraînement (S) selon la revendication 5, **caractérisé en ce qu'**au moins un dispositif d'entraînement (AV) comporte au moins une paire de dispositifs actionneurs (10, 20, 610, 620, 630, 640), dont chacun comporte un actionneur (13, 23, 613, 623, 633, 643) qui est réalisé sous la forme d'un actionneur piézoélectrique, doté d'un axe (L₁, L₂, L610, L620, L630, L640) d'actionneur,
**en ce qu'**au moins un dispositif d'entraînement (AV) comporte une structure de composants d'actionnement (40) qui peut être amenée en contact avec la surface d'une broche (90, **en ce que** les axes (L₁ , L₂ , L610, L620, L630, L640) d'actionneurs s'écoulent le long les uns des autres et sont placés de telle sorte que, lors d'une activation électrique correspondante, l'extension de chaque dispositif actionneur le long de son axe (L₁ , L₂ , L610, L620, L630, L640) d'actionneur soit réversiblement variable et que la variation de l'extension des actionneurs amène en déplacement la structure de composants d'actionnement et qu'une broche (90) reçue par la structure de composants d'actionnement puisse être amenée en rotation.

10. Système d'entraînement (S) selon la revendication 9, **caractérisé en ce que** le système d'entraînement (S) comporte un dispositif d'activation qui est électriquement connecté avec chaque paire de dispositifs actionneurs (10, 20, 610, 620, 630, 640) du au moins un dispositif d'entraînement (AV, AV1, AV2, 201, 701, 801) et qui est configuré de sorte à envoyer dans un état activé à un premier dispositif actionneur (10, 610) et à un deuxième dispositif actionneur (20, 620) de la paire de dispositifs actionneurs (10, 20, 610, 620, 630, 640) respectivement un signal d'entraînement périodique, qui comporte au moins une demi-période de sections de front successives de signes différents, dont les pentes maximales présentent entre elles une différence minimale en valeur,
**en ce que** la structure de composants d'actionnement (40) comporte au moins une section de surface d'actionnement (254, 264, 543) qui est en contact avec la broche (90) et lors de l'activation des dispositifs actionneurs respectifs de la paire de dispositifs actionneurs (10, 20, 610, 620, 630, 640) chaque fois avec le signal d'entraînement périodique, est en mesure d'amener la broche (90) en déplacement dans la direction circonférentielle,
**en ce que** les signaux d'entrainement périodiques sur le premier dispositif actionneur (10, 610) et le deuxième dispositif actionneur (20, 620) de la paire respective de dispositifs actionneurs (10, 20, 610, 620, 630, 640) sont en opposition de phase et alternent en opposition de phase entre un état de glissement et un état de friction respectivement temporaires, les sections de fronts successives de signes différents de la même demi-période des deux signaux d'entraînement périodiques exerçant des déplacement de l'au moins une section de surface d'actionnement (254, 264, 543) dans la même direction circonférentielle de la broche (90).

11. Système d'entraînement (S) selon la revendication 10, **caractérisé en ce que** la structure de composants d'actionnement comporte une première section d'actionnement (258) dotée d'une première section de surface d'actionnement (254) et une deuxième section d'actionnement (268), dotée d'une deuxième section de surface d'actionnement (264),
**en ce que** la structure de composants d'actionnement est placée de sorte que lors d'une activation du premier dispositif actionneur (10, 610) de la paire respective de dispositifs actionneurs (10, 20, 610, 620, 630, 640) avec un signal d'activation, celui-ci amène en déplacement la première section de surface d'activation (254) et lors d'une activation du deuxième dispositif actionneur (20, 620) de la paire respective de dispositifs actionneurs (10, 20, 610, 620, 630, 640) avec un signal d'activation, celui-ci amène en déplacement la deuxième section de surface d'activation (264).

12. Système d'entraînement (S) selon la revendication 11, **caractérisé,**
**en ce que** la première section d'actionnement (258) est connectée avec une extrémité d'un premier dispositif actionneur (10) et la deuxième section d'actionnement (268) est connectée avec une extrémité d'un deuxième dispositif actionneur (20),
**en ce que** les sections de surfaces d'actionnement (254, 264) sont placées en regard l'une de l'autre au moins chaque fois dans une section et délimitent l'espace (1a, 2a) de broche respectif et sont en appui sur la zone de contact de broche d'une broche (90) reçue par la structure de composants d'actionnement.

13. Moteur d'entraînement (M), doté d'un système d'entraînement (S) selon l'une quelconque des revendications précédentes et d'une broche (90) dotée d'un axe (A90) de broche, la broche (90) étant située dans chaque espace (1a, 2a) de broche et étant accouplée avec les unités d'entraînement (1, 2), pour entraîner la broche (90).

14. Moteur d'entraînement (M) selon la revendication 13, **caractérisé**
**en ce qu'**au moins un dispositif d'entraînement (AV, AV1, AV2, 201, 501, 701, 801) comporte une structure de composants d'actionnement (40) qui délimite partiellement l'espace (1a, 2a) de broche et qui est en contact avec la broche (90), pour réceptionner et entraîner la broche (90),
**en ce que** l'au moins un dispositif d'entraînement (AV, AV1, AV2, 201, 501, 701, 801) comporte au moins un dispositif actionneur (10, 20, 610, 620, 630, 640) qui est placé de telle sorte, que lors d'une activation correspondante, il déplace la structure de composants d'actionnement (40) de sorte à entraîner la broche (90) reçue par la structure de composants d'actionnement (40).

15. Système de réglage (A), doté d'un système d'entraînement (S) selon l'une quelconque des revendications 1 à 12 et doté d'un chariot, qui est accouplé avec la broche (90).

16. Dispositif de positionnement (501), comportant :
un carter d'entraînement (530), doté d'une paroi (533) de carter, sur lequel est réalisée au moins une section de surface d'actionnement (545c) s'étendant dans la direction radiale, qui est orientée dans une première direction circonférentielle de l'écrou de broche d'actionnement (541),
un écrou de broche d'actionnement (541), qui constitue un espace de broche (539) doté d'un axe de réception (539a) de broche et qui définit une direction radiale du dispositif d'entraînement (501), l'écrou de broche d'actionnement (541) comportant au moins une section de surface d'appui (555c, 555d, 556c, 556d) qui est orientée le long d'une deuxième direction circonférentielle de l'écrou de broche d'actionnement (541) qui est dirigée en sens opposé de la première direction circonférentielle, l'au moins une section de surface d'appui (555c) de l'écrou de broche d'actionnement (541) et l'une respective de l'au moins une section de surface d'appui (545c à 555c) de la paroi (533) de carter qui est orientée le long de la deuxième direction circonférentielle de l'écrou de broche d'actionnement (541) étant situées en regard l'une de l'autre,
**caractérisé en ce que** le dispositif d'entraînement (501) comporte au moins un dispositif actionneur (610), qui par une première extrémité (11) est en appui sur la section de surface d'appui (545c) de la paroi (533) de carter et par une deuxième extrémité (12), est en appui sur la section de surface d'appui (555c) de l'écrou de broche d'actionnement (541), la direction longitudinale de l'au moins un dispositif actionneur (610) s'écoulant de la première extrémité (11) vers la deuxième extrémité (12).

17. Dispositif d'entraînement (701) selon la revendication 16, **caractérisé**
**en ce que** la paroi (533) de carter comporte au moins deux sections de surfaces d'actionnement (545c, 546c) qui s'étendent dans la direction radiale, dont l'une est orientée le long d'une première direction circonférentielle de l'écrou de broche d'actionnement (541) et dont une autre est orientée le long d'une deuxième direction circonférentielle de l'écrou de broche d'actionnement (541), qui est orientée en sens opposé à la première direction circonférentielle de l'écrou de broche d'actionnement (541),
**en ce que** l'écrou de broche d'actionnement (541) comporte au moins deux sections de surfaces d'appui (555c, 556c), dont l'une est orientée le long de la deuxième direction circonférentielle de l'écrou de broche d'actionnement (541) et dont une autre est orientée le long de la première direction circonférentielle de l'écrou de broche d'actionnement (541), l'au moins une section de surface d'appui de l'écrou de broche d'actionnement (541) et l'une respective de l'au moins une section de surface d'appui (545c) de la paroi (533) de carter qui est orientée le long de la direction circonférentielle de l'écrou de broche d'actionnement (541) étant situées l'une en regard de l'autre,
le dispositif d'entraînement (501) comportant un premier et un deuxième dispositifs actionneurs (610, 620) qui sont en appui chacun par une première extrémité (11) sur l'une des sections de surfaces d'appui (545c, 546c) de la paroi (533) de carter et par une deuxième extrémité (12) sur une section de surface d'appui (555c, 556c) respective de l'écrou de broche d'actionnement (541), la section de surface d'appui (555c, 556c) respective de l'écrou de broche d'actionnement (541) et la section de surface d'appui (545c, 546c) respective de la paroi (533) de carter sur lesquelles un actionneur respectif est en appui se faisant face.

18. Dispositif d'entraînement (501) selon la revendication 17, **caractérisé**
**en ce qu'**au moins deux sections de surfaces d'actionnement (545c, 546c) de la paroi (533) de carter s'étendent dans la direction radiale et en rapport à chacune des directions circonférentielles, sont orientées à l'opposée l'une de l'autre,
**en ce que** l'écrou de broche d'actionnement (541) comporte deux dispositifs entraîneurs (550, 551, 552), qui comportent chacun une section de surface d'appui (555c, 556c) , qui s'étendent dans la direction radiale et en rapport à chacune des directions circonférentielles sont orientées l'une en face de l'autre, chaque fois une section de surface d'actionnement (545c, 546c) de la paroi (533) de carter et chaque fois une section de surface d'appui (555c, 556c) de l'écrou de broche d'actionnement (541) étant disposées l'une au regard de l'autre,
**en ce que**, considérés dans la direction de l'axe (539a) de réception de la broche, le premier et un deuxième dispositif actionneur (610) sont en appui sur respectivement une section de surface d'appui (555c, 556c) des dispositifs entraîneurs (550) et sur une respective des sections de surface d'appui (555c, 556c) de l'écrou de broche d'actionnement (541).

19. Dispositif d'entraînement (801) selon la revendication 17, **caractérisé,**
**en ce qu'**au moins deux sections de surface d'actionnement (545c, 546c) de la paroi (533) de carter s'étendent dans la direction radiale et sont disposées l'une en regard de l'autre,
**en ce que** l'écrou de broche d'actionnement (541) comporte un dispositif entraîneur (550), qui est situé au moins par sections entre les sections de surface d'actionnement (545c, 546c de la paroi (533) de carter et qui comporte les deux sections de surface d'appui (555c, 555d), qui sont orientées en sens opposé l'une de l'autre,
**en ce que**, considérés dans la direction de l'axe (539a) de réception de la broche, sur des côtés situés en sens opposé du dispositif entraîneur (550), le premier et un deuxième dispositif actionneur (610) sont en appui sur l'une respective des sections de surface d'appui (555c, 555d) de ceux-ci.

20. Dispositif d'entraînement (501) selon l'une quelconque des revendications 16 à 19, **caractérisé en ce que** le dispositif d'entraînement (501) comporte un dispositif de rappel (560) qui est placé de telle sorte qu'à partir d'une position neutre de l'écrou de broche d'actionnement (541) par rapport au carter d'entraînement (530), il provoque un déplacement en rotation dans chacune des directions circonférentielles situées en sens opposé l'une de l'autre, pour produire une force de rappel à la position neutre, dont la force dépend de la dimension de l'angle de rotation du déplacement en rotation respectif.
